# EUROPEAN PATENT APPLICATION

(11) **EP 4 342 559 A2**
(43) Date of publication of application: **27.03.2024**
(21) Application number: 23190302.2
(22) Date of filing: 12.05.2015
(51) Int. Cl.: B01D 29/66, B01D 29/01, B01D 36/02, B01D 29/58, B01D 35/16

(54) **LIQUID RECOVERY FILTER**

(30) Priority: 12.05.2014 US 201461992029 P; 22.10.2014 US 201414521437
(62) Divisional of application: 15792942.3
(71) Applicant: Saint-Gobain Performance Plastics Corporation, Solon, OH 44139 (US)
(72) Inventor: LlN, Zhenwu, Pasadena, 91105 (US); HERTRICK, Hannah C., Ashburn, 20148 (US); ANDREWS, Jacob, Washington, D.C., 20011 (US)
(74) Representative: Zimmermann & Partner Patentanwälte mbB

(57) **Abstract**

A liquid recovery filter assembly for recovering filtered liquid trapped within a core or downstream side of a filter element. Multiple embodiments each include a recovery port and a recovery filter in fluid communication with the core or downstream side of the filter element. The recovery port is opened following filtration operations to permit and to facilitate filtered liquid to flow from a downstream or outlet port, thus allowing recovery of liquid remaining in the filter core or downstream side following filtering operations. The recovery filter permits the introduction of pressurized gas to force the filtered liquids from the filter assembly without compromising the sterility and/or non-contaminant condition of the liquid. Additional aspects include exchangeable filter cartridges or filter elements in single and multi-round configurations, embodiments with aspiration tubes and dip tubes and still others with hydrophilic/hydrophobic recovery filters that function as filters and as valves for the recovery port.

## Description

### BACKGROUND OF THE DISCLOSURE

### CROSS-REFERENCE TO RELATED APPLICATIONS

This application is a continuation-in-part of U.S. Serial No. 13/460,583 filed April 30, 2012, and PCT Application Serial No. PCT/US13/37671 filed 23 April, 2013, the contents all of which are incorporated in their entirety herein by reference. A claim of priority is made to U.S. Serial No. 14/521,437 filed October 22, 2014, the contents of which are incorporated in their entirety herein by reference. This application also claims the benefit of U.S. Provisional Application Serial No. 61/992,029 filed May 12, 2014, the contents of which are incorporated in their entirety herein by reference.

### 1. FIELD OF THE DISCLOSURE

The present disclosure relates generally to filtration devices and systems, and particularly to liquid recovery filter assemblies having inlet and outlet ports and, in some embodiments, vent, drain and/or recovery ports for the drainage and recovery of filtered liquids from the filter housing and enclosed filter after filtering operations. More particularly, the disclosure relates to apparatus and methods to retrieve liquids retained in filtration apparatus after filtration processes.

### 2. DESCRIPTION OF THE RELATED ART

Innumerable filtration devices and systems have been developed for the cleaning and purification of a wide range of gases and liquids. One area that requires extremely high quality filtration is in the field of pharmaceutical manufacture, where a number of different liquids are involved in the manufacturing processes of a large number of drugs and medications. These various liquids are often quite costly to produce, and as a result, much effort and expense is expended to recover such liquids in a sterile manner during the manufacturing process, insofar as practicable.

During liquid filtration processes, liquid is passed through the filter assembly(s) and the filtered liquid is recovered from the downstream or outlet side of the enclosed filter element. In one type of filter element used, the filter element conventionally has a generally toroidal configuration wherein the unfiltered liquid passes through the filter element from outside the filter and through the filter material to a hollow inner core. Other filter element configurations may also be used in a similar manner or in a reverse manner flowing from the inner core to the outside of the element. One problem with such filter configurations is that when the filtration process is completed, there is a volume of purified, filtered liquid still resident in the filter element, as well as unfiltered liquid remaining within the filter housing and outside the filter element. These liquids are often quite valuable, as noted above. Discarding these liquids when the filtration process is completed or interrupted results in the loss of a considerable amount of valuable and usable liquid, particularly after numerous filtration processes.

One method used to remove the resident filtered liquids is to introduce pressurized gas into the system to force the liquids out of the filter assembly. This approach, although effective, is problematic due to the relatively high bubble points of the filter materials used for many specific applications, including many of the filtration processes common in the pharmaceutical industry. When the filtration material of the filter element is wetted (as is typically the case after use for liquid processing), bulk gas flow through the filter element is blocked by the wetted filter material at pressures below the bubble point pressure, as is commonly known in the art. Therefore, gas pressurized to pressures below the bubble point pressure cannot efficiently clear the downstream (filtered) liquid.

Filter materials with pore sizes about and below 0.2 microns have particularly high bubble point pressures that require relatively high gas pressures (typically greater than 40 psi for membrane-based absolute-rated filters wet with water or other liquid of similar surface tension) to evacuate the liquid in the wetted filter material. Even filter materials with pore sizes greater than 0.2 microns can have bubble points higher than the pressure limits of other components that commonly make up filter assemblies. The introduction of high pressure gas can compromise the physical and functional integrity of the filter element and/or filter assembly by, for example, causing the filter element to separate from its attachment points, or causing the filter element to physically break and potentially compromise the desired separation of unfiltered and filtered liquids, allowing them to mix downstream. Mixture of the filtered and unfiltered liquids would invariably compromise the intended purity or sterility of the filtered liquid. In addition, assemblies using, for example, barbed connectors for hoses can experience hose breakage or separation from the barbed connectors when gas at a relatively high pressure is introduced into the filtering apparatus. Moreover, pressure-sensitive components such as those incorporating thin films have pressure ratings and operational limits well below the bubble points of many filter materials.

What is needed is a filter recovery system that provides a means to remove valuable filtered liquids from a filter apparatus in a sterile or otherwise contamination-free manner. What is also needed is a filter recovery system that permits the use of a gas applied at a relatively low pressure to effectively remove resident filtered liquids while maintaining the sterility and/or any other required characteristics of the liquids in the downstream locations within, and external to (further downstream of), a filter assembly. These and other problems are solved by the disclosed liquid recovery filter apparatus as shown and described in the appended drawings, disclosure summary, and more particularly in the detailed description of the disclosure.

### SUMMARY OF THE DISCLOSURE

The liquid recovery filter assembly disclosed herein comprises a number of embodiments, wherein each of the embodiments includes a filter housing or shell containing a filter element secured therein. All of the embodiments have an inlet port that extends into the upstream or inlet side of the housing, and an outlet port extending from the downstream or outlet side of the housing. The terms "inlet side," "upstream," "upstream side," and similar terms all refer to the section or volume of the filter assembly located on the inlet portion of the apparatus, i.e., the portion of the filter assembly that may contain unfiltered liquid during operation. The terms "outlet side," "downstream," "downstream side," and similar terms all refer to the sections or volumes of the filter assembly located within the core of the filter element(s) for filter elements having a core and with an outside-in flow path, sections or volumes of the filter assembly located at a downstream end or on a side of the filter element that contains filtered liquid that has passed through the filter element during operation of the filter assembly, or in components, e.g., tubes and connectors, downstream of the filter core and the filter assembly.

For all embodiments, the demarcation or boundary between "upstream," i.e., "unfiltered" liquid and "downstream," i.e., "filtered" liquid is the filter element constructed from filtration material and any associated non-porous filter element features including, but not limited to, filter cartridge end caps, end cap adaptors, sealing mechanisms and the like used to define and connect the filter element to the filter assembly housing. More particularly, "upstream" is defined and demarcated by an upstream designated surface of the filtration material and any associated non-porous filter element feature. Likewise, "downstream" is defined and demarcated by a downstream designated surface of the filtration material and any associated non-porous filter element features. Any liquids resident in the filter apparatus upstream of the "upstream" surface of the filtration material shall be considered "unfiltered liquid" for the purposes of this disclosure. Any liquids resident in the filter apparatus downstream of the "downstream" surface of the filtration material shall be considered "filtered liquid" for purposes of this disclosure. Any liquids resident in the filter apparatus contained between the upstream surface and the downstream surface of the filtration material shall be considered "filtration material holdup" for purposes of this disclosure. As used herein, "filter material" and/or "filtration material" shall mean any filter membrane, filter media, or any other material or substance used to filter fluids including liquids and gases. The filter assemblies disclosed herein are constructed so that essentially all liquid introduced into any embodiment of the filter assemblies will pass through the filter element from the designated inlet port to the designated outlet port of the filter assembly.

The filter housing or shell may also have upstream or inlet side vents or passages, and/or upstream or inlet side drain ports or passages. These optional upstream ports or passages allow the upstream portion of the filter housing to be drained of unfiltered liquid, i.e., liquid that has not passed through the filter element from the upstream or inlet side to the downstream or outlet side of the filter element during a filtration operation. These ports are also used to remove gas trapped on the upstream side of the filter membrane, to monitor pressure, to perform integrity tests, and for other purposes as are commonly known in the art.

Each of the liquid recovery filter embodiments may further include downstream or outlet side ports or passages in addition to the primary outlet port that communicate liquidly with the downstream core, or downstream end/side of the filter element. These downstream or outlet ports are normally closed during filtering operations, but may be opened in some applications to remove air bubbles or when the filtration operation has been completed. The opening of these downstream ports allows air or other gas to flow into the core or downstream end/side of the filter element, thus "breaking the seal" or hydraulic lock commonly formed within the core, or downstream side, of the filter element. In some currently available filter assemblies, this allows the valuable filtered liquid contained within the core or downstream side of the filter element to flow from the filter assembly. Exposure to the environment external to the filter assembly, however, through opened downstream ports commonly present in related art filter assemblies, may bring unwanted contamination that if brought in contact with a batch of filtered product, could compromise the batch. The embodiments disclosed herein provide filter assembly constructions that permit recovery of filtered liquid from the downstream side *and prevent* the contamination of downstream filtered liquids.

Two basic configurations of the liquid recovery filter are disclosed herein (along with several additional embodiments of each), one having a downstream or outlet port disposed at the bottom of the filter assembly, and the other having a downstream or outlet port disposed at or near the top of the assembly. The second of these configurations includes a dip tube (extending internally from the outlet port) to allow liquid to flow from the bottom of the core, or bottom of the downstream side of the filter element and out of the outlet port for recovery. The first basic configuration, i.e., having the primary outlet port or passage disposed below the filter element, includes embodiments that differ due to the different locations or arrangements of the primary inlet and outlet ports or passages. The second basic configuration, i.e., having the primary outlet port or passage extending from the top or upper portion of the filter assembly, includes additional embodiments that also differ due to the different arrangements of the primary inlet and outlet ports or passages. All of the embodiments disclosed herein include means for recovering filtered liquid from the core or downstream side of the filter element aseptically and/or without contamination of the filtered liquid.

Also disclosed are port/valve configurations, settings and port assignments that permit liquid to be introduced into the filter assemblies in a reverse direction with the reassignment of inlet, outlet, vent, drain, and recovery ports to remove the resident filtered liquids in a sterile or contamination-free manner from the apparatus after a filtering event. In these configurations, what would be considered downstream elements are reassigned as upstream elements and what would be considered upstream elements are reassigned as downstream elements. It should be understood that a recovery filter should be secured to any port that will function as, and be assigned as, a downstream recovery port. As used herein, "recovery port" is defined as a port that allows sterile or otherwise contaminant-free gas to be introduced into the liquid recovery filter assembly from an external source into the downstream side of the filter assembly.

In a further aspect of the disclosure, an aspiration tube is incorporated into the downstream side of the filter assembly and extends out of the housing to form a recovery port. The tube can be formed to extend into a lower end of the assembly or filter element, or may extend through the filter element core to a point proximal to an upper end of the filter element and any length in between these two extremes. For filter assembly embodiments with multiple enclosed filter elements, each element has a dedicated aspiration tube. The tubes may be joined via a manifold to share a single recovery port and inline air filter, or may have dedicated recovery ports and inline air filters among some of the disclosed embodiments.

In a still further aspect of the disclosure, single and multi-round filter assemblies include replaceable filter cartridges. The filter assembly housings may include removable sections (such as a lid, end cap, removable bowl, access panel, etc.) to permit entry into the assemblies to remove and replace used filter cartridges. The filter housings include receiving walls or posts to secure the filter cartridges in the housings. These embodiments may also include aspiration tubes to assist the liquid recovery function to force filtered liquids from the filter assemblies.

In a yet further aspect of the disclosure, a hydrophobic or combination hydrophilic/hydrophobic filter is secured in an end cap or other location on a filter cartridge to permit aseptic or contamination-free removal of filtered liquids remaining in the filter assembly after a filtration operation with the use of gases introduced under pressure. The combination hydrophilic/hydrophobic filter provides a dual function to filter gases introduced into the filter assemblies and to act as a valve to eliminate the need for a recovery port and a mechanical valve. In some embodiments, however, the hydrophilic/hydrophobic filter could be attached to a recovery port with or without a mechanical valve.

These and other features of the present disclosure will become readily apparent upon further review of the following drawings and detailed disclosure.

### BRIEF DESCRIPTION OF THE DRAWIGS

Fig. 1 is a front elevation view of a first embodiment of a liquid recovery filter according to one aspect of the disclosure, illustrating its general external configuration.
Fig. 2 is an elevation view in section of a liquid recovery filter according to another aspect of the disclosure having a generally inline flow path, illustrating its internal configuration.
Fig. 3 is an elevation view in section of a liquid recovery filter according to a further aspect of the disclosure having a generally C-shaped flow path, illustrating its internal configuration.
Fig. 4 is an elevation view in section of a liquid recovery filter according to a still further aspect of the disclosure having a generally L-shaped flow path, illustrating its internal configuration.
Fig. 5 is an elevation view in section of a liquid recovery filter according to yet another aspect of the disclosure having a generally T - shaped flow path, illustrating its internal configuration.
Fig. 6 is an elevation view in section of a liquid recovery filter according to another aspect of the disclosure having a generally S-shaped flow path, illustrating its internal configuration.
FIG. 7 is a front top perspective view of a liquid recovery filter assembly according to the embodiment shown in FIG. 4.
FIG. 8 is a front top perspective view of a liquid recovery filter assembly according to the embodiment shown in FIG. 3
FIG. 9 is a front top perspective view of a liquid recovery filter assembly according to the embodiment shown in FIG. 5.
FIG. 10 is a front top perspective view of a liquid recovery filter assembly according to the embodiment shown in FIG. 2.
FIG. 11 is a side view in elevation of the liquid recovery filter assembly shown in FIGS. 4 and 7.
FIG. 12 is a side sectional view of the liquid recovery filter assembly shown in FIGS. 4, 7 and 11.
FIG. 13 is a front top perspective view of a liquid recovery filter assembly according to the embodiment shown in FIGS. 4, 7, 11 and 12.
FIG. 14 is a sectional view in elevation of a single-round liquid recovery filter assembly with an aspiration tube according to another aspect of the disclosure.
FIG. 15 is a sectional view in elevation of a multi-round liquid recovery filter assembly with aspiration tubes according to a further aspect of the disclosure.
FIG. 16 is a sectional view of a liquid recovery filter assembly with a filter cartridge shown in perspective with a hydrophobic/hydrophilic filter insert according to a still further aspect of the disclosure.
FIG. 17 is a sectional view in elevation of a single-round liquid recovery filter assembly with an aspiration tube according to yet another aspect of the disclosure.
FIG. 18 is a sectional view in elevation of a multi-round liquid recovery filter assembly with aspiration tubes according to a yet further aspect of the disclosure.
FIG. 19 is a sectional view in elevation of a multi-round liquid recovery filter assembly with aspiration tubes according to a still further aspect of the disclosure.
FIG. 20 is a sectional view in elevation of a multi-round liquid recovery filter assembly with aspiration tubes according to still another aspect of the disclosure.
FIG. 21 is a sectional view in elevation of a single-round liquid recovery filter assembly with a double open ended filter cartridge according to yet another aspect of the disclosure.
FIG. 22 is a sectional view in elevation of a multi-round liquid recovery filter assembly with double open ended filter cartridges according to still another aspect of the disclosure.
FIG. 23 is a sectional view in elevation of a liquid recovery assembly with a dip tube according to a still further embodiment of the disclosure.
FIG. 24 is a sectional view of a combination hydrophobic/hydrophilic pleated membrane according to another embodiment of the disclosure.
FIG. 25 is a bottom perspective view of a filter cartridge according to one embodiment of the disclosure.
FIG. 26 is a bottom perspective view of a filter cartridge according to a further embodiment of the disclosure.
FIG. 27 is a side perspective view of a dual layer hydrophobic/hydrophilic membrane according to another aspect of the disclosure.
FIG. 28 is a side perspective view of a hydrophilic/hydrophobic membrane embedded into a membrane according to a further aspect of the disclosure.
FIG. 29 is a sectional view in elevation of an "L" shaped liquid recovery assembly with a secondary valve positioned between the assembly housing and a recovery filter according to an aspect of the disclosure.
FIG. 30 is a sectional view in elevation of a "T" shaped liquid recovery assembly with a secondary valve positioned between the assembly housing and a recovery filter according to a different aspect of the disclosure.
FIG. 31 is a sectional view in elevation of an "L" shaped liquid recovery assembly with a secondary valve positioned between the assembly housing and a recovery filter with an upstream drain port and an upstream vent port according to yet another aspect of the disclosure.
FIG. 32 is a sectional view in elevation of a "T" shaped liquid recovery assembly with a secondary valve positioned between the assembly housing and a recovery filter with an upstream drain port and an upstream vent port according to yet another aspect of the disclosure.
FIG. 33 is a partial sectional view in elevation and in partial phantom of a liquid recovery assembly with a collapsible valve with a screw-type shutoff in an open position according to yet another aspect of the disclosure.
FIG. 34 is a partial sectional view in elevation and in partial phantom of a liquid recovery assembly with a collapsible valve with a screw-type shutoff in a closed position according to still another aspect of the disclosure.
FIG. 35 is a partial sectional view in elevation and in partial phantom of a liquid recovery assembly with a collapsible valve with a lever-type shutoff in an open position according to a further aspect of the disclosure.
FIG. 36 is a partial sectional view in elevation and in partial phantom of a liquid recovery assembly with a collapsible valve with a lever-type shutoff in a closed position according to a further aspect of the disclosure.
FIG. 37 is a partial sectional view in elevation and in partial phantom of a liquid recovery assembly with a collapsible one-way valve according to a yet further aspect of the disclosure.
FIG. 38 is a partial sectional view in elevation and in partial phantom of a liquid recovery assembly with a membrane one-way valve according to a still further aspect of the disclosure.
FIG. 39 is a partial sectional view in partial phantom of a membrane valve according to the embodiment of the disclosure shown in FIG. 38.
FIG. 40 is a side sectional view in elevation and in partial phantom of a liquid recovery assembly with a concentrically arranged outlet and recovery port according to yet another aspect of the disclosure.
FIG. 41 is a side sectional view of a liquid recovery assembly with a recovery filter secured inside the assembly housing according to still another aspect of the disclosure.
FIG. 42 is a side view in elevation of the liquid recovery assembly shown in FIG. 41.
FIG. 43 is a side sectional view in elevation and in partial phantom of a line clearing filter inlet/outlet assembly according to a further aspect of the disclosure.
FIG. 44 is a side sectional view in elevation and in partial phantom of a line clearing filter inlet/outlet assembly with a valve according to a yet further aspect of the disclosure.
FIG. 45 is a side sectional view in elevation and in partial phantom of a line clearing filter inlet/outlet assembly with an upstream recovery valve and a downstream recovery valve according to a still further aspect of the disclosure.
FIG. 46 is a side sectional view of the liquid recovery assembly shown in FIGS. 41 and 42.
FIG. 47 is a side sectional view of the vent port bleed valve of the liquid recovery assembly shown in FIGS. 41 and 42 in an open position.
FIG. 48 is a side sectional view of the vent port bleed valve shown in FIG. 47 in a closed position.
FIG. 49 is a side sectional view of a recovery filter subassembly according to the embodiment of the disclosure shown in FIGS. 41 and 42.
FIG. 50 is a side sectional view of a filter assembly with an enclosed recovery filter subassembly and a processing filter secured in the housing via O-ring attachment according to an embodiment of the disclosure.
FIG. 51 is a side sectional view of a filter assembly with an enclosed recovery filter subassembly and a processing filter permanently secured to the filter assembly housing according to another embodiment of the disclosure.
FIG. 52 is a side sectional view of a filter assembly with a processing filter secured in the housing with O-rings according to a further embodiment of the disclosure.
FIG. 53 is a side view of a vent port valve subassembly in an open position according to the embodiment of the disclosure shown in FIGS. 41 and 42.
FIG. 54 is a side view of the vent port valve subassembly shown in FIG. 53 with the valve in a closed position.
FIG. 55 is a side sectional view of a drain port valve subassembly in an open position according to the embodiment of the disclosure shown in FIGS. 41 and 42.
FIG. 56 is a side sectional view of the drain port valve subassembly shown in FIG. 55 with the valve in a closed position.
FIG. 57 is a top view of a cross-section of the bottom half of the filter assembly shown in FIG. 50.
FIG. 58 is a top view of a cross-section of a filter assembly according to another embodiment of the disclosure.
FIG. 59 is a side sectional view of the recovery port bleed valve of the liquid recovery assembly shown in FIGS. 41 and 42 in an open position.
FIG. 60 is a side sectional view of the recovery port bleed valve shown in FIG. 59 in a closed position.
FIG. 61 is a side view of a recovery port valve subassembly in an open position according to the embodiment of the disclosure shown in FIGS. 41 and 42.
FIG. 62 is a side view of the recovery port valve subassembly shown in FIG. 61 with the valve in a closed position.
FIG. 63 is a side sectional view of an internal recovery filter subassembly with an upper attachment post secured with an O-ring seal and a lower attachment post permanently secured to a filter element according to one embodiment of the disclosure.
FIG. 64 is a side sectional view of an internal recovery filter subassembly with an upper attachment post permanently secured to a filter housing upper end cap and a lower attachment post secured with an O-ring seal to a filter element according to another embodiment of the disclosure.
FIG. 65 is a side sectional view of an internal recovery filter subassembly with an upper attachment post and a lower attachment post both permanently secured to a housing assembly upper end cap and a filter element, respectively, according to a further embodiment of the disclosure.
FIG. 66 is an elevation view in section of a liquid recovery filter assembly according to another aspect of the disclosure with a generally inline flow path, illustrating its internal configuration with the filter element core assigned as the upstream side of the filter element.
FIG. 67 is an elevation view in section of a liquid recovery filter assembly according to a further aspect of the disclosure with an inline flow path, illustrating its internal configuration with a filter element core assigned as the upstream side of the filter element and an upstream vent port offset from a longitudinal axis of the filter assembly.
FIG. 68 is an elevation view in section of a liquid recovery filter assembly according to a yet further aspect of the disclosure with an inline flow path, illustrating its internal configuration with a filter element core assigned as the upstream side of the filter element, an upstream vent port offset from a longitudinal axis of the filter assembly and an upstream drain port offset from the filter assembly longitudinal axis.

It should be understood that similar reference characters denote corresponding features consistently throughout the attached drawings.

### DETAILED DESCRIPTION OF THE DISCLOSURE

The liquid recovery filter comprises several embodiments, each configured for the recovery of liquids within the filter capsule, filter housing, the filter element, and any attached downstream components, e.g., tubes and connectors, downstream of the filter core and the filter assembly after the completion of filtration operations, e.g., when a batch has been filtered and/or the filter element is to be changed, etc. It should be understood that the filter capsule or housing embodiments may be constructed as permanently sealed structures (with the exception of their various ports or passages), or constructed as reusable units with removable end caps and/or multi-piece housings, permitting access to the filter element therein for replacement or cleaning and reuse, or may be configured as replaceable modular units having pre-installed filter elements.

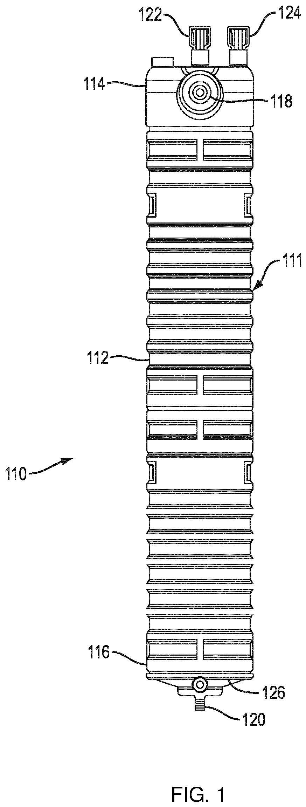

Referring to FIG. 1, a liquid recovery filter assembly is shown designated generally as **110.** Filter assembly **110** includes a filter housing or shell designated generally as **111** having a shell wall **112** with an upper end **114** and an opposite lower end **116,** both secured to, or integral with, shell wall **112** that may be substantially cylindrical in one embodiment. As used herein, relative terms "upper" and "lower" are used as component designations to define the spatial orientation of components based on the influence of gravity on the direction of liquid flow in the filter assemblies with gravitationally influenced flow defined as going from an upper end to a lower end. It should be understood that any of the filter assembly embodiments disclosed herein may be oriented in multiple spatial orientations, e.g., upside down and sideways relative to the orientation shown in any figure, wherein the different orientations may reverse or alter the functional meaning of the "upper" and "lower" designations without altering the relative orientation and cooperation of the various filer assembly components. Filter assembly **110** may be oriented as shown in FIG. 1, with inlet end **114** disposed above outlet end **116.** It should be understood the orientation can vary and be reversed as needed for a particular application.

Filter assembly **110** includes an upstream or inlet port **118,** and a generally opposite downstream or outlet port **120** for the flow of liquid to and from the device. A recovery port **122,** apart from its function in this disclosure to maximize recovery of filtered liquids from the filter assembly, may function as a vent to the outlet or downstream side of a filter element secured in the filter assembly (as disclosed below). An upstream vent port **124** extends from upper end **114** and is in fluid communication with an upstream internal volume of the filter assembly defined as being between housing **111** and an upstream designated surface of the filter element therein. An upstream drain port **126** extends from lower end **116** and can be used to drain liquids from the upstream side of the enclosed filter element, i.e., the upstream internal volume defined above.

All of the liquid recovery filter assembly embodiments disclosed herein include combinations or sub-combinations of these various vents, ports, and passages. However, the relationship and orientation of the various vents, ports, and passages are arranged differently in different embodiments. Some embodiments relative to others include one or more additional ports or passages to accommodate specific arrangements, orientations and functions of the other ports and passages. It should be understand that all ports may be configured with adaptors to allow connection to a tube, pipe, subassembly, equipment, etc. These adaptors can be of any type including, but not limited to, barbed, threaded, gasket and clamp, quick connect, compression-type, as well as any other adaptor disclosed herein and/or known in the art. Moreover, the operational states and settings of the ports and associated valves (disclosed further herein) may be varied and ports reassigned function to permit the reverse flow of liquid through the assembly embodiments.

Any ports disclosed herein with respect to any aspects or embodiments of the disclosure may be constructed from polymeric materials, elastomeric materials, metallic materials, thermoplastic elastomers, hard tubing, soft tubing, or any other materials or combinations of materials known in the art of filter capsule construction. The ports may be molded as part of the shell, or other capsule feature, such as an end cap, during an initial molding process, or may be connected to the shell, end cap, etc., during an additional filter assembly production step by way of thermal welding, fitting connection (barb, threading, etc.), or by any other method known in the art. Any port size, dimension or shape, e.g., regular or irregular geometric shape in cross-section or length, that performs the intended functions disclosed herein are within the scope and spirit of the disclosure.

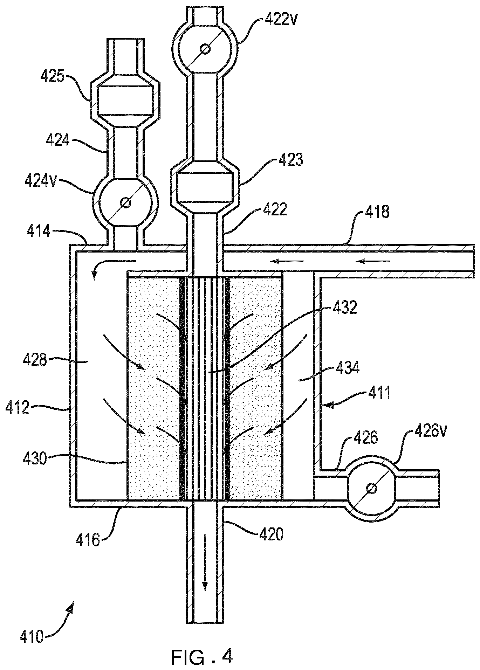

The locations and orientations of the various ports **118** through **126** most closely resemble the configuration of the liquid recovery filter embodiment shown in FIG. 4, disclosed in detail below. Moreover, while filter assembly **110** is shown having a relatively tall and narrow configuration, it should be understood that other dimensional and geometrically shaped configurations may be constructed, depending upon the shape and configuration of the filter element contained therein, the placement of the various inlet and outlet ports or passages, the spatial limitations of the apparatus to which the filter assembly is attached, and other factors. The various fittings and connectors, illustratively barbed connectors and quick connects (shown in other figures), for the various ports and passages of filter assembly **110** are conventional in the industry and are disclosed as a matter of illustration and not limitation.

The shells, ports and related structures of the various filter assembly embodiments disclosed herein may be injection molded from any thermoplastic materials, including, but not limited to, Polypropylene (PP), Polyethylene (PE), Nylon, Polysulfone (PSU), Perfluoroalkoxy (PFA) polymer resin, Polycarbonate (PC), Polyethersulfone (PES), Ethylene-clorotrifluoroethylene copolymer (ECTFE) and mixtures thereof that are generally compatible with the fluids and/or gasses intended to be introduced into the filter assembly as is known in the art. The components may also be constructed from aluminum, stainless steel, metallic alloys, or other metal-based materials. It should be understood other materials and manufacturing methods well known in the art may be used to construct these components.

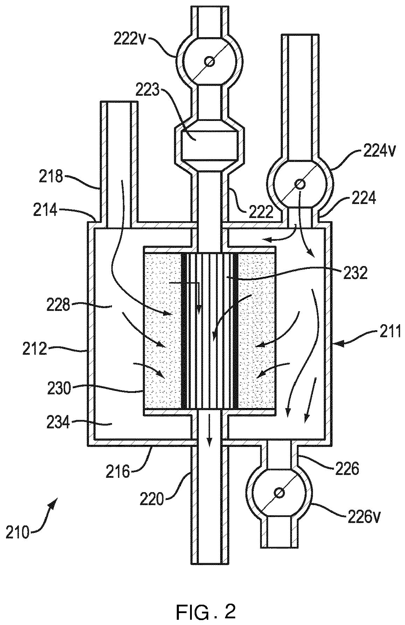

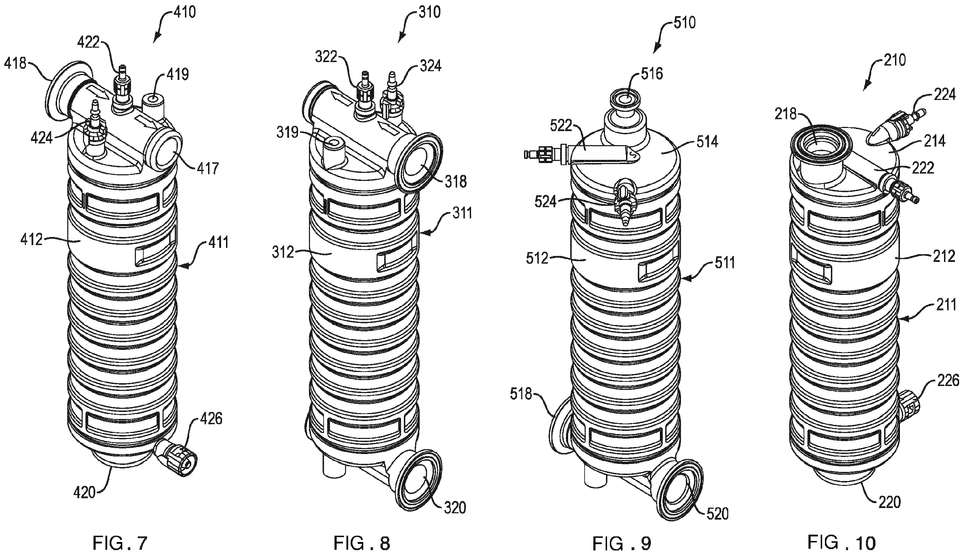

Referring now to FIGS. 2 and 10, in another aspect of the disclosure, a liquid recovery filter is shown designated generally as filter assembly **210.** It should be understood that the length and width of any of the filter embodiments shown in the drawings are by way of illustration and not limitation, and will depend upon the configuration of the filter element installed therein according to the intended use and operating environment.

Filter assembly **210** includes a housing or shell designated generally as **211** having a shell wall **212** with an inlet end **214** and an opposite outlet end **216,** each secured to, or integral with, shell wall **212.** The combination of shell wall **212,** and ends **214** and **216** define an internal volume **228.** An inlet port **218** extends from inlet end **214** substantially axially parallel to a longitudinal axis of the enclosed filter, as defined by its inlet and outlet ends. It should be understood that the parallel orientation of inlet port **218** relative to the longitudinal axis of the enclosed filter may be altered (angled away from a parallel orientation including an orthogonal orientation), to accommodate particular spatial needs. Inlet port **218** is in fluid communication with an upstream internal volume **234** defined by the combination of shell **211** and an upstream designated surface of a filter element **230** (more particularly an upstream designated surface of the filter element and filtration material as defined above) secured in the filter assembly.

An outlet port **220** extends coaxially (with the filter) from outlet end **216** and is in fluid communication with a core **232,** or downstream side of filter element **230.** As shown in FIG. 2, outlet port **220** has a longitudinal axis aligned with the longitudinal axis of the enclosed filter element. It should be understood this orientation can be altered (offset), in similar fashion to inlet port **218** to accommodate specific spatial needs.

A recovery port **222** extends from upper inlet end **214** of filter housing **211.** Recovery port **222** communicates with the outlet portion or core **232** of the filter element disposed within housing **211,** as described in more detail below. Recovery port **222** is shown as being oriented coaxially with the enclosed filter element in FIG. 2 and radially in FIG. 10. It should be understood that although the lumen of recovery port **222** must be in physical communication with core **232,** i.e., an extension of the core space, a recovery filter **223** (disclosed in more detail below) may block the flow of liquids from the core into port **222** (but not gas flow from the port into the core), the coaxial or radial orientation can be altered to accommodate spatial needs. Recovery filter **223** is shown connected in-line (outside of, or within housing **211** as disclosed hereinbelow) to recovery port **222** such that any air, gas, or other fluid introduced into recovery port **222** must first pass through recovery filter **223** prior to contacting the downstream filtered liquid.

Recovery port **222** may be constructed from the same materials used to construct housing or shell **211,** or may be constructed from tubing made of silicone, thermoplastic elastomer, or other elastomeric or polymeric materials or any other materials commonly used to form tubing, as is well known in the art. In this embodiment, the tubing may be connected to upper end **214** and core **232** via thermal welding, fitting connection (barb, threading, etc.), or by any other means known in the art. Any valves incorporated into any variation of filter assembly **210** including valve **222v** as well as recovery filter **223** may be attached to port **222,** or other ports, by way of thermal welding, fitting connection (barb, threading, etc.), or by any other means known in the art. The valves can be configured in accordance with any of the constructions disclosed herein, or may be constructed in accordance with any other construction known in the art. It should be understood that the valves may be structured as pinch valves or clamps attached externally to the tubing as known in the art. Such pinch valves or clamps perform the intended function to compress the tubing such that flow is partially or completely restricted.

Recovery filter **223**--as well as all recovery filters throughout this disclosure--is chosen to have the appropriate properties, e.g., porosity, pore size, material compatibility with gas or liquids exposed to the filter, and efficiency rating to ensure that fluids entering the filter assembly through recovery port **222** are of an appropriate purity for contact with the downstream filtered liquid. In the case of sterile filtration in the pharmaceutical industry, a sterile filter could be selected as the recovery filter. However, recovery filters with other efficiency ratings (more or less efficient than a sterile filter) and with specific purification properties (such as adsorptive capacities through the use of activated carbon, desiccants, soda-lime, etc. or other depending on the purity requirements of the downstream filtered liquid) could be selected.

As a further alternative, filter materials with hydrophobic property functions may be used to prevent or reduce the likelihood of the recovery filter being wet by the processing liquid. Of course, it should be understood that there could be applications when a filter material with hydrophilic properties and/or combined hydrophilic/hydrophobic properties may be used as the recovery filter and should be considered within the scope of the disclosure. Preventing the recovery filter from being wetted is beneficial, as it allows the recovery filter to more easily pass air or gas introduced through recovery port **222.** In some cases, the use of oleophobic or super-hydrophobic recovery filters or recovery filters with other surface properties is beneficial to further reduce the likelihood of wetting by the processing fluid. Recovery filter **223** may be of any type (e.g. disc, pleated cartridge, etc.) as is known in the art for filters and can be removable and/or replaceable, or permanently attached to recovery port **222** in a permanent, reusable or replaceable housing using any method known for attaching filters as is known in the art.

An upstream vent port **224** also extends from inlet end **214** to vent upstream internal volume **234.** Lastly, an upstream drain port **226** extends from outlet end **216** for draining liquids from upstream internal volume **234.**

As previously disclosed, filter shell or housing **211** defines internal volume **228** having a filter element **230** disposed therein. The filter element may have a generally toroidal configuration and a hollow downstream core **232.** It should be understood that filter element **230** as well as all filter elements or cartridges disclosed herein (functioning as a processing filter that performs the primary filtering function of the filter assembly) may conform to any regular or irregular geometric shape and configuration, e.g., pleated, hollow fiber, tubular, stacked disc, and may be formed from a variety of materials, e.g., polymeric, ceramic, or metallic membranes, hydrophobic membrane, hydrophilic membrane, nonwoven media and combinations thereof, with varying pore sizes, porosities, surface areas, and the like and still be within the scope and spirit of the disclosed and claimed filter assembly embodiments. It further should be understood for filter elements made from, for example, hollow fiber and tubular materials, there is no "core", but one or more lumen that collectively function as a core in similar fashion to the core disclosed herein. It should be also further understood that filter **230** may be secured in any of the disclosed filter housings via thermal or sonic bonding, adhesive, O-ring seals and any combination of these methods as well any other method such as mated threading used to secure filters in housings as are well known in the art.

As previously disclosed, recovery filter **223** provides a barrier to contamination entering the downstream portion of filter assembly **210.** Recovery filter **223** may be secured in any of the disclosed embodiments via permanent methods including thermal or sonic bonding, adhesive, and any combination of these methods as well any other method to secure filters as is well known in the art or via removable non-permanent or semi-permanent methods such as mated threading, O-ring seals, sanitary fittings and any combination of these methods as well as any other non-permanent or semi-permanent method used to secure filters as is well known in the art.

As previously disclosed, the combination of shell or housing **211** and an upstream designated surface of filter element **230** define an upstream volume **234.** For filter elements not having a generally toroidal configuration with a downstream core, upstream volume portion **234** is defined similarly by housing **211** and an upstream designated surface of the filter element.

To control the flow of liquids through filter assembly **210,** each of the various ports **218** through **226** may include a dedicated valve therein. Although each port may be configured with a valve, different embodiments may be configured with valves for only some and even none of the passages and/or ports. Multiple combinations of passages and ports with or without valves are within the contemplation and scope of the disclosure. As used herein, numeric reference characters designating valves will include a "v" at the end of the numerical designation. Dedicated valves for selective ports of filter assembly **210** are designated as valves **222v** through **226v.** Valves **222v, 224v** and **226v** are shown schematically in FIG. 2. All optional dedicated valves may be any suitable type of valve, e.g., needle valves, known and used in the art.

In the embodiment shown in FIGS. 2 and 10, during normal filtering operations, valves **222v, 224v,** and **226v** often remain closed. With this port and associated valve setting configuration, liquid enters via inlet port **218** and passes into upstream volume **234,** through permeable filter element **230,** into hollow core **232** where the liquid is now filtered liquid and exits filter assembly **210** through the downstream or outlet port **220.** In the case of filtration processes common in the biopharmaceutical industry, the filtered liquid is sterile.

The above-described operation should not present any problems with liquid recovery, as long as the filter element is in good working order, the various passages are clear and the operation is essentially continuous. However, when the filtration process is completed, or the filter must be disconnected from the downstream process for some reason, e.g., because the filter has become plugged, to clean the liquid delivery lines or passages, to replace the filter or filter element, etc., some quantity of both unfiltered and filtered liquid is typically trapped within the filter assembly **210.** As this liquid is often quite valuable, particularly in the pharmaceutical industry, it represents a fairly substantial financial cost, or loss, if it is discarded when filter assembly **210** is removed or replaced. Furthermore, efforts to capture the liquid from commercially available filter assemblies or products risk breach of asepsis on the downstream/sterile side of the filter assembly in pharmaceutical applications, or general contamination in non-sterile applications. Moreover, there may be additional costs associated with disposing of a filter containing such a liquid, particularly if the liquid is considered to be a biohazard or requires special handling to contain and/or discard.

The various aspects and embodiments of the liquid recovery filter assemblies disclosed herein are configured to address this problem by providing structural and procedural means to evacuate the filter housing or shell wall, core, and downstream lines of resident liquid in a sterile or otherwise contamination-free manner through the designated filter outlet port when the filtering operation is terminated. This permits the recovery of the valuable liquid within the filter for use, storage, packaging, or further downstream processing.

With respect to filter assembly **210,** liquid, filtered and unfiltered, resident in the assembly (and/or lines downstream of the assembly) after the desired liquid filtration process has been accomplished, may be removed from the assembly via a two-step process. At this point in the process, valves **222v, 224v** and **226v** remain in a closed condition, the same condition in which these valves are commonly maintained during the primary filtering operation. One or more of these valves may be opened during start-up of the primary filtering operation to facilitate initial liquid flow through the filter assembly, but are otherwise commonly closed during the primary filtering operation. In some applications, some or all of these valves remain opened or partially opened to continually remove gas as it builds up in the upstream or downstream portions, or to monitor pressure in the filter assembly, or for other purposes as are well known in the art.

Filtration of the unfiltered liquid remaining within the upstream or inlet side volume portion **234** is accomplished by forcing it through the filter element **230** as processed or filtered liquid from the filter outlet passage **220.** Positive gas pressure can be used to achieve this goal by attaching a compressed air/gas line to the upstream tubing, the filter inlet port **218,** the filter upstream vent port **224,** or the filter upstream drain port **226** to drive air/gas into the filter assembly. If the compressed gas is attached to an upstream port other than the inlet, the valve(s) on the port to which the compressed air/gas is attached must be opened to allow the compressed air to enter into the upstream volume portion **234.** In this case, the inlet would need to be closed by way of a valve, tubing clamp, welded tubing, or other means well known in the art to prevent the compressed air/gas from escaping and to allow pressure to build at the upstream or inlet side of the filter element.

The upstream port may be constructed with a filter of similar design and function to a recovery filter to preclude further contamination of the liquid prior to being forced through the filter element by the air or gas introduced through the upstream passage. However, since the liquid will be filtered by the process filter element **230** prior to reaching the downstream (clean) side, this is generally unnecessary. If positive gas pressure, a peristaltic pump or other positive displacement pump, or any means capable of driving gas into the filter housing is used to bring liquid to the filter, the same means can be used to drive air or gas into the filter assembly after the liquid source is exhausted. The upstream ports not used to introduce air or gas into the filter assembly, e.g., valves **222v, 224v** and **226v** when bringing air or gas into the system via inlet port **218,** will be closed to allow the pressure on upstream volume portion **234** to build up in the filter assembly from about 5 to about 10 psi, but higher pressures can be used, if required to achieve flow due to a plugged filter element, or a high viscosity liquid so long as maximum pressure limits are not exceeded.

Once the pressure buildup has reached this pressure range and the unfiltered liquid remaining within the upstream side has passed to the downstream side, the clamp or valve upstream of the port used to introduce air or gas into the filter assembly, e.g., inlet **218** when bringing air or gas into the system via the inlet port **218,** is engaged to stop all flow into filter assembly **210.** It should be understood that in order to maintain pressure within the desired range, the flow of gas may be periodically stopped to give liquid time to flow to the downstream side and then restarted to make-up pressure lost as a result of liquid (as well as low levels of gas) flowing to the downstream side. Alternatively, if positive gas pressure is used, a regulator can be used to maintain pressure within the desired range. At this point in the process, the downstream side of filter element **230** should be at or about ambient pressure.

To initiate the second step, valve **222v** is opened. This permits any liquid remaining in outlet core **232** to flow into outlet port **220** and out of filter assembly **210** via gravity or compressed air/gas assist. The gas may be, illustratively, air, nitrogen, carbon dioxide, etc., as application appropriate. If compressed air is to be used for this purpose, a compressor or like device is attached, if needed, to recovery port **222** and regulated to the appropriate pressure. Any air introduced into recovery port **222** must first pass through recovery filter **223** to ensure the filtered liquids forced out of outlet core **232** remain sterile and/or free from contamination. The compressed air/gas should be introduced into the assembly from about 1 to about 2 psi, or at some pressure lower than the upstream pressure to prevent flow from the downstream side to the upstream side of filter element **230.** The pressure is also chosen to provide the desired liquid recovery rate as well as to maintain a pressure below the maximum pressure rating or maximum recommended operating pressure for all components in the system that may become pressurized.

During this second step of the liquid recovery process, it should be noted that valves **224v** and **226v** remain closed if pressurizing on the upstream side via inlet port **218.** Once this second step is completed, i.e., all, or substantially all, of the liquid resident in outlet core **232** has been evacuated, the compressed air/gas source can be turned off, and/or the pressure can be otherwise relieved.

A brief discussion of the characteristics of a conventional filter element, similar to element **230** is warranted. Filter elements used in many areas of the pharmaceutical industry, and likewise for other industries and operations, often utilize extremely fine filtration membranes having pore size ratings on the order of fractional micron sizes. One characteristic of microporous membranes and filters constructed of these membranes is known as the "bubble point" of the membrane or filter, i.e., the differential pressure required to force air (or other gas) through the wetted membrane or filter element. As is well known in the art, the smaller the filter pore size, the greater the bubble point. The bubble point of many filters used in the pharmaceutical industry may be 40 psi, or even higher, so the pressure required to force a gas through the wetted filter membrane can exceed the maximum pressure rating of componentry often used to produce single-use systems common in the pharmaceutical industry.

With this explanation in mind, to maximize filtered liquid recovery with respect to currently available filter assemblies (as well as for any of the filter assembly embodiments disclosed herein), air (or other gas) applied to the open upstream vent port **224** or inlet port **218** at sufficient pressure to force the residual unfiltered liquid through the filter element **230** and out of the upstream volume **234** can efficiently remove much of the unfiltered liquid within upstream volume **234.** However, in order to recover the liquid as filtered and processed liquid, the liquid must further travel through core **232** and outlet passage **220** as well as any lines downstream of the filter assembly. Due to the properties of a conventional filter element, the gas applied to the upstream side of filter element **230** cannot travel through the membrane to evacuate core **232** and outlet passage **220** as well as any lines downstream of the filter assembly unless the bubble point pressure is exceeded. This presents a problem, as described previously, due to the common use of relatively high bubble point filter elements coupled with the pressure limitations commonly found in systems and filter assemblies themselves.

Although not part of the filtered liquid recovery process for which this disclosure is directed, should any unfiltered liquids remain in upstream internal volume **234** after pressure is applied to force unfiltered liquids through the filter membrane, drain valve **226v** may be opened to permit the unfiltered liquids to drain via gravity (often once the upstream volume **234** has been depressurized for safety purposes) through upstream drain port **226.** Valve **224v** may also be opened to overcome any vacuum effect to facilitate liquid flow out of drain port **226.**

The filtered liquid remaining in core **232** and outlet passage **220** as well as any lines downstream of the filter assembly cannot easily be recovered using currently available filter assemblies without risk to asepsis or contamination of the filtered liquid. Due to the use of recovery port **222** and recovery filter **223,** the pressure of gas needed to evacuate the resident liquid within the downstream portion of the filter assembly will be lower than what would be needed if recovery port **222** was not incorporated into the disclosed filter assemblies and contamination of the filtered liquid being removed from filter core **232** by the air or gas introduced through recovery port **222** will be prevented.

The configuration of filter assembly **210** may also perform the intended liquid filter and recovery functions when the liquid flow is reversed through the assembly. It should be understood that to operate filter assembly **210** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **220,** reassigned as an inlet port, is located at the gravitational top or high position. Upstream drain port **226** (and an optional drain port valve **226v,** if present) is reassigned as a downstream recovery port (and a reassigned optional downstream recovery port valve) and will incorporate an inline recovery filter similar to, or the same as, recovery filter **223.** Recovery port **222** (and an optional recovery port valve **222v,** if present) is reassigned as an upstream drain port (and a reassigned optional upstream drain port valve) and often maintained in a closed condition during the main filtering operation.

The use of a recovery filter **223** on port **222** is optional in this functional configuration and may require removal in applications where the recovery filter's properties (such as its hydrophobicity) would prevent port **222** from performing its designated draining function, if such a function is desired. When used in this manner, liquid introduced into port **220** (with valve **220v** open, if present), flows into core **232** (or the lumen of the filter element if constructed from, for example, hollow fiber or tubular material), and radially outwardly through filter element **230** into internal volume **234** (now a downstream volume) and out of the filter assembly through port **218** as processed liquid. In this functional configuration, the remaining port(s), e.g., port **224** in the embodiment shown in FIG. 2, is/are maintained in a closed condition by, for example, closing inlet valve **224v** in the embodiment shown in FIG . 2, or could be eliminated from the embodiment, as use of these ports risk contamination of the downstream filtered liquid when not coupled with a recovery filter.

To remove the resident unfiltered liquid (resident in core **232)** after the primary filtration process, pressurized gas is introduced into the filter assembly via recovery port **222** (reassigned as an upstream drain port), or through port **220** in a similar fashion by using the reassigned ports as disclosed previously for the functional configuration that flows from volume **234** to core **232.** Alternatively, a reassigned upstream vent port at the reassigned gravitational top **216** (not pictured in FIG. 2) could be used to introduce the pressurized gas.

Reassigned recovery port **222** may include an inline recovery filter reassigned as an upstream filter **223** to preclude further contamination of the liquid prior to being forced through the filter element **230** by the air or gas introduced through the reassigned upstream vent passage **222.** However, as previously described, since the liquid will be filtered by the process filter element **230** prior to reaching the reassigned downstream volume **234** (clean) side, this is generally unnecessary. Also, as previously described, the inclusion of a recovery filter reassigned as an upstream filter **223** may limit the reassigned function of port **222** as an upstream drain port, if the recovery filter's properties (such as its hydrophobicity) would prevent liquid from flowing through port **222.** Once the resident unfiltered liquid is forced through filter element **230,** filtered liquid remaining in internal volume **234** may be removed by introducing pressurized gas into the filter assembly via port **226,** to force the remaining liquid through port **218,** in a similar fashion (by using the reassigned ports) as disclosed previously for the functional configuration which flows from volume **234** to core **232.**

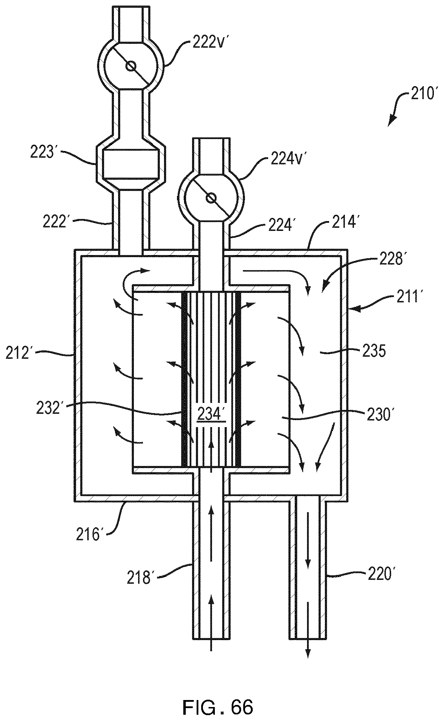

Referring now to FIG. 66, in a modified embodiment of filter assembly **210,** a filter assembly designated generally as **210'** is shown configured for reverse flow function, i.e., wherein the filter element core is assigned as the upstream side of the filter element. As used herein, any feature designated by a primed reference character corresponds, structurally or functionally, to a feature of a different filter assembly embodiment designated by the same reference character, unprimed or differently primed.

In the embodiment shown in FIG. 66, the ports of filter assembly **210** are repositioned on the filter assembly and/or reassigned functionality. Filter assembly **210'** includes many of the same features as filter assembly **210,** and includes a housing or shell designated generally as **211'** having a shell wall **212'** with an upper end or end cap **214'** and an opposite lower end or end cap **216',** each secured to, or integral with, shell wall **212'.** The combination of shell wall **212'** and ends, **214'** and **216',** define an internal volume designated generally as **228'.**

An inlet port **218'** (reassigned outlet port **220** in filter assembly **210),** extends from lower end 216' substantially aligned coaxially with the core of the enclosed filter. It should be understood that the aligned orientation of inlet port **218'** relative to the longitudinal axis of the enclosed filter may be altered (angled away from a coaxially aligned orientation including an orthogonal orientation), to accommodate particular spatial needs. Inlet port **218'** is in fluid communication with an upstream internal volume **234'** defined by a core **232'** of a filter element **230'** (more particularly an upstream designated surface of filter element **230'** as defined above), secured in the filter assembly (or defined by lumen of the filter element if constructed from, for example, hollow fiber or tubular material).

An outlet port **220'** extends from lower end **216'** and is in fluid communication with a downstream side of filter element **230'.** A downstream internal volume **235** is defined by the combination of shell **211'** and filter element 230' (more particularly by an inner surface of the shell and a downstream designated surface of the filter element as defined above), secured in the filter assembly. For filter elements made from hollow fiber or tubular material, the outer surfaces of the fibers or tubes will define downstream internal volume **235** with the shell. As shown in FIG. 66, outlet port **220'** has a longitudinal axis aligned substantially parallel with the longitudinal axis of the enclosed filter element. It should be understood this orientation of outlet port **220'** can be altered (offset), in similar fashion to inlet port **218'** to accommodate specific spatial needs.

A recovery port **222'** extends from upper end **214'** of filter housing **211'** (reassigned inlet **218** of filter assembly **210** modified with a recovery filter). Recovery port **222'** (functionally a combination downstream vent/purge port), communicates with downstream internal volume **235.** Recovery port **222'** is shown as being oriented substantially parallel to the longitudinal axis of filter element **230'.** The substantially parallel orientation may be modified with recovery port **222'** offset in similar fashion to inlet port **218'** to accommodate specific spatial needs. It should be understood that although the lumen of recovery port **222'** must be in fluid communication with downstream internal volume **235,** a recovery filter **223'** secured to recovery port **222'** (disclosed in more detail below), may block the outflow of liquids from internal volume **235** into port **222'** (but not gas flow from the port into the internal volume).

Recovery filter **223'** is shown connected in-line (exterior to, or within housing **211'** as disclosed herein) to recovery port **222'** such that any air, gas, or other fluid introduced into recovery port **222'** must first pass through recovery filter **223'** prior to contacting the downstream filtered liquid.

Recovery filter **223'**--as well as all recovery filters throughout this disclosure--is chosen to have the appropriate properties, e.g., porosity, pore size, material compatibility with gas or liquids exposed to the filter, and efficiency rating to ensure that fluids entering the filter assembly through recovery port **222'** are of an appropriate purity for contact with the downstream filtered liquid. In the case of sterile filtration in the pharmaceutical industry, a sterile filter could be selected as the recovery filter. However, recovery filters with other efficiency ratings (more or less efficient than a sterile filter) and with specific purification properties (such as adsorptive capacities through the use of activated carbon, desiccants, soda-lime, etc., or other purification properties, depending on the purity requirements of the downstream filtered liquid) could be selected.

As a further alternative, filter materials with hydrophobic property functions may be used to prevent or reduce the likelihood of the recovery filter being wet by the processing liquid. Of course, it should be understood that there could be applications for filter assembly **210'** when a filter material with hydrophilic properties and/or combined hydrophilic/hydrophobic properties may be used as the recovery filter and should be considered within the scope of the disclosure. Preventing the recovery filter from being wetted is beneficial, as it allows the recovery filter to more easily pass air or gas introduced through recovery port **222'.** In some cases, the use of oleophobic or super-hydrophobic recovery filters or recovery filters with other surface properties is beneficial to further reduce the likelihood of wetting by the processing fluid. Recovery filter **223'** may be of any type (e.g. disc, pleated cartridge, etc.) as is known in the art for filters and can be removable and/or replaceable, or permanently attached to recovery port **222'** in a permanent, reusable or replaceable housing using any method known in the art for attaching filters.

An optional upstream vent port **224'** may be included. Vent port **224'** (reassigned downstream vent port **222** of filter assembly **210),** also extends from upper end **214'** to vent upstream internal volume **234'.**

As previously disclosed, filter shell or housing **211'** defines internal volume **228'** having a filter element **230'** disposed therein. The filter element may have a generally toroidal configuration and a hollow core **232'.** It should be understood that filter element **230'** as well as all filter elements or cartridges disclosed herein (functioning as a processing filter that performs the primary filtering function of the filter assembly) may conform to any regular or irregular geometric shape and configuration, e.g., pleated, hollow fiber, tubular, stacked disc, and may be formed from a variety of materials, e.g., polymeric, ceramic, or metallic membranes, hydrophobic membrane, hydrophilic membrane, nonwoven media and combinations thereof, with varying pore sizes, porosities, surface areas, and the like and still be within the scope and spirit of the disclosed and claimed filter assembly embodiments. It further should be understood for filter elements made from, for example, hollow fiber and tubular materials, there is no "core", but one or more lumen that collectively function as a core in similar fashion to the core disclosed herein. It should be also further understood that filter **230'** may be secured in any of the disclosed filter housings via thermal or sonic bonding, adhesive, O-ring seals and any combination of these methods as well any other method such as mated threading used to secure filters in housings as are well known in the art.

As previously disclosed, recovery filter **223'** provides a barrier to contamination entering the downstream portion of filter assembly **210'.** Recovery filter **223'** may be secured in any of the disclosed embodiments via permanent methods including thermal or sonic bonding, adhesive, and any combination of these methods as well any other method to secure filters as is well known in the art or via removable non-permanent or semi-permanent methods such as mated threading, O-ring seals, sanitary fittings and any combination of these methods as well as any other non-permanent or semi-permanent method used to secure filters as is well known in the art.

As previously disclosed, a core **232'** of filter element **230'** defines upstream volume **234'.** For filter elements not having a generally toroidal configuration with a core, upstream internal volume **234'** is defined by housing **211'** and an upstream designated surface of the filter element.

To control the flow of liquids through filter assembly **210',** each of the various ports **218'** through **224'** may include a dedicated valve therein. Although each port may be configured with a valve, different embodiments of filter assembly **210'** may be configured with valves for only some and even none of the ports. Multiple combinations of passages and ports with or without valves are within the contemplation and scope of the disclosure. Dedicated valves for selective ports of filter assembly **210'** are designated as valves **222v'** (reassigned upstream vent valve **224v** of filter assembly **210)** and **224v'** (reassigned downstream vent valve **222v** of filter assembly **210).** All optional dedicated valves may be any suitable type of valve, e.g., ball valves, needle valves, known and used in the art.

To operate filter assembly **210',** process fluid is introduced into the assembly via inlet port **218'.** The fluid enters upstream internal volume **234',** migrates through filter element **230'** and enters downstream internal volume **235** as processed fluid. The processed fluid exits assembly **210'** via outlet port **220'.** During the main fluid processing function, valve **224v'** is opened and valve **222v'** is closed.

Once the main fluid processing function is completed, assembly **210'** is prepared for the liquid recovery function. Upstream vent port valve **224v'** is closed. Downstream vent valve **222v'** is opened. It should be noted that the movement of the valves can be manual or automated within the scope and contemplation of the disclosure. A selected gas, e.g., air, oxygen, nitrogen, or some other gas selected not to react with the processed fluid, is pumped, or allowed to flow (via gravity), into downstream vent port **222'.** Recovery filter **223'** permits the gas to pass through the filter and into downstream internal volume **235** in a sterile manner. Ideally, the gas is flowed into the assembly under pressure to urge any remaining process fluid resident in downstream internal volume **235** to flow out outlet **220'.** This process is continued until no further processed fluid exits outlet **220',** or the flow is substantially diminished.

It should be understood with respect to the function of any of the filter embodiments disclosed herein that differential pressure from one side of the enclosed filter element to the other side must be established to effectuate flow through the filter assembly. The direction of fluid flow will follow the pressure gradient. The pressure gradient changes from a high relative pressure to a low relative pressure along the fluid flow path. The pressure gradient may be created from any number of sources including, by way of illustration and not limitation, gravitational force (placing the upstream/inlet side at a gravitationally oriented higher point than the downstream/outlet side), pump pressure, such as pressure derived from a peristaltic pump originating on the upstream/inlet side of the filter element, vacuum pressure originating on the downstream/outlet side of the filter element and any combination of the sources of pressure. The pressure gradient(s) established to perform the main fluid processing and liquid recovery/purge functions are set in a specific direction based on the construction of the filter assembly. For applications that require the same filter assembly to be operated in a reverse flow direction, the pressure gradient is reversed.

To improve the recovery of processed fluids, as an optional preliminary step to the downstream liquid recovery process, an upstream purge process may be implemented to urge upstream holdup volume of unprocessed fluids into and through the filer element. To this end, pressure can be introduced into assembly **210'** via inlet **218'** to create a pressure gradient between the upstream and downstream sides of filter element **230'** (higher pressure on the upstream side). This forces process fluid resident in filter element **230'** (filter holdup volume), into downstream internal volume **235.** Depending upon the application for which the assembly is used, the introduced pressure can range illustratively from about 0.5 to about 40 psi. The pressure is applied for a desired length of time that will vary from application to application to ensure maximal process fluid release from filter element **230'.** Once this optional preliminary step is complete, the upstream pressure is maintained on the filter assembly and the liquid recovery process is commenced as disclosed above and as disclosed for filter assembly **210.**

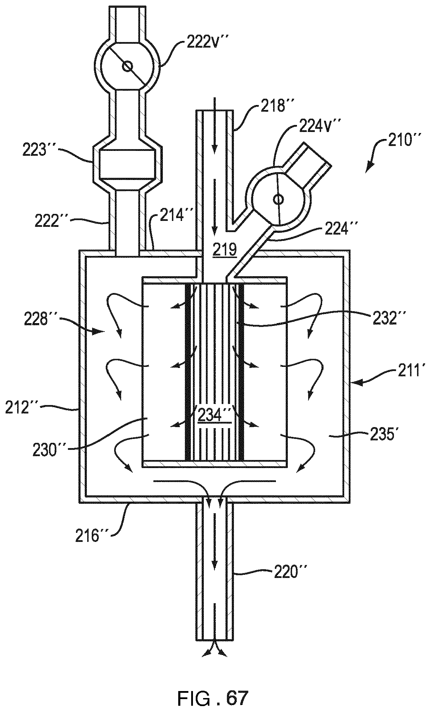

Referring now to FIG. 67, in another aspect of the disclosure, a filter assembly shown designated generally as **210"** includes an inlet port and an upstream vent port that share a common port connected to an upstream side of an enclosed process filter element. More particularly, filter assembly **210"** has many of the same features as filter assembly **210,** and includes a housing or shell designated generally as **211"** having a shell wall **212"** with an upper end or end cap **214"** and an opposite lower end or end cap **216",** each secured to, or integral with, shell wall **212".** The combination of shell wall **212"** and ends, **214"** and **216",** define an internal volume designated generally as **228".**

An inlet port **218"** (reassigned downstream vent port **222** of filter element **210)** extends from upper end **214"** and is in fluid communication with an upstream side internal volume **234"** defined by a core **232"** of an enclosed filter element **230".** More particularly, volume **234"** is defined by an upstream designated surface of filter element **230",** or by lumen if the filter element is constructed from hollow fiber or tubular material. An outlet port **220"** extends from lower end **216"** and is in fluid communication with a downstream internal volume **235'** defined by shell **211"** and filter element **230"** (and more particularly defined by an inner surface of shell **211"** and a downstream designated surface of filter element **230").**

An upstream vent port **224"** connects to, and is in fluid communication with, inlet port **218"** to form a common upstream port **219.** Common port **219** connects directly to, and is in fluid communication with, upstream internal volume **234".** Vent port **224"** has an axis offset from the longitudinal axis of inlet port **218"** that is aligned substantially coaxially with the longitudinal axis of filter element **230".** The offset contributes to the formation common port **219** as shown. As disclosed for the other embodiments, an optional upstream vent valve **224v"** is secured to vent port **224"** in the same manner disclosed for vent valve **224v** herein.

A downstream vent/purge port **222"** extends from upper end **212"** and is in fluid communication with downstream internal volume **235'.** Vent/purge port **222"** has a longitudinal axis aligned substantially parallel to the longitudinal axis of filter element **230".** As disclosed with respect to other filter assembly embodiments, the axis of port **222"** can be offset to accommodate specific spatial needs. An optional downstream vent valve **222v"** is secured to vent port **222"** in the same manner disclosed herein for the attachment of vent valve **222v** to vent port **222.** All optional dedicated valves for filter element **210"** may be any suitable type of valve, e.g., ball valves and needle valves, known and used in the art.

The components of filter assembly **210"** are constructed from the same materials disclosed for filter assembly **210.** The methods used to construct filter assembly **210"** are the same as those disclosed for filter assembly **210.**

To operate filter assembly **210",** process fluid is introduced into the assembly via inlet port **218".** The fluid enters upstream internal volume **234",** migrates through filter element **230"** and enters downstream internal volume **235'** as processed fluid. The processed fluid exits assembly **210"** via outlet port **220".** During the main fluid processing function, valve **224v"** is opened and valve **222v"** is closed.

Once the main fluid processing function is completed, assembly **210"** is prepared for the liquid recovery function. Upstream vent port valve 224v" is closed. Downstream vent valve **222v"** is opened. It should be noted again that the movement of the valves can be manual or automated within the scope and contemplation of the disclosure. A selected gas, e.g., air, oxygen, nitrogen, or some other gas selected not to react with the processed fluid, is pumped, or allowed to flow, into downstream vent port **222".** Recovery filter **223"** permits the gas to pass through the filter and into downstream internal volume **235'** in a sterile manner. Ideally, the gas is flowed into the assembly under pressure to urge any remaining process fluid resident in downstream internal volume **235'** to flow out outlet **220".** This process is continued until no further processed fluid exits outlet **220",** or the flow is substantially diminished.

To improve recovery of processed fluids, an optional preliminary step of the liquid recovery process like the one disclosed for filter assembly **210'** can be implemented. Pressure can be introduced into assembly **210"** via inlet **218"** to create a pressure gradient between the upstream and downstream sides of filter element **230"** (higher pressure on the upstream side), to force process fluid resident in filter element **230"** (filter holdup volume), into downstream internal volume **235'.** Depending upon the application for which the assembly is used, the introduced pressure can range illustratively from about 0.5 psi to about 40 psi. It should be understood with respect to this filter assembly embodiment, **210",** and any of the other disclosed filter assembly embodiments that pressures outside this range may also be used depending upon the construction of the filter assembly and the particular application. The pressure is applied for a desired length of time that will vary from application to application to ensure maximal process fluid release from filter element **230".** Once this optional preliminary step is complete, the upstream pressure is maintained in the filter assembly and the downstream liquid recovery process is commenced as disclosed above.

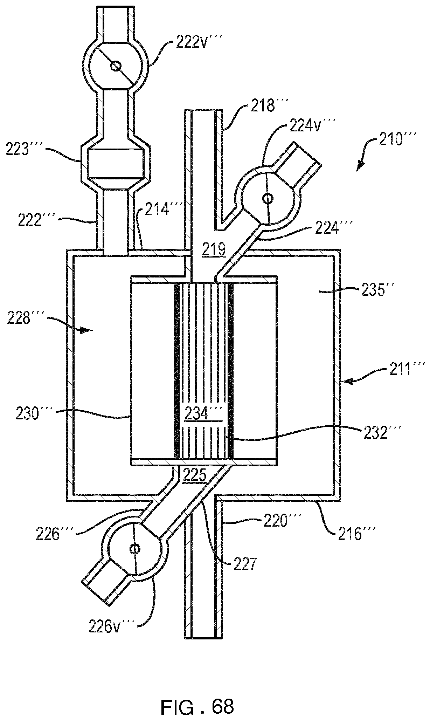

Referring now to FIG. 68, in a further aspect of the disclosure, a filter assembly shown designated generally as **210‴** includes an inlet port and an upstream vent port that share a common port, and an upstream drain port offset to accommodate the outlet port. More particularly, filter assembly **210‴** has many of the same features as filter assemblies **210** and **210",** and includes a housing or shell designated generally as **211‴** having a shell wall **212‴** with an upper end or end cap **214‴** and an opposite lower end or end cap **216‴,** each secured to, or integral with, shell wall **212‴.** The combination of shell wall **212‴** and ends, **214‴** and **216‴,** define an internal volume designated generally as **228‴.**

An inlet port **218‴** (reassigned downstream vent port **222** of filter element **210)** extends from upper end **214‴** and is in fluid communication with an upstream side internal volume **234‴** defined by a core **232‴** of an enclosed filter element **230‴** (more particularly the upstream designated surface of the filter element, or lumen, as disclosed in more detail herein for the other embodiments). An outlet port **220‴** extends from lower end **216‴** and is in fluid communication with a downstream internal volume **235"** defined by shell **211‴** and filter element **230‴** (and more particularly defined by an inner surface of shell **211‴** and a downstream designated surface of filter element **230‴).**

An upstream vent port **224‴** connects to, and is in fluid communication with, inlet port **218‴** to form a common upstream port **219'.** Common port **219'** connects directly to, and is in fluid communication with, upstream internal volume **234‴.** Vent port **224‴** has an axis offset from the longitudinal axis of inlet port **218‴** that is aligned substantially coaxially with the longitudinal axis of filter element **230‴.** The offset contributes to the formation of common port **219'** as shown. As disclosed for the other embodiments, an optional upstream vent valve **224v‴** is secured to vent port **224‴** in the same manner disclosed for vent valve **224v** herein.

An optional upstream drain port **226‴** extends from lower end **216‴** with a longitudinal axis offset from the longitudinal axis of filter element **230‴.** The axes are oriented to intersect. An end of the port, proximal to filter element **230‴,** connects directly to the filter element bypassing downstream internal volume **235".** The port is connected to filter element **230‴** using any of the methods disclosed herein, thermal and/or sonic welding, adhesive, etc., so as to form a fluid-tight seal to prevent fluid communication between upstream internal volume **234‴** and downstream internal volume **235".** Drain port **226‴** shares a common wall **227** with outlet port **220",** but is functionally isolated from communication with the outlet port. An upstream drain port valve **226v‴** is secured to port **226‴** in the same manner and using the same methods described to secure upstream drain port **226v** to drain port **226** in filter assembly **210.** Drain port **226‴** permits the removal of any unprocessed fluids from upstream internal volume **234‴** that remain after the main fluid processing function.

A downstream vent/purge port **222‴** extends from upper end **212‴** and is in fluid communication with downstream internal volume **235".** Vent/purge port **222‴** has a longitudinal axis aligned substantially parallel to the longitudinal axis of filter element **230‴.** As disclosed with respect to other filter assembly embodiments, the axis of port **222‴** can be offset to accommodate specific spatial needs. An optional downstream vent valve **222v‴** is secured to vent port **222‴** in the same manner disclosed for vent valve **222v** herein. All optional dedicated valves for filter element **210‴** may be any suitable type of valve, e.g., ball valves and needle valves, known and used in the art.

The components of filter assembly **210‴** are constructed from the same materials disclosed for filter assembly **210.** The methods used to construct filter assembly **210‴** are the same as those disclosed for filter assembly **210.**

To operate filter assembly **210‴,** process fluid is introduced into the assembly via inlet port **218‴.** The fluid enters upstream internal volume **234‴,** migrates through filter element **230‴** and enters downstream internal volume **235"** as processed fluid. The processed fluid exits assembly **210‴** via outlet port **220‴.** During the main fluid processing function, valve **224v‴** is opened and valves **222v‴** and **226v‴** are closed.

Once the main fluid processing function is completed, assembly **210‴** is prepared for the liquid recovery function. Upstream vent port valve **224v‴** is closed. Upstream drain port valve **226v‴** is maintained in a closed position. Downstream vent valve **222v"** is opened. It should be noted again that the movement of the valves can be manual or automated within the scope and contemplation of the disclosure. A selected gas, e.g., air, oxygen, nitrogen, or some other gas selected not to react with the processed fluid, is pumped, or allowed to flow (via gravity), into downstream vent port **222‴.** Recovery filter **223‴** permits the gas to pass through the filter and into downstream internal volume **235"** in a sterile manner. Ideally, the gas is flowed into the assembly under pressure to urge any remaining process fluid resident in downstream internal volume **235"** to flow out outlet **220‴.** This process is continued until no further processed fluid exits outlet **220‴,** or the flow is substantially diminished.

To improve recovery of processed fluids, an optional preliminary step of the liquid recovery process like the one disclosed for filter assembly **210'** can be implemented. Pressure can be introduced into assembly **210‴** via inlet **218‴** to create a pressure gradient between the upstream and downstream sides of filter element **230‴** (higher pressure on the upstream side), to force process fluid resident in filter element **230‴** (filter holdup volume), into downstream internal volume **235".** Depending upon the application for which the assembly is used, the introduced pressure can range from about 0.5 psi to about 40 psi. The pressure is applied for a desired length of time that will vary from application to application to ensure maximal process fluid release from filter element **230‴.** Once this optional preliminary step is complete, the upstream pressure is maintained in the filter assembly and the downstream liquid recovery process is commenced as disclosed above.

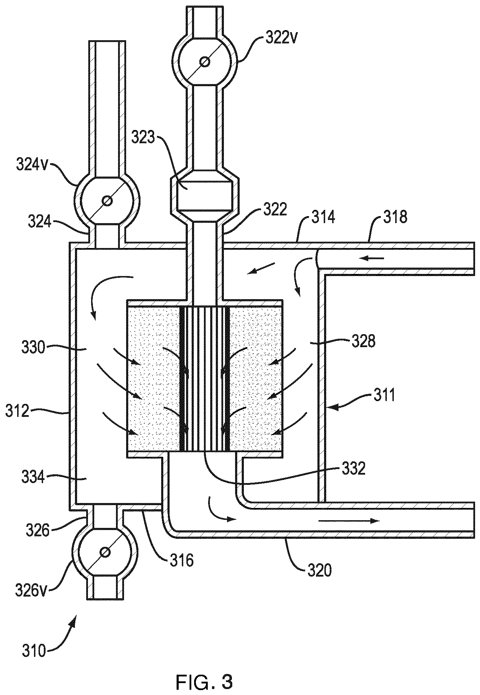

Referring now to FIGS. 3 and 8, in another aspect of the disclosure, an alternative embodiment of the liquid recovery filter assembly is shown designated generally as **310.** Filter assembly **310** includes all of the components and elements disclosed above for filter assembly **210,** i.e., a filter housing or shell **311** having a shell wall **312** with mutually opposed first or upper and second or lower ends designated **314** and **316,** respectively, (the combination of which define an internal volume **328),** and a toroidal filter element **330** secured therein. An upstream surface (or designated upstream surface) of filter element **330** and surrounding housing **311** define an upstream or inlet volume **334** therebetween. In the embodiment shown, filter element **330** has a hollow core **332,** but may also be one of the other filter constructions disclosed herein.

An upstream vent port **324** and its optional associated valve **324v** extend from upper end **314.** An opposite upstream drain port **326** and its optional associated valve **326v** extend from lower end **316** as shown schematically in FIG. 3, but not in FIG. 8. A downstream recovery port **322** extends from upper end **314** and has an optional recovery port valve **322v** secured inline therein. A recovery filter **323** is secured in line with port **322** between upper end **314** and valve **322v,** or may be enclosed in filter housing **311** and in fluid communication with port **322** as disclosed in detail hereinbelow. Recovery filter **323** should be selected from among the same construction material options and the same property/characteristic options disclosed for recovery filter **223.**

The difference between filter assembly **210** and filter assembly **310** lies in the orientation of their respective inlet and outlet ports or passages. It will be seen in FIG. 3 that an upstream or inlet port **318** and its optional associated valve **318v** extend radially from upper end **314.** It should be understood this port (and optional associated valve) may extend also from any point on shell wall **312** upstream of filter element **330. [0161]** A downstream or outlet port **320** and its associated valve **320v** extend from filter core **332** radially from lower end **316.** It should be understood this port (and optional associated valve) may extend also from any point on shell wall **312** downstream of filter element **330.** This configuration may be more readily installed in certain processing systems than the inline configuration of filter assembly **210.** The liquid flow paths through filter assembly **310** during normal filtering operations and during the draining or recovery of liquids from filter assembly **310** are essentially the same as those disclosed above for filter assembly **210.**

During normal filtering and recovery operations, filter assembly **310** is operated in the same manner as disclosed for filter assembly **210.** The positions of the valves present on filter assembly **310** (open, closed, partially open) during normal filtering and recovery operations are identical to the corresponding valve positions of the corresponding valves of filter assembly **210** during normal filtering and recovery operations, e.g., upstream vent port valve **324v,** and upstream drain port valve **326v** (corresponding to upstream vent port valve **224v** and upstream drain port valve **226v)** are commonly closed during the primary filtration function. As such, the disclosure regarding the operation of filter assembly **210** for normal (primary) filtering and recovery operations is incorporated here by reference.

The configuration of filter assembly **310** may also perform the intended liquid filter and recovery functions when the liquid flow is reversed through the assembly. It should be understood that to operate filter assembly **310** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **320,** reassigned as an inlet port, is located at the gravitational top or high position. Upstream drain port **326** is reassigned as a downstream recovery port and will incorporate an inline recovery filter similar to, or the same as, recovery filter **323.** Recovery port **322** is reassigned as an upstream drain port and often maintained in a closed condition during the main filtering operation. The use of a recovery filter **323** on port **322** is optional in this functional configuration and would need to be removed in certain cases, as disclosed above. When used in this manner, liquid introduced into port **320** (with valve **320v** open, if present), flows into core **332** (or the lumen of the filter element if constructed from, for example, hollow fiber or tubular material), and radially outwardly through filter element **330** into internal volume **334** (now a downstream volume) and out of the filter assembly through port **318** as processed liquid. In this functional configuration, the remaining port(s) (port **324** in the embodiment shown in FIG. 3) is/are maintained in a closed condition (by, for example, closing valve **324v** in the embodiment shown in FIG. 3) or could be eliminated from the embodiment as use of these ports risk contamination of the downstream filtered liquid when not coupled with a recovery filter. Once the intended volume of liquid is filtered through assembly **310,** valve **320v** is closed to cease flow.

The procedure to remove the resident unfiltered and filtered liquid within assembly **310** when operated in the reverse direction is the same as that disclosed for filter assembly **210** when operated in the reverse direction. Accordingly, the procedure disclosed for removing filtered and unfiltered liquid from filter assembly **210** when operated in a reverse direction is incorporated here by reference with respect to filter assembly **310.**

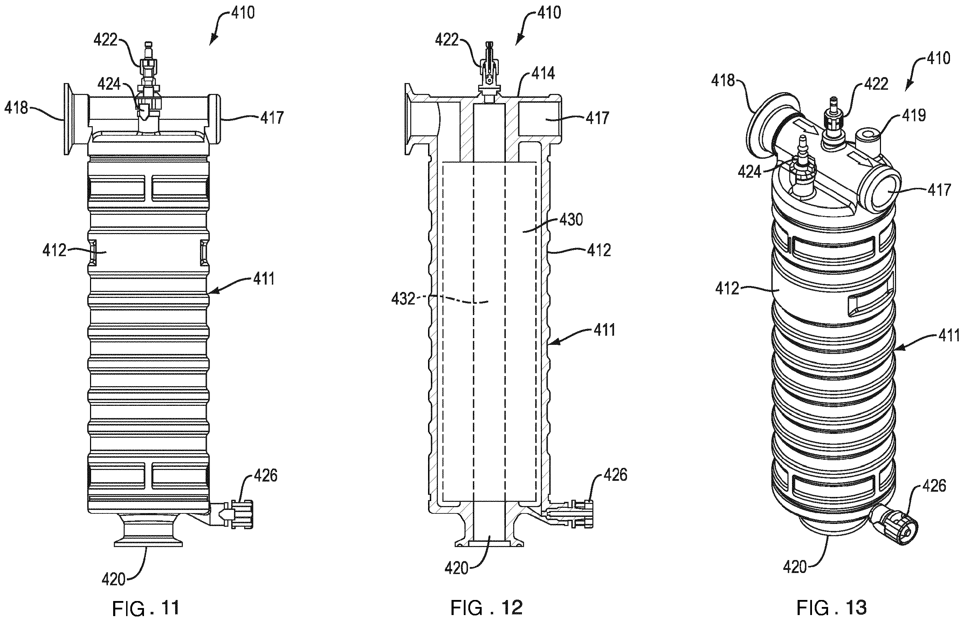

Referring now to FIGS. 4, 7, 11, 12 and 13, another alternative embodiment of the liquid recovery filter assembly is shown designated generally as **410.** Filter assembly **410** includes all of the components and elements disclosed above for filter assemblies **210** and **310,** i.e., a filter housing or shell **411** having a shell wall **412** with mutually opposed first or upper and second or lower ends designated **414** and **416,** respectively, the combination of which define an internal volume **428.** A toroidal filter element **430** is secured therein. An upstream surface (or designated upstream surface) of filter element **430** and surrounding housing **411** define an upstream volume **434** therebetween. In the embodiment shown, filter element **430** has a hollow core **432,** but may also be one of the other filter constructions disclosed herein.

An upstream vent port **424** and its optional associated valve **424v** extend from upper end **414.** An opposite upstream drain port **426** and its optional associated valve **426v** extend from lower end **416.** A downstream recovery port **422** extends from upper end **414** and has an optional recovery port valve **422v** secured inline therein. A recovery filter **423** is secured in line with port **422** between upper end **414** and valve **422v,** or may be enclosed in filter housing **411** and in fluid communication with port **422** as disclosed in detail hereinbelow. Recovery filter **423** should be selected from among the same construction material options and the same property/characteristic options disclosed for recovery filter **223.**

Filter assembly **410** may be considered a hybrid of filter assemblies **210** and **310.** An upstream or inlet port **418** and its optional associated valve **418v** extend radially from upper end **414** in essentially the same orientation as the corresponding component **318** of filter assembly **310.** It should be understood this port (and optional associated valve) may extend also from any point on shell wall **412** upstream of filter element **430.** A downstream or outlet port **420** and its optional associated valve **420v** extend coaxially from filter shell wall **412** in the manner of outlet port **220** of filter housing **210.** It should be understood this port orientation can be altered (offset), in similar fashion as described for inlet port **218** to accommodate specific spatial needs.

During normal filtering and recovery operations, filter assembly **410** is operated in the same manner as disclosed for filter assemblies **210** and **310.** The positions of the valves present on filter assembly **410** (open, closed, partially open) during normal filtering and recovery operations are identical to the corresponding valve positions of the corresponding valves of filter assembly **210** during normal filtering and recovery operations, e.g., upstream vent port valve **424v,** and upstream drain port valve **426v** (corresponding to upstream vent port valve **224v** and upstream drain port valve **226v)** are commonly closed during the primary filtration function. As such, the disclosure regarding the operation of filter assembly **210** for normal (primary) filtering and recovery operations is incorporated here by reference.

The configuration of filter assembly **410** may also perform the intended liquid filter and recovery functions when the liquid flow is reversed through the assembly. It should be understood that to operate filter assembly **410** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **420,** reassigned as an inlet port, is located at the gravitational top or high position. Upstream drain port **426** (and if present, optional drain port valve **426v)** is reassigned as a downstream recovery port (and optional downstream recovery port valve) and will incorporate an inline recovery filter similar to, or the same as, recovery filter **423.** Recovery port **422** (and if present, optional recovery port valve **426v)** is reassigned as an upstream drain port (and optional reassigned upstream drain port valve) and often maintained in a closed condition during the main filtering operation. The use of a recovery filter **423** on port **422** is optional in this functional configuration and may need to be removed in certain cases, as disclosed above. When used in this manner, liquid introduced into port **420** (with valve **420v** open, if present), flows into core **432** (or the lumen of the filter element if constructed from, for example, hollow fiber or tubular material), and radially outwardly through filter element **430** into internal volume **434** (now a downstream volume) and out of the filter assembly through port **418** as processed liquid. In this functional configuration, the remaining port(s) (port **424** in the embodiment shown in FIG. 4) is/are maintained in a closed condition (by, for example, closing valve **424v** in the embodiment shown in FIG. 4), or could be eliminated from the embodiment, as use of these ports risk contamination of the downstream filtered liquid when not coupled with a recovery filter.

The procedure to remove the resident unfiltered and filtered liquid within assembly **410** when operated in the reverse direction is the same as that disclosed for filter assembly **210** when operated in the reverse direction. Accordingly, the procedure disclosed for removing filtered and unfiltered liquid from filter assembly **210** when operated in a reverse direction is incorporated here by reference with respect to filter assembly **410.**

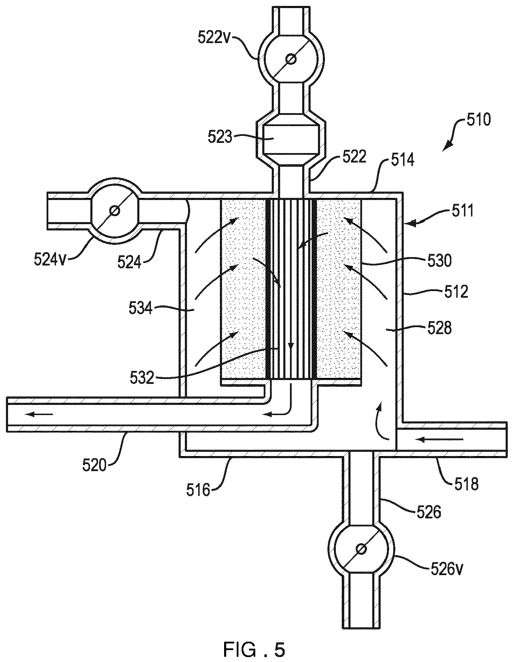

Referring now to FIGS. 5 and 9, a liquid recovery filter assembly **510** is shown that includes corresponding components to those disclosed above for filter assemblies **210** through **410,** i.e., a filter housing or shell **511** having a shell wall **512** with mutually opposed first or upper and second or lower ends designated **514** and **516,** respectively, collectively defining an internal volume **528.** A toroidal filter element **530** is secured therein. An upstream surface (or upstream designated surface) of filter element **530** and surrounding housing **511** define an upstream or inlet volume **534** therebetween. Filter element **530** has a hollow core **532,** but may also be one of the other filter constructions disclosed herein.

An upstream vent port **524** and its optional associated valve **524v** extend from upper end **514.** An opposite upstream or inlet side drain port **526** and its optional associated valve **526v** extend from lower end **516** as shown schematically in FIG. 5, but not in FIG. 9. A downstream recovery port **522** extends from upper end **514** and has an optional recovery port valve **522v** secured inline therein. A recovery filter **523** is secured in-line with port **522** between upper end **514** and valve **522v,** or may be enclosed in filter housing **511** and in fluid communication with port **522** and filter core **532** as disclosed in detail hereinbelow. Recovery filter **523** should be selected from among the same construction material options and the same property/characteristic options disclosed for recovery filter **223.**

The placement of an upstream or inlet port **518** (and an optional inlet port valve **518v** secured in-line with the port) extending substantially radially from lower end **516** and a downstream or outlet port **520** ( and an optional outlet port valve **520v** secured in-line with the port) also extending substantially radially from lower end **516** (albeit from an opposite or different radial direction relative to a filter assembly longitudinal axis) requires liquid passing through filter assembly **510** to flow initially upward into upstream volume **534** through filter element **530** then downwardly through core **532** and into outlet port **518** from which the filtered liquid exits the filter assembly. This flow path should not present any problems with flow, particularly with pressurized filtering systems. Apart from this flow path distinction, liquid flow through filter assembly **510** is substantially as disclosed above for the other filter assembly embodiments.

During normal filtering and recovery operations, filter assembly **510** is operated in the same manner as disclosed for filter assembly **210.** The positions of the valves present on filter assembly **510** (open, closed, partially open) during normal filtering and recovery operations are identical to the corresponding valve positions of the corresponding valves of filter assembly **210** during normal filtering and recovery operations, e.g., upstream vent port valve **524v,** and upstream drain port valve **526v** (corresponding to upstream vent port valve **224v** and upstream drain port valve **226v)** are commonly closed during the primary filtration function. As such, the disclosure regarding the operation of filter assembly **210** for normal (primary) filtering and recovery operations is incorporated here by reference.

The configuration of filter assembly **510** may also perform the intended liquid filter and recovery functions when the liquid flow is reversed through the assembly. It should be understood that to operate filter assembly **510** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration that differs from the reverse functional configurations of filter assembly embodiments **210, 310, 410** and **610,** the assembly may be maintained in the orientation shown schematically in FIGS. 5 and 9, such that outlet port **520,** reassigned as an inlet port, remains located at the gravitational bottom or low position. It should be noted that reorientation is not necessary for this functional configuration compared to the orientation shown as the reassigned outlet port is located at the gravitational bottom or low position in the orientation shown schematically in FIGS. 5 and 9. Upstream vent port **524** is reassigned as a downstream recovery port and will incorporate an inline recovery filter similar to, or the same as, recovery filter **523.** Recovery port **522** is reassigned as an upstream vent port and often maintained in a closed condition during the main filtering operation.

The use of a recovery filter **523** on port **522** is optional in this functional configuration. When used in this manner, liquid introduced into port **520** (with valve **520v** open, if present), flows into core **532** (or the lumen of the filter element if constructed from, for example, hollow fiber or tubular material), and radially outwardly through filter element **530** into internal volume **534** (now a downstream volume) and out of the filter assembly through port **518** as processed liquid. In this functional configuration, the remaining port(s) (port **526** in the embodiment shown in FIG. 5) is/are maintained in a closed condition (by, for example, closing valve **526v** in the embodiment shown in FIG. 5) or could be eliminated from the embodiment, as use of these ports risk contamination of the downstream filtered liquid when not coupled with a recovery filter. Once the intended volume of liquid is filtered through assembly **510,** valve **520v** may be closed to cease flow.

The procedure to remove the resident unfiltered and filtered
liquid within assembly **510** when operated in the reverse direction is the same as that disclosed for filter assembly **210** when operated in the reverse direction, with the noted exception that in filter assembly **510,** port **524** is reassigned as a downstream recovery port (providing comparable functionality to port **226** reassigned as a downstream recovery port in filter assembly **210)** and port **526** is maintained closed, or may be removed. Accordingly, the procedure disclosed for removing filtered and unfiltered liquid from filter assembly **210** when operated in a reverse direction is incorporated here by reference with respect to filter assembly **510.**

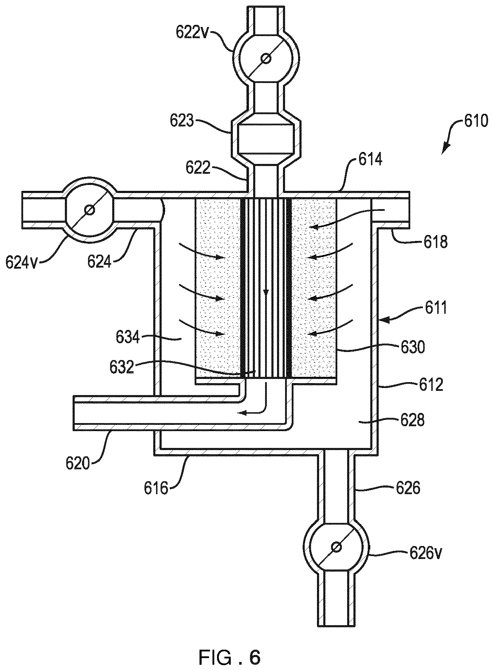

Referring now to FIG. 6, a yet further aspect of the liquid recovery filter assembly designated generally as **610** has a configuration that differs from that of filter assembly **510,** i.e., filter assembly **610's** filter inlet port extends radially from an upper end of the filter assembly rather than from a lower end as shown for filter assembly **510.** Filter assembly **610,** however, includes several components corresponding to those disclosed above for filter assemblies **210** through **510,** i.e., a filter housing or shell **611** having a shell wall **612** with mutually opposed first or upper and second or lower ends **614** and **616,** respectively, collectively defining an internal volume **628.** A toroidal filter element **630** is secured therein. Filter element **630** and surrounding housing **611** define an upstream or inlet volume **634** therebetween. Filter element **630** has a hollow core **632.**

An upstream vent port **624** and its associated valve **624v** extend radially from upper or inlet end **614.** An opposite upstream or inlet side drain port **626** and its associated valve **626v** extend downwardly from lower end **616.** A recovery port **622** and its optional associated valve **622v** extend from upper end **614** and are in fluid communication with core **632.** A recovery filter **623** is secured in-line and in fluid communication with port **622** between core **632** and recovery port valve **622v.** Recovery filter **623** should be selected from among the same construction material options and the same property/characteristic options disclosed for recovery filter **223.**

Liquid flow through filter housing **610** is essentially the same as disclosed above for filter assembly **310.** Liquid flow during normal filtering operations initially passes through radially disposed inlet port **618** and its normally open valve **618v** at upper end **614,** and then enters upstream internal volume **634.** The liquid then passes through filter element **630** into filter core **632,** and downwardly out of core **632** to flow out of filter assembly **610** from radially disposed downstream or outlet port **620** and its normally open valve **620v** at lower end **614.**

During normal filtering and recovery operations, filter assembly **610** is operated in the same manner as disclosed for filter assemblies **210** through **510.** The positions of the valves present on filter assembly **610** (open, closed, partially open) during normal filtering and recovery operations are identical to the corresponding valve positions of the corresponding valves of filter assembly **210** during normal filtering and recovery operations, e.g., upstream vent port valve **624v,** and upstream drain port valve **626v** (corresponding to upstream vent port valve **224v** and upstream drain port valve **226v)** are commonly closed during the primary filtration function. As such, the disclosure regarding the operation of filter assembly **210** for normal (primary) filtering and recovery operations is incorporated here by reference.

The configuration of filter assembly **610** may also perform the intended liquid filter and recovery functions when the liquid flow is reversed through the assembly. It should be understood that to operate filter assembly **610** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **620,** reassigned as an inlet port, is located at the gravitational top or high position. Upstream drain port **626** is reassigned as a downstream recovery port and will incorporate an inline recovery filter similar to, or the same as, recovery filter **623.** Recovery port **622** is reassigned as an upstream drain port and often maintained in a closed condition during the main filtering operation.

The use of a recovery filter **623** on port **622** is optional in this functional configuration and may need to be removed in certain cases, as disclosed above. When used in this manner, liquid introduced into port **620** (with valve **620v** open, if present), flows into core **632** (or the lumen of the filter element if constructed from, for example, hollow fiber or tubular material), and radially outwardly through filter element **630** into internal volume **634** (now a downstream volume) and out of the filter assembly through port **618** as processed liquid. In this functional configuration, the remaining port(s) (port **624** in the embodiment shown in FIG. 6) is/are maintained in a closed condition (by, for example, closing valve **624v** in the embodiment shown in FIG. 6), or may be eliminated from the embodiment, as use of these ports risk contamination of the downstream filtered liquid when not coupled with a recovery filter. Once the intended volume of liquid is filtered through assembly **610,** valve 620v is closed to cease flow.

The procedure to remove the resident unfiltered and filtered
liquid within assembly **610** when operated in the reverse direction is the same as that disclosed for filter assembly **210** when operated in the reverse direction. Accordingly, the procedure disclosed for removing filtered and unfiltered liquid from filter assembly **210** when operated in a reverse direction is incorporated here by reference with respect to filter assembly **610.**

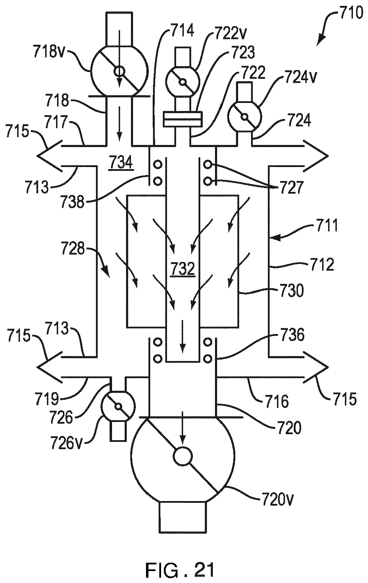

Referring now to FIG. 21, in another aspect of the disclosure, a liquid recovery filter is shown designated generally as filter assembly **710.** This schematic representation shows an embodiment very similar to **210** disclosed in FIGS. 2 and 10; however, additional detail and features are shown to highlight how a replaceable filter cartridge may be disposed in a filter assembly housing or shell that can be disassembled to retrieve and replace used cartridges. Filter assembly **710** is configured as a single round housing that encloses a single filter cartridge. It should be understood that the length and width and overall geometric configuration of the filter assembly embodiment shown in FIG. 21 is by way of illustration and not limitation, and will depend upon the configuration of the filter element installed therein according to the intended use and operating environment.

Filter assembly **710** includes a housing or shell **711** having a shell wall **712** with an upper end cap **714** and an opposite lower end cap **716,** both of which are secured to shell wall **712.** It should be understood that either end cap can be integral to shell wall **712** as long as one of the end caps is removable to permit extraction and replacement of the enclosed filter cartridge. The combination of shell wall **712,** upper end cap **714** and lower end cap **716** define a filter assembly inner chamber **728.**

In the configuration shown, the two end caps are secured to shell wall **712** with band clamps **715** that secure shell wall flanges **713** to upper end cap flanges **717** and lower end cap flanges **719.** It should be understood that various other methods of attachment may be used such as bolt and nut assemblies or other types of clamps such as sanitary style clamps. A gasket may or may not be used between the registered surfaces of the shell wall and end cap(s).

An inlet port **718** extends (upwardly based on the filter assembly orientation shown in FIG. 21) from upper end cap **714** axially parallel to a longitudinal axis of the enclosed filter, as defined by its inlet and outlet ends. It should be understood that the parallel orientation of inlet port **718** relative to the longitudinal axis of the enclosed filter may be altered (angled away from a parallel orientation including an orthogonal orientation), to accommodate particular spatial needs. Inlet port **718** may also connect directly to shell wall **712** rather than upper end cap **714.** Inlet port **718** is in fluid communication with an upstream internal volume **734** defined by the combination of shell wall **712,** upper end cap **714,** lower end cap **716** and a designated upstream surface of an enclosed filter element disclosed in more detail below.

An outlet port **720** extends coaxially (with the filter) downwardly from lower end cap **716** and is in liquid communication with a filter core **732,** or downstream side of the enclosed filter element. As shown in FIG. 21, outlet port **720** has a longitudinal axis aligned with the longitudinal axis of the enclosed filter element. It should be understood this orientation can be altered (offset), in similar fashion to inlet port **718** to accommodate specific spatial needs. Alternatively, the orientation of inlet port **718** and outlet port **720** may be arranged to conform to the orientations disclosed in embodiments **210** through **610,** or to any orientation known in the art for the arrangement of inlet and outlet ports for filter assemblies.

A recovery port **722** extends from upper end cap **714.** Recovery port **722** communicates with the outlet portion or core **732** of the filter cartridge, as described in more detail below. Recovery port **722** is shown as being oriented coaxially with the enclosed filter element. It should be understood that although port **722** must be in fluid communication with the core of the enclosed filter cartridge, the coaxial orientation can be altered to accommodate spatial needs.

A recovery filter **723** is secured to port **722** between the two ends of the port and is in fluid communication with a lumen formed by the port. Recovery filter **723** should be selected from among the same construction material options and the same property/characteristic options disclosed for recovery filter **223.** A recovery port valve **722v** is secured to port **722** on a side of recovery filter **723** distal from upper end **714.** Valve **722v** is maintained in a closed position during normal filtering operations and is opened to permit the introduction of pressurized gas to recovery filtered liquids resident in the filter core (or to function as a vent).

An optional upstream vent port **724** also extends from upper end cap **714** to vent upstream internal volume **734.** Lastly, an optional upstream drain port **726** extends from lower end cap **716** for draining liquids from upstream internal volume **734.** This general external configuration of filter assembly **710** is similar to filter assembly **210.**

As previously disclosed, filter housing **711** defines internal volume **728** having a filter cartridge **730** disposed therein. The filter cartridge may have a generally toroidal configuration (such as the pleated cartridge filter shown in cross-section) and a hollow outlet core **732.** It should be understood that filter cartridge **730** may conform to any of the embodiments disclosed herein and be made from any of the materials disclosed herein, or from those generally well known in the art for filter elements.

To secure a first end of filter cartridge **730** in filter assembly **710,** upper end cap **714** is formed with an upper cartridge receiving wall **738** dimensioned and shaped to conform to the shape of the cartridge registration or mounting surfaces of filter cartridge **730** as are well known in the art. For cylindrical cartridges, receiving wall **738** is circular in cross-section (although other cross-sectional shapes are possible and within the scope of this disclosure), and has an inner diameter greater than the diameter of the mounting surfaces of filter cartridge **730.** Alternatively, receiving wall **738** can be substituted with a mounting post with an outside diameter less than an inner diameter of an annular axially projecting mounting surface on the cartridge.

With either mounting configuration, to secure filter cartridge **730** to upper end cap **714,** one or more O-rings **727** are positioned between the capsule and filter registration surfaces as shown in FIG. 21 to create a releasable, but substantially liquid tight seal between wall **738** and filter cartridge **730.** As previously stated, it should also be understood that the relative diameters of the receiving wall or post **738** and the cartridge mounting surfaces can be reversed wherein the inner diameter of the mounting surfaces are greater than the out diameter of the receiving wall or post. In this reversed configuration, the O-rings seal the inner mounting surface of the filter cartridge to the outer surface of the receiving wall or post. It should also be understood that other mounting methods, e.g., gasket seals, threading one cartridge end and using an O-ring seal on the other, or an O-ring seal on one end and a flat gasket seal on the other end, as well as other methods commonly known in the art for attaching filter elements into housings may be used to secure the filter cartridge to the shell wall.

To secure a second end of filter cartridge **730** in filter assembly **710,** lower end cap **716** is formed with a lower cartridge receiving wall **736** dimensioned and shaped to conform to the shape of the cartridge registration surfaces of filter cartridge **730** as are well known in the art. For cylindrical cartridges, lower receiving wall **736** is circular in cross-section (although other cross-sectional shapes are possible and within the scope of this disclosure) and has an inner diameter greater than the diameter of the mounting surfaces of filter cartridge **730.** To secure filter cartridge **730** to lower end cap **716,** one or more O-rings **727** are positioned between the surfaces as shown in FIG. 21 to create a releasable, but substantially liquid and air tight seal between wall **736** and filter cartridge **730.** It should also be understood that the relative diameters of the receiving wall or post **736** and the cartridge mounting surfaces can be reversed wherein the inner diameter of the mounting surfaces are greater than the outer diameter of the receiving wall or post. In this reversed configuration, the O-rings seal the inner mounting surface of the filter cartridge to the outer surface of the receiving wall or post. It should be understood that other mounting methods, as described elsewhere in the disclosure as well as other methods commonly known in the art for attaching filter elements into housings, may be used to secure the filter cartridge to the shell wall. It further should be understood that the filter cartridge can be permanently secured to one of the end caps and that such end cap can be removed from housing **711.**

In practice, for the embodiment shown in FIG. 21, upper end cap **714** will be removed from filter assembly **710** and filter cartridge **730** will be placed into internal volume **728** and inserted into lower receiving wall **736.** Upper end cap **714** will then be placed onto shell wall **712** with upper receiving wall **738** aligned with a top end of filter cartridge **730.** Once upper end cap **714** is fully registered against shell wall **712,** clamp **715,** (or any other method used to secure the end caps), is secured to the shell wall and end cap flanges to complete the assembly (or re-assembly) process to prepare filter assembly **710** for use, or further assembly to a larger assembly. It should be understood that other methods disclosed herein as well as other methods known in the art for securing end caps to housing walls may be used and are within the contemplation and scope of the disclosure. It further should be understood this process may also be reversed whereby the lower cap is removed and the filter cartridge is inserted into the filter housing and secured to the upper receiving wall or post first and then secured to the receiving wall or post of the outlet end cap when the outlet end cap is placed back on the filter housing or shell wall.

It should be understood further that the foregoing assembly procedure relates to filter cartridges designed to be removed and replaced. For assemblies designed for one-time or continual use, it should be also further understood that filter cartridge **730** may be secured in any of the disclosed filter housings via thermal or sonic bonding, adhesive, O-ring seals and any combination of these methods as well as any another other method used to secure filters in housings or capsules as disclosed herein and/or well known in the art.

As previously disclosed, the combination of filter housing **711** and an upstream designated surface of filter element **730** define an upstream volume **734.** Unfiltered liquid enters upstream volume **734** of filter assembly **710** via upstream or inlet passage **718** and passes through liquid permeable filter element **730** to hollow outlet core **732** of filter cartridge **730,** and then exits filter assembly **710** through outlet port **720** as filtered liquid.

To control the flow of liquids through filter assembly **710,** each of the various passages or ports **718** through **726** may include a dedicated valve therein. Although each passage or port may be configured with a valve, different embodiments may be configured with valves for only some and even none of the passages and/or ports. Multiple combinations of passages and ports with or without valves are within the contemplation and scope of the disclosure. For purposes of illustration as well as for completeness of the disclosure, dedicated valves for selective ports of filter assembly **710** are designated as valves **722v** through **726v.** Valves **722v** through **726v** are shown schematically in FIG. 21, and may be any suitable type of valve known in the art.

In the embodiment shown in FIG. 21, during normal filtering and recovery operations, filter assembly **710** is operated in the same manner as disclosed for filter assemblies **210** through **610.** The positions of the valves present on filter assembly **710** (open, closed, partially open) during normal filtering and recovery operations are identical to the corresponding valve positions of the corresponding valves of filter assembly **210** during normal filtering and recovery operations, e.g., upstream vent port valve **724v,** and upstream drain port valve **726v** (corresponding to upstream vent port valve **224v** and upstream drain port valve **226v)** are commonly closed during the primary filtration function. As such, the disclosure regarding the operation of filter assembly **210** for normal (primary) filtering and recovery operations is incorporated here by reference.

The configuration of filter assembly **710** may also perform the intended liquid filter and recovery functions when the liquid flow is reversed through the assembly. It should be understood that to operate filter assembly **710** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **720,** reassigned as an inlet port, is located at the gravitational top or high position. Upstream drain port **726** (and if present, optional drain port valve **726v)** is reassigned as a downstream recovery port (and optional downstream recovery port valve) and will incorporate an inline recovery filter similar to, or the same as, recovery filter **723.** Recovery port **722** (and if present, optional recovery port valve **726v)** is reassigned as an upstream drain port (and optional reassigned upstream drain port valve) and often maintained in a closed condition during the main filtering operation.

The use of a recovery filter **723** on port **722** is optional in this functional configuration and may need to be removed in certain cases, as disclosed above. When used in this manner, liquid introduced into port **720** (with valve **720v** open, if present), flows into core **732** (or the lumen of the filter element if constructed from, for example, hollow fiber or tubular material), and radially outwardly through filter element **730** into internal volume **734** (now a downstream volume) and out of the filter assembly through port **718** as processed liquid. In this functional configuration, the remaining port(s) (port **724** in the embodiment shown in FIG. 21) is/are maintained in a closed condition (by, for example, closing valve **724v** in the embodiment shown in FIG. 21), or could be eliminated from the embodiment, as use of these ports risk contamination of the downstream filtered liquid when not coupled with a recovery filter.

The procedure to remove the resident unfiltered and filtered liquid within assembly **710** when operated in the reverse direction is the same as that disclosed for filter assembly **210** when operated in the reverse direction. Accordingly, the procedure disclosed for removing filtered and unfiltered liquid from filter assembly **210** when operated in a reverse direction is incorporated here by reference with respect to filter assembly **710.**

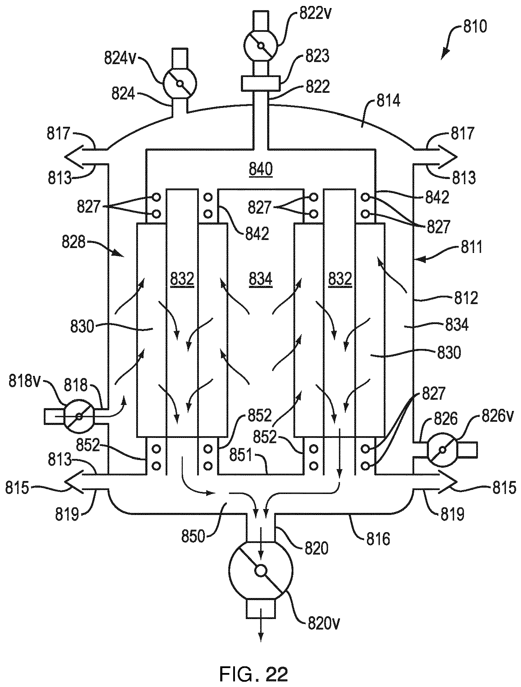

Referring now to FIG. 22, in another aspect of the disclosure, a liquid recovery filter is shown designated generally as filter assembly **810.** This embodiment is similar to the embodiment shown in FIG. 21 in that it incorporates replaceable filter cartridges disposed in a filter assembly housing or shell wall that can be disassembled to retrieve and replace used cartridges. Filter assembly **810** is configured as a multi-round housing that encloses two or more filter cartridges. It should be understood that the length and width of the filter assembly embodiment shown in FIG. 22 is by way of illustration and not limitation, and will depend upon the configuration of the filter elements installed therein according to the intended use and operating environment.

Filter assembly **810** includes a housing or shell **811** having a shell wall **812** with an upper inlet end cap **814** and an opposite lower outlet end cap **816,** both of which are secured to shell wall **812** and that collectively define an internal volume **828.** It should be understood that either end cap can be integral to shell wall **812** as long as one of the end caps is removable to permit extraction and replacement of the enclosed filter cartridges. In the configuration shown, the two end caps are secured to shell wall **812** with band clamps **815** that secure shell wall flanges **813** to upper end cap flanges **817** and lower end cap flanges **819.** It should be understood that various other methods of attachment may be used such as bolt and nut assemblies, or other types of clamps such as sanitary type clamps. A gasket may or may not be used between the registered surfaces of the shell wall and end caps.

An inlet port **818** extends laterally from shell wall **812.** It should be understood that the location of inlet port **818** in terms of its height or radial position as well as its orientation relative to the longitudinal axis of the enclosed filter may be altered (raised, lowered, rotated, angled away from an orthogonal orientation, etc.), to accommodate particular spatial needs. Inlet port **818** may also may also connect directly to inlet cap **814** rather than shell wall **812.** Inlet port **818** is in liquid communication with an upstream internal volume **834** defined by the combination of housing **811**and an upstream designated surface of filter element **830.**

An outlet port **820** extends substantially parallel to the longitudinal axes of enclosed filter cartridges **830** downwardly from lower end cap **816** and is in liquid communication with filter cores **832,** or downstream side of the enclosed filter cartridges via an outlet manifold **850** that connects cores **832** with outlet **820.** As shown in FIG. 22, outlet port **820** has a longitudinal axis substantially parallel with the longitudinal axis of the enclosed filter cartridges. It should be understood this orientation can be altered (offset), in similar fashion to inlet port **818** to accommodate specific spatial needs. Alternatively, , the orientation of inlet port **818** and outlet port **820** may conform to the orientations disclosed in embodiments **210** through **610,** or to any orientation known in the art for the arrangement of inlet and outlet ports for filter assemblies.

As shown in FIG. 22, outlet manifold **850** is formed by a combination of a bottom end **851** of shell wall **812** that has portions defining lower end filter cartridge receiving walls **852** disclosed in more detail below. It should be understood that outlet manifold **850** may be formed entirely as an integral part of outlet end cap **816,** or an integral part of shell wall **812.**

A recovery port **822** extends from upper end cap **814.** Recovery port **822** communicates with the outlet portions or cores **832** of the filter cartridges via an outlet vent manifold **840,** as described in more detail below. Recovery port **822** is shown as being oriented substantially parallel with the longitudinal axes of the enclosed filter cartridges. It should be understood that although port **822** must be in liquid communication with the cores of the enclosed filter cartridges, the substantially parallel orientation can be altered to accommodate spatial needs.

A recovery filter **823** is secured to port **822** between the two ends of the port and is in fluid communication with a lumen formed by the port. Recovery filter **823** should be selected from among the same construction material options and the same property/characteristic options disclosed for recovery filter **223.** A recovery port valve **822v** is secured to port **822** on a side of recovery filter **823** distal from upper end **814.** Valve **822v** is maintained in a closed position during normal filtering operations and is opened to permit the introduction of pressurized gas to recovery filtered liquids resident in the filter core (or to function as a vent).

An upstream vent port **824** also extends from inlet end cap **814** to vent upstream internal volume **834** (defined by the combination of housing **811** and upstream designated surfaces of the filter cartridges). Lastly, an upstream drain port **826** extends laterally from a lower end of shell wall **812** for draining liquids from upstream internal volume **834** and may be located at any radial orientation relative to the location of inlet **818.** This general external configuration of filter assembly **810** is similar to filter assembly **110** of FIG. 1, with the exception of the orientation of inlet port **818** and upstream drain passage **826.**

As previously disclosed, filter housing **811** defines an internal volume **828** having two or more filter cartridges **830** disposed therein in what can be a circular arrangement of filter cartridges although other orientations (linear, rows, etc.) may be used. The filter cartridges may have a generally toroidal configuration (such as the pleated cartridge filters as shown in cross-section) and hollow outlet cores **832.** It should be understood that filter cartridges **830** may conform to any of the embodiments disclosed herein and be made from any of the materials disclosed herein, or from those generally well known in the art for filter elements.

To secure a first end of filter cartridges **830** in filter assembly 810, vent manifold **840,** secured to inlet end cap **814,** is formed with a plurality of upper cartridge receiving walls **842** dimensioned and shaped to conform to the shape of the cartridge registration or mounting surfaces of filter cartridges **830** as are well known in the art. For cylindrical cartridges, receiving walls **842** will be circular in cross-section (although other cross-sectional shapes are possible and within the scope of this disclosure) and have an inner diameter greater than the diameter of the mounting surfaces of filter cartridges **830.**

To secure filter cartridge **830** to inlet cap **814,** one or more O-rings **827** are positioned between the surfaces as shown in FIG. 22 to create a releasable, but substantially liquid and air tight seal between walls **838** and filter cartridges **830.** It should also be understood that the relative diameters of the receiving walls or posts **838** and the cartridges' mounting surfaces can be reversed wherein the inner diameter of the mounting surfaces are greater than the out diameter of the receiving walls or posts. In this reversed configuration, the O-rings seal the inner mounting surfaces of the filter cartridges to the outer surfaces of the receiving wall or post. It should also be understood that other mounting methods, e.g., flat gasket seals, threading one cartridge end and using an O-ring seal on the other, or an O-ring seal on one end and a flat gasket seal on the other end, as well as other methods commonly known in the art for attaching filter elements into housings (as well as any of the methods disclosed for filter assembly **710**), may be used to secure the filter cartridges to the shell walls.

To secure second ends of filter cartridges **830** in filter assembly **810,** the bottom end of shell wall **812,** (or portions of outlet end cap **816**)**,** is formed with a plurality of lower cartridge receiving walls **852** dimensioned and shaped to conform to the shape of the cartridge registration surfaces of filter cartridges **830** as are well known in the art. For cylindrical cartridges, lower receiving walls **836** will be circular in cross-section (although other cross-sectional shapes are possible and within the scope of this disclosure) and have inner diameters greater than the diameters of the mounting surfaces of filter cartridges **830.** To secure filter cartridges **830** to outlet cap **816,** (or bottom end of shell wall **812**), one or more O-rings **827** are positioned between the surfaces as shown in FIG. 22 to create a releasable, but substantially liquid and air tight seal between walls **852** and filter cartridges **830.**

It should be understood that the relative diameters of the receiving walls or posts **836** and the cartridges' mounting surfaces can be reversed wherein the inner diameter of the mounting surfaces are greater than the out diameter of the receiving walls or posts. In this reversed configuration, the O-rings seal the inner mounting surfaces of the filter cartridges to the outer surfaces of the receiving walls or posts. It also should be understood that other mounting methods, described elsewhere in this disclosure as well as other methods commonly known in the art for attaching filter elements to and into housings, may be used to secure the filter cartridge to the shell wall.

In practice, for the embodiment shown in FIG. 22, inlet cap **814** will be removed from filter assembly **810** and filter cartridges **830** will be placed into internal volume **828** and each inserted into one of the lower receiving walls **836.** Inlet cap **814** will then be placed onto shell wall **812** with upper receiving walls **842** each aligned with a top end of one of the plurality of filter cartridges **830.** Once upper end cap **814** is fully registered against shell wall **812,** clamps **815,** (or any other method used to secure the end caps), is secured to the shell wall and end cap flanges to complete the assembly (or re-assembly) process to prepare filter assembly **810** for use, or further assembly to a larger assembly. It should be understood this process may also be reversed whereby the outlet cap is removed and the filter cartridges are inserted into the filter housing and secured to the upper receiving walls or posts first and then secured to the receiving walls or posts of the outlet end cap when the outlet end cap is placed back on the filter housing or shell wall.

It should be understood the foregoing assembly procedure relates to filter cartridges designed to be removed and replaced. For assemblies designed for one-time or continual use, it should be also further understood that filter cartridges **830** may be secured in any of the disclosed filter housings via thermal or sonic bonding, adhesive, O-ring seals and any combination of these methods as well any another other method used to secure filters in housings or capsules as disclosed herein and/or well known in the art.

As previously disclosed, the combination of housing **811** and an upstream designated surface of filter cartridges **830** define an upstream volume **834.** Unfiltered liquid enters upstream volume **834** via inlet port **818** and passes through liquid permeable filter cartridges **830** to hollow outlet cores **832** of filter cartridges **830,** and then exits filter assembly **810** through outlet manifold **850** and then outlet port **820** as filtered liquid.

To control the flow of liquids through filter assembly **810,** each of the various ports **818** through **826** may include a dedicated valve therein. Although each port may be configured with a valve, different embodiments may be configured with valves for only some and even none of the ports. Multiple combinations of ports with or without valves are within the contemplation and scope of the disclosure. For purposes of illustration as well as for completeness of the disclosure, dedicated valves for selective ports of filter assembly **810** are designated as valves **822v** through **826v.** Valves **822v** through **826v** are shown schematically in FIG. 22, and may be any suitable type of valve known in the art.

In the embodiment shown in FIG. 22, during normal filtering and recovery operations, filter assembly **810** is operated in the same manner as disclosed for filter assemblies **210** through **710.** The positions of the valves present on filter assembly **810** (open, closed, partially open) during normal filtering and recovery operations are identical to the corresponding valve positions of the corresponding valves of filter assembly **210** during normal filtering and recovery operations, e.g., upstream vent port valve **824v,** and upstream drain port valve **826v** (corresponding to upstream vent port valve **224v** and upstream drain port valve **226v**) are commonly closed during the primary filtration function. As such, the disclosure regarding the operation of filter assembly **210** for normal (primary) filtering and recovery operations is incorporated here by reference.

The configuration of filter assembly **810** may also perform the intended liquid filter and recovery functions when the liquid flow is reversed through the assembly. It should be understood that to operate filter assembly **810** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, the assembly is reoriented such that outlet port **820,** reassigned as an inlet port, is located at the gravitational top or high position. Upstream drain port **826** (and if present, optional drain port valve **826v**) is reassigned as a downstream recovery port (and optional downstream recovery port valve) and will incorporate an inline recovery filter similar to, or the same as, recovery filter **823.** Recovery port **822** (and if present, optional recovery port valve **826v**) is reassigned as an upstream drain port (and optional reassigned upstream drain port valve) and often maintained in a closed condition during the main filtering operation.

The use of a recovery filter **823** on port **822** is optional in this functional configuration and may need to be removed in certain cases, as disclosed above. When used in this manner, liquid introduced into port **820** (with valve **820v** open, if present), flows into core **832** (or the lumen of the filter element if constructed from, for example, hollow fiber or tubular material), and radially outwardly through filter element **830** into internal volume **834** (now a downstream volume) and out of the filter assembly through port **818** as processed liquid. In this functional configuration, the remaining port(s) (port **824** in the embodiment shown in FIG. 22) is/are maintained in a closed condition (by, for example, closing valve **824v** in the embodiment shown in FIG. 22), or could be eliminated from the embodiment, as use of these ports risk contamination of the downstream filtered liquid when not coupled with a recovery filter.

The procedure to remove the resident unfiltered and filtered liquid within assembly **810** when operated in the reverse direction is the same as that disclosed for filter assembly **210** when operated in the reverse direction. Accordingly, the procedure disclosed for removing filtered and unfiltered liquid from filter assembly **210** when operated in a reverse direction is incorporated here by reference with respect to filter assembly **810.**

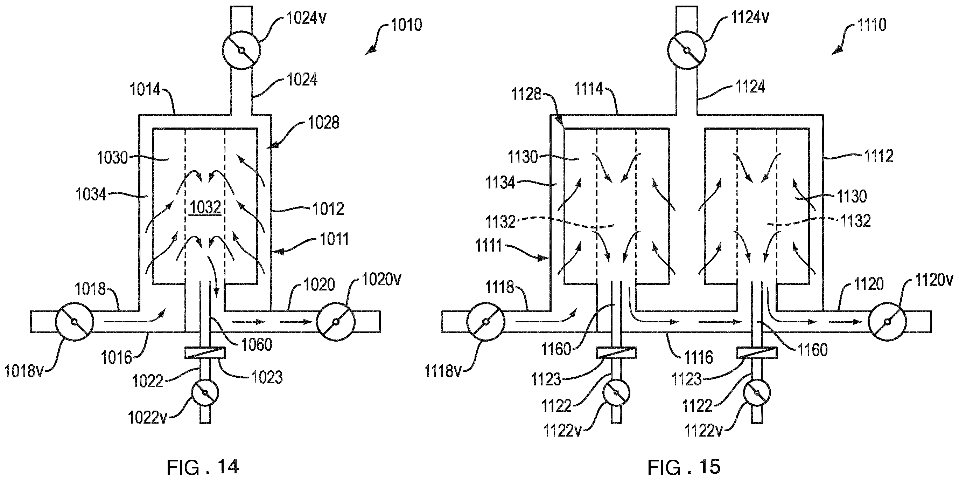

Referring now to FIG. 14, in another aspect of the disclosure, a liquid recovery filter is shown designated generally as filter assembly **1010.** This embodiment differs from the previously disclosed embodiments in that it incorporates an aspiration tube **1060** in place of a recovery port or passage. The filter assembly shown in FIG. 14 has a filter element secured in a capsule or housing. It should be understood that an aspiration tube can be used in place of a downstream recovery port with a filter configuration incorporating a filter cartridge, such as those shown in FIGS. 21 and 22. Filter assembly **1010** is configured as a single round housing that encloses a single filter element **1030.** It should be understood further that the length and width of the filter assembly embodiment shown in FIG. 14 is by way of illustration and not limitation, and will depend upon the configuration of the filter element installed therein according to the intended use and operating environment.

Filter assembly **1010** includes a housing or shell **1011** having a shell wall **1012** with an upper end **1014** and an opposite lower end **1016.** It should be understood that either end can be integral to shell wall **1012,** or modular in construction as end caps, particularly if a replaceable filter cartridge is secured in the housing or shell wall to permit extraction and replacement of the enclosed filter cartridge. It should also be understood that upper end **1014** is referenced as upper and lower end **1016** is referenced as lower as much function is gained from using this embodiment in this orientation for liquid recovery; however during normal filtration and other times during use it may be possible and even advantageous for end **1016** to be oriented gravitationally above end **1014.** The means and/or methods used to secure such end caps is the same as disclosed for the end caps described for filter assemblies **210** through **810.**

An inlet port **1018** extends laterally from shell wall **1012** or from lower end **1016.** It should be understood that the orientation of inlet port **1018** relative to the longitudinal axis of the enclosed filter may be altered (angled away from its orthogonal orientation), to accommodate particular spatial needs. Inlet port **1018** is in liquid communication with an internal upstream volume **1034** defined by the combination of shell **1011** and an upstream designated surface of filter element **1030.**

An outlet port **1020** also extends laterally from shell wall **1012** or from lower end **1016** and is in liquid communication with a filter core **1032,** or downstream side of the enclosed filter element. As shown in FIG. 14, outlet port **1020** has a longitudinal axis orthogonal to the longitudinal axis of the enclosed filter element. It should be understood this orientation can be altered (offset), in similar fashion to inlet port **1018** to accommodate specific spatial needs. Furthermore and alternatively, the orientation of inlet port **1018** and outlet port **1020** may be configured to the orientations disclosed in embodiments **210** through **610** or to any orientation known in the art for the arrangement of inlet and outlet ports for filter assemblies.

Outlet aspiration tube **1060** extends into a lower end of core **1032** from lower end **1016** and is in fluid communication with downstream recovery port **1022,** core **1032,** and the exterior of filter assembly **1010** through recovery port **1022.** It should be understood that aspiration tube **1060** can extend any distance into core **1032** including the distance shown in FIG. 14 and have openings formed anywhere along its length to direct air or gas into the downstream side of element **1030** so as to facilitate and allow downstream liquids to be recovered. Recovery port **1022** extends outwardly from end **1016** and is in fluid communication with the outlet portion or core **1032** of the filter element via tube **1060,** as described in more detail below. Recovery port **1022** is shown as being oriented coaxially with the enclosed filter element. It should be understood that although recovery port **1022** must be in fluid communication with the core of the enclosed filter element, the coaxial orientation can be altered to accommodate spatial needs.

A recovery filter **1023** is secured to recovery port **1022** between the two ends of the port and is in fluid communication with a lumen formed by the port. Recovery filter **1023** should be selected from among the same construction material options and the same property/characteristic options disclosed for recovery filter **223.** A recovery port valve **1022v** is secured to port **1022** on a side of recovery filter **1023** distal from lower end **1016.** Valve **1022v** is maintained in a closed position during normal filtering operations and is opened to permit the introduction of pressurized gas to recover filtered liquids resident in the filter core (or to function as a vent).

An upstream vent port **1024** extends from upper end **1014** to vent upstream internal volume **1034** and can be also used to perform other functions including, but not limited to integrity testing and pressurization during liquid recovery. Lastly, an optional upstream drain port (not shown) may be included and extend from lower end **1016** for draining liquids from upstream internal volume **1034.** This general external configuration of filter assembly **1010** is similar to filter assembly **510** of FIG. 5, with the exception of the absence of an upstream drain port and the location of port **1022** compared with the location port **522,** which is reoriented to lower end **1016** due to the use of tube **1060.**

As previously disclosed, filter shell **1011** defines internal volume 1028 having a filter element **1030** disposed therein. The filter element may have a generally toroidal configuration (such as the pleated filter shown in cross-section) and a hollow outlet core **1032.** It should be understood that filter element **1030** may conform to any of the embodiments disclosed herein and be made from any of the materials disclosed herein, or any materials known in the art for filter elements. Filter element **1030** may be secured in any of the disclosed filter housings via thermal or sonic bonding, adhesive, O-ring seals and any combination of these methods as well as any another other method used to secure filters in housings or capsules as disclosed herein and/or as well known in the art. For filter elements in the form of filter cartridges, the cartridges may be secured in the housing in the same manner and with the same features as disclosed and shown in FIGS. 21 and 22.

As previously disclosed, the combination of shell **1011** and a designated upstream surface of filter element **1030** define an upstream volume **1034.** Unfiltered liquid enters upstream volume **1034** of filter assembly **1010** via inlet port **1018** and passes through filter element **1030** to hollow outlet core **1032,** and then exits filter assembly **1010** through outlet port **1020** as filtered liquid.

To control the flow of liquids through filter assembly **1010,** each of the various ports or tubes **1018** through **1024** (and upstream drain ports in some embodiments) may include a dedicated valve therein. Although each tube or port may be configured with a valve, different embodiments may be configured with valves for only some and even none of the tubes and/or ports. Multiple combinations of tubes and ports with or without valves are within the contemplation and scope of the disclosure. For purposes of illustration as well as for completeness of the disclosure, dedicated valves for selective ports of filter assembly **1010** are designated as valves **1022v** through **1024v.** Valves **1022v** through **1024v** are shown schematically in FIG. 14, and may be any suitable type of valve known in the art.

Tube **1060** and downstream recovery port **1022** may be made from aluminum, stainless steel, metallic alloys, or other metal-based materials. Other suitable materials include polymeric materials including, but not limited to, polypropylene, nylon, polyester, polyethylene, PSA and combinations thereof that are generally compatible with the fluids and/or gasses intended to be introduced into the filter assembly as is known in the art.

In the embodiment shown in FIG. 14, during normal filtering and recovery operations, filter assembly **1010** is operated in the same manner as disclosed for filter assemblies **210** through **810.** The positions of the valves present on filter assembly **1010** (open, closed, partially open) during normal filtering and recovery operations are identical to the corresponding valve positions of the corresponding valves of filter assembly **210** during normal filtering and recovery operations, e.g., upstream vent port valve **1024v,** and upstream drain port valve **1026v,** if present, (corresponding to upstream vent port valve **224v** and upstream drain port valve **226v**) are commonly closed during the primary filtration function. As such, the disclosure regarding the operation of filter assembly **210** for normal (primary) filtering and recovery operations is incorporated here by reference.

The configuration of filter assembly **1010** may also perform the intended liquid filter and recovery functions when the liquid flow is reversed through the assembly. It should be understood that to operate filter assembly **1010** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

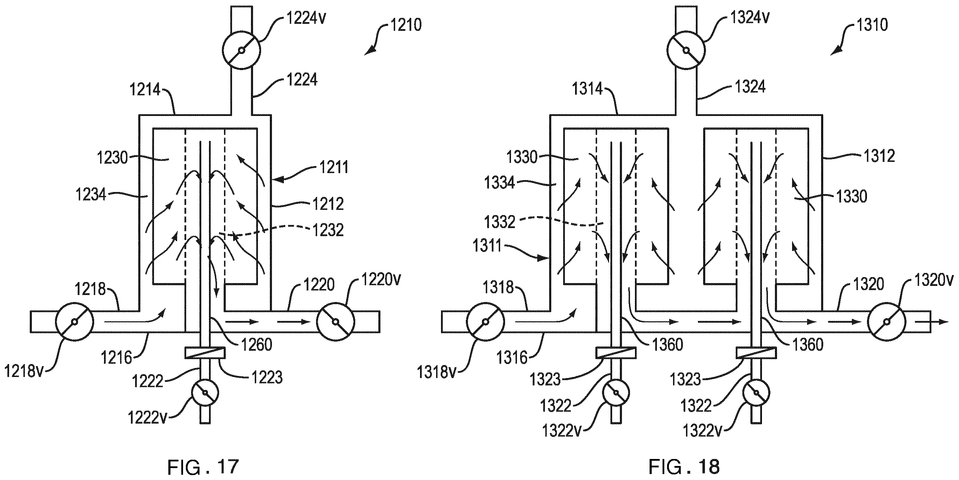

In one possible reverse functional configuration, similar to the reverse functional configuration disclosed for embodiment **510,** the assembly may be maintained in the orientation shown schematically in FIG. 14, such that outlet port **1020,** reassigned as an inlet port, remains located at the gravitational bottom or low position. It should be noted that reorientation is not necessary for this functional configuration compared to the orientation shown as the reassigned outlet port is located at the gravitational bottom or low position in the orientation shown schematically in FIG. 14. Upstream vent port **1024** is reassigned as a downstream recovery port and will incorporate an inline recovery filter similar to, or the same as, recovery filter **1023.** Recovery port **1022** is reassigned as an upstream vent port and often maintained in a closed condition during the main filtering operation. It should be understood, that outlet aspiration tube **1060,** as shown in FIG. 14 and described as extending into a lower end of core **1032,** would provide improved venting efficiency if it were to extend upwardly toward, and in close proximity to, a top end of core **1032,** similar to aspiration tube **1260** shown in FIG. 17 and disclosed in further detail below.

The use of a recovery filter **1023** on port **1022** is optional in this functional configuration. When used in this manner, liquid introduced into port **1020** (with valve **1020v** open, if present), flows into core **1032** (or the lumen of the filter element if constructed from, for example, hollow fiber or tubular material), and radially outwardly through filter element **1030** into internal volume **1034** (now a downstream volume) and out of the filter assembly through port **1018** as processed liquid. In this functional configuration, any the remaining port(s), if present, is/are maintained in a closed condition (by, for example, closing their associated valve) or could be eliminated from the embodiment, as shown in FIG. 14, as use of additional downstream ports risk contamination of the downstream filtered liquid when not coupled with a recovery filter. Once the intended volume of liquid is filtered through assembly **1010,** valve **1020v** may be closed to cease flow.

The procedure to remove the resident unfiltered and filtered
liquid within assembly **1010** when operated in the reverse direction is the same as that disclosed for filter assembly **210** when operated in the reverse direction, with the noted exception that in filter assembly **1010,** port **1024** is reassigned as a downstream recovery port (providing comparable functionality to port **226** reassigned as a downstream recovery port in filter assembly **210**) and port **1026** is not depicted. Accordingly, the procedure disclosed for removing filtered and unfiltered liquid from filter assembly **210** when operated in a reverse direction is incorporated here by reference with respect to filter assembly **1010.**

Referring now to FIG. 17, in an embodiment substantially similar to the one shown in FIG. 14, a filter assembly designated generally as **1210** incorporates the same features as filter assembly **1010** except the aspiration tube designated **1260** in filter assembly **1210** extends from its point of entry at a bottom end of a filter shell wall **1212** into a filter core **1232** and extends upwardly toward, and in close proximity to, a top end of a filter element **1230.** This aspiration tube places the point of gas introduction at a higher point in filter core **1232** than its counterpart, aspiration tube **1060** in filter assembly **1010.** This configuration may improve the efficiency of liquid flow out of filter assembly by more advantageously introducing gas into the filter assembly at a location less likely to interfere with the flow of liquid out through core **1232** and outlet **1220.**

The function and operation of filter assembly **1210** is essentially the same as described and disclosed for filter assembly **1010.** The description of the construction of filter assembly **1010** also corresponds to the construction of filter assembly **1210.** The disclosure of the construction, operation and function of filter assembly **1010** is thus incorporated here to describe the construction, operation and function of filter assembly **1210.** It should be noted that the reference character designations for filter assembly **1010** correspond to, and may be transferred to, filter assembly **1210** by removing the second digit "0" of each reference character and replacing it with a "2".

Referring now to FIG. 15, in a yet further aspect of the disclosure, a multi-round filter assembly incorporating dedicated aspiration tubes and recovery filters for each enclosed filter element/cartridge is shown designated generally as **1110.** This embodiment differs from the previously disclosed single-round filter housing embodiment shown in FIG. 14 in that it incorporates multiple filter elements/cartridges, each with dedicated aspiration tubes **1160** and recovery filters **1123.** Each aspiration tube has a dedicated recovery port **1122** and an optional associated valve **1122v.** The filter assembly shown in FIG. 15 has a filter element secured in a capsule or housing. It should be understood that dedicated aspiration tubes can be used in place of downstream recovery ports with a filter configuration incorporating filter cartridges, such as those shown in FIGS. 21 and 22. It should be understood further that the length and width of the filter assembly embodiment shown in FIG. 15 is by way of illustration and not limitation, and will depend upon the configuration of the filter element installed therein according to the intended use and operating environment.

Filter assembly **1110** includes a housing or shell **1111** having a shell wall **1112** having an upper end **1114** and an opposite lower end **1116.** It should be understood that either end can be integral to shell wall **1112,** or modular in construction as end caps, particularly if a replaceable filter cartridge is secured in the housing or shell wall to permit extraction and replacement of the enclosed filter cartridge. The means and/or methods used to secure such end caps are the same as those disclosed for the end caps described for filter assemblies **710** and **810.**

An inlet port **1118** extends laterally or radially from shell wall **1112.** It should be understood that the orientation of inlet port **1118** relative to the longitudinal axis of the enclosed filter may be altered (angled away from its orthogonal orientation), to accommodate particular spatial needs. Inlet port **1118** is in liquid communication with an internal upstream volume **1134** defined by the combination of shell **1111** and an upstream designated surface of filter element **1030.**

An outlet port **1120** also extends laterally from shell wall **1112** or from lower end **1116** and is in liquid communication with filter core **1132,** or the downstream side of the enclosed filter elements. As shown in FIG. 15, outlet port **1120** has a longitudinal axis orthogonal to the longitudinal axis of the enclosed filter element. It should be understood that this orientation can be altered (offset), in similar fashion to inlet port **1118** to accommodate specific spatial needs.

Outlet aspiration tubes **1160** each extend into a lower end of one filter core **1132** from lower end **1116** and are in fluid communication with downstream recovery ports **1122,** cores **1132,** and the exterior of filter assembly **1110** through recovery ports **1122.** It should be understood, that aspiration tube **1160** can extend any distance into core **1132** including the distance shown in FIG. 15 and have openings formed anywhere along its length to direct air or gas into the downstream side of element **1130** so as to facilitate and allow downstream liquids to be recovered. Recovery ports **1122** extend outwardly from end **1116.** Each downstream recovery port **1122,** communicates with the outlet portion or core **1132** of one filter element **1130** via tube **1160,** as described in more detail below. Each recovery port **1122** is shown as being oriented coaxially with its corresponding enclosed filter element/cartridge **1130.** It should be understood that although recovery port **1122** must be in fluid communication with the core of the enclosed filter element, the coaxial orientation can be altered to accommodate spatial needs.

A recovery filter **1123** is secured to recovery port **1122** between the two ends of the port and is in fluid communication with a lumen formed by the port. Recovery filter **1123** should be selected from among the same construction material options and the same property/characteristic options disclosed for recovery filter **223.** A recovery port valve **1122v** is secured to port **1122** on a side of recovery filter **1123** distal from lower end **1116.** Valve **1122v** is maintained in a closed position during normal filtering operations and is opened to permit the introduction of pressurized gas to recover filtered liquids resident in the filter core (or to function as a vent).

An upstream vent port **1124** also extends from upper end **1114** to vent an upstream internal volume **1134** described in more detail below. Lastly, an optional upstream drain port (not shown) may be included and extend from lower end **1116** to drain liquids from upstream internal volume **1134.** This general external configuration of filter assembly **1110** is similar to filter assembly **510** of FIG. 5, with the exception of the absence of an upstream drain port and the location of ports **1122** compared with the location of port **522,** which is reoriented to lower end **1116** due to the use of tube **1160.**

As previously disclosed, filter shell wall **1112** defines internal volume **1128** having a plurality of filter elements/cartridges **1130** disposed therein. The filter elements may have a generally toroidal configuration (such as the pleated filter shown in cross-section) and a hollow core **1132.** It should be understood that filter elements **1130** may conform to any of the embodiments disclosed herein and be made from any of the materials disclosed herein for filter elements. Filter elements **1130** may be secured in any of the disclosed filter housings via thermal or sonic bonding, adhesive, O-ring seals and any combination of these methods as well as any another other method used to secure filters in housings as are well known in the art. For filter elements in the form of filter cartridges, the cartridges may be secured in the housing in the same manner and with the same features as disclosed and shown in FIGS. 21 and 22.

As previously disclosed, the combination of shell **1111** and a designated upstream surface of filter elements **1130** define an upstream volume. Unfiltered liquid enters upstream volume **1134** via inlet port **1118** and passes through liquid permeable filter elements **1130** to hollow cores **1132,** and then exits filter assembly **1110** through outlet port **1120** as filtered liquid.

To control the flow of liquids through filter assembly **1110,** each of the various ports or tubes **1118** through **1124** (and upstream drain ports in some embodiments) may include a dedicated valve therein. Although each port may be configured with a valve, different embodiments may be configured with valves for only some and even none of the ports. Multiple combinations of ports with or without valves are within the contemplation and scope of the disclosure with respect to this filter assembly embodiment. For purposes of illustration as well as for completeness of the disclosure, dedicated valves for selective ports of filter assembly **1110** are designated as valves **1122v** through **1124v.** Valves **1122v** through **1124v** are shown schematically in FIG. 15, and may be any suitable type of valve known and used in the art.

Tubes **1160** and downstream recovery ports **1122** may be made from the same materials described and disclosed for tube **1060** and recovery ports **1022.** It should be understood that the list of potential materials described herein are not exhaustive and include those materials commonly used in the art to construct such features in filter housings and assemblies.

In the embodiment shown in FIG. 15, during normal filtering and recovery operations, filter assembly **1110** is operated in the same manner as disclosed for filter assemblies **210** through **1010.** The positions of the valves present on filter assembly **1110** (open, closed, partially open) during normal filtering and recovery operations are identical to the corresponding valve positions of the corresponding valves of filter assembly **210** during normal filtering and recovery operations, e.g., upstream vent port valve **1124v,** and upstream drain port valve **1126v,** if present, (corresponding to upstream vent port valve **224v** and upstream drain port valve **226v**) are commonly closed during the primary filtration function. As such, the disclosure regarding the operation of filter assembly **210** for normal (primary) filtering and recovery operations is incorporated here by reference.

The configuration of filter assembly **1110** may also perform the intended liquid filter and recovery functions when the liquid flow is reversed through the assembly. It should be understood that to operate filter assembly **1110** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, similar to the reverse functional configuration disclosed for embodiment **510,** the assembly may be maintained in the orientation shown schematically in FIG. 15, such that outlet port **1120,** reassigned as an inlet port, remains located at the gravitational bottom or low position. It should be noted that reorientation is not necessary for this functional configuration compared to the orientation shown as the reassigned outlet port is located at the gravitational bottom or low position in the orientation shown schematically in FIG. 15. Upstream vent port **1124** is reassigned as a downstream recovery port and will incorporate an inline recovery filter similar to, or the same as, recovery filter **1123.** Recovery port **1122** is reassigned as an upstream vent port and often maintained in a closed condition during the main filtering operation. It should be understood, that outlet aspiration tubes **1060,** as shown in FIG. 15 and described as extending into a lower end of cores **1132,** would provide improved venting efficiency if they were to extend upwardly toward, and in close proximity to, a top end of cores **1132,** similar to aspiration tubes **1360** shown in FIG. 18 and disclosed in further detail below.

The use of recovery filters **1123** on ports **1122** are optional in this functional configuration. When used in this manner, liquid introduced into port **1120** (with valve **1120v** open, if present), flows into cores **1132** (or the lumen of the filter elements if constructed from, for example, hollow fiber or tubular material), and radially outwardly through filter elements **1130** into internal volume **1134** (now a downstream volume) and out of the filter assembly through port **1118** as processed liquid. In this functional configuration, any the remaining port(s), if present, is/are maintained in a closed condition (by, for example, closing their associated valve) or could be eliminated from the embodiment, as shown in FIG. 15, as use of additional downstream ports risk contamination of the downstream filtered liquid when not coupled with a recovery filter. Once the intended volume of liquid is filtered through assembly **1010,** valve **1020v** may be closed to cease flow.

The procedure to remove the resident unfiltered and filtered
liquid within assembly **1110** when operated in the reverse direction is the same as that disclosed for filter assembly **210** when operated in the reverse direction, with the noted exception that in filter assembly **1110,** port **1124** is reassigned as a downstream recovery port (providing comparable functionality to port **226** reassigned as a downstream recovery port in filter assembly **210**) and port **1126** is not depicted. Accordingly, the procedure disclosed for removing filtered and unfiltered liquid from filter assembly **210** when operated in a reverse direction is incorporated here by reference with respect to filter assembly **1110.**

Referring now to FIG. 18, another multi-round filter assembly is shown with identical features to the embodiment shown in FIG. 15 except the aspiration tubes designated **1360** in filter assembly **1310** extend from their point of entry at a bottom end of a filter shell wall **1312** into filter cores **1332** and extend upwardly toward, and in close proximity to, a top end of filter elements **1330.** These aspiration tubes place the point of gas introduction at a higher point in filter cores **1332** than their counterpart, relatively short aspiration tubes **1160** in filter assembly **1110.** This configuration may improve the efficiency of liquid flow out of filter assembly **1310** by more advantageously introducing gas into the filter assembly at a location less likely to interfere with the flow of liquid out through core **1332** and outlet **1320.**

The function and operation of filter assembly **1310** is essentially the same as described and disclosed for filter assembly **1110.** The description of the construction of filter assembly **1110** also corresponds to the construction of filter assembly **1310.** The disclosure of the construction, operation and function of filter assembly **1110** is thus incorporated here to describe the construction, operation and function of filter assembly **1310.** It should be noted that the reference character designations for components of filter assembly **1110** correspond to, and may be transferred to, character designations for components of filter assembly **1310** by removing the second digit "1" of each reference character and replacing it with a "3".

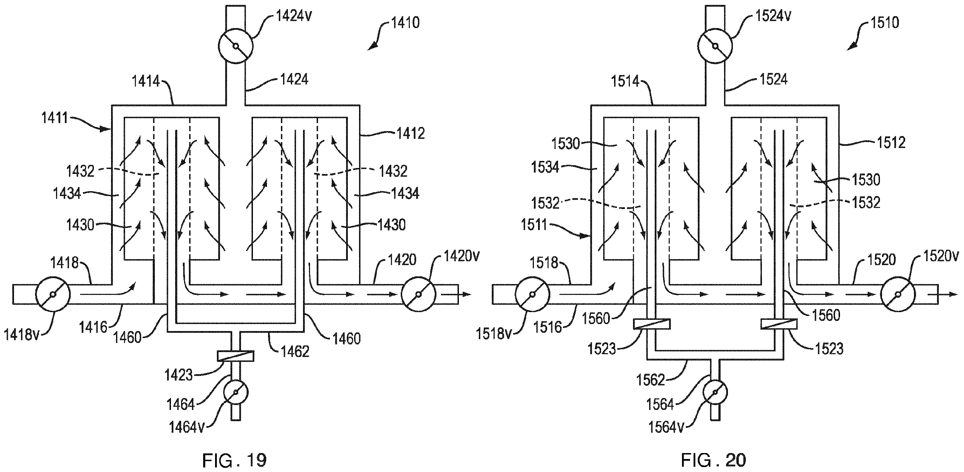

Referring now to FIG. 19, in another aspect of the disclosure, a multi-round filter assembly shown designated generally as **1410** includes aspiration tubes **1460** that share a common aspiration tube manifold **1462** and a single recovery filter **1423** secured to a manifold extension tube **1464** with an optional manifold extension tube valve **1464v** also secured to extension tube **1464.** The aspiration tubes **1160,** tube manifold **1462,** extension tube **1464,** recovery filter **1423** and optional tube valve **1464v** are all in fluid communication with cores **1432.** The remaining features of filter assembly **1410** are identical to the features shown in FIG. 18 for filter assembly **1310** and could alternatively be constructed with shorter aspiration tubes, similar to assembly **1110** as shown in FIG. 15. More particularly, a housing or shell designated generally as **1211** includes a shell wall **1412,** and upper end **1414** and a lower end **1416,** the combination of which define an internal chamber in which one or more filter elements **1430** are secured. Each enclosed filter element defines a downstream designated core **1432** in fluid communication with aspiration tubes **1160** and all the tubes connected to tubes **1160.** The function, operation and performance of filter assembly **1410** are the same as for filter assembly **1310.** The description of the function, operation and performance of filter assembly **1310** is thus incorporated here with respect to filter assembly **1410.**

Referring now to FIG. 20, in a still further aspect of the disclosure, a multi-round filter assembly shown designated generally as **1510** includes dedicated aspirating tubes **1560** and dedicated recovery filters **1523** secured to, and in fluid communication with, tubes **1560** that share a common recovery tube **1564** and optional recovery tube valve **1564v** secured to recovery tube **1564.** The remaining features of filter assembly **1510** are identical to the features shown in FIG. 18 for filter assembly **1310** and could alternatively be constructed with shorter aspiration tubes, similar to assembly **1110** as shown in FIG. 15. The function, operation and performance of filter assembly 1510 are the same as for filter assembly **1310.** The description of the function, operation and performance of filter assembly **1310** is thus incorporated here with respect to filter assembly **1510.**

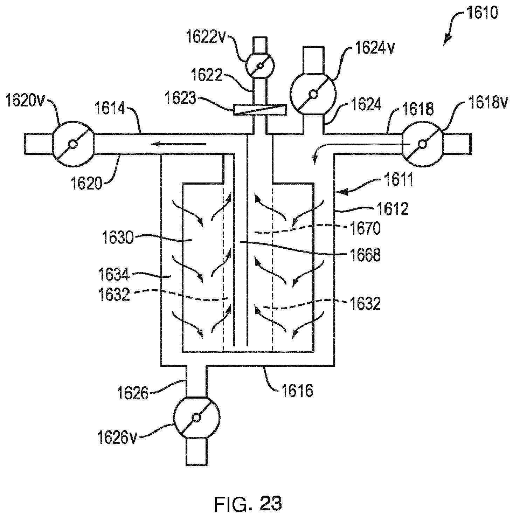

Referring now to FIG. 23, in a yet further aspect of the disclosure, a filter assembly shown designated generally as **1610** incorporates the same features as filter assembly **510** shown in FIG. 5 in a gravitationally opposite orientation and with the addition of an outlet dip tube **1668.** Outlet dip tube **1668** creates a partition within the downstream side of element **1630** and is in liquid communication with outlet port **1620** and core **1632.** The partition formed by outlet dip tube **1668** directs fluid introduced through recovery port **1622** down to the bottom of core **1632** before flowing out through dip tube **1668** and through outlet port **1620.** This flow path assures that air or gas introduced into recovery port **1622** clears all or substantially all liquid from the downstream core **1632** as opposed to taking the path of least resistance and flowing directly to outlet port **1620** as would be the case if embodiment **510** were to be used in its opposite gravitational orientation without the addition of a dip tube **568.** The forward function, operation and performance of filter assembly **1610** are the same as for filter assembly **510,** where each is operated in the gravitational orientation depicted in their respective FIGS. 5 and 23. The description of the forward function, operation and performance of filter assembly **510** is thus incorporated here with respect to filter assembly **1610.**

To function in the gravitational orientation illustrated in FIG. 23 when the flow is reversed through the assembly, a dip tube is connected to inlet port **1618** (reassigned as an outlet port) to assure that air or gas introduced through upstream vent port **1624** (reassigned as a recovery port and configured with a recovery filter similar to, or the same as, recovery filter **1623**) is forced to the bottom of volume **1634** (now a downstream volume) to allow for the recovery of filtered liquids. The use of the dip tube prevents the air or gas from exiting through reassigned outlet port **1618** without driving filtered liquids out of the downstream volume **1634.** The reverse function, operation and performance of filter assembly **1610** are the same as those for filter assembly **510,** where each is operated in the gravitational orientation depicted in FIGS. 5 and 23, respectively. The description of the reverse function, operation and performance of filter assembly **510** is thus incorporated here with respect to filter assembly **1610.**

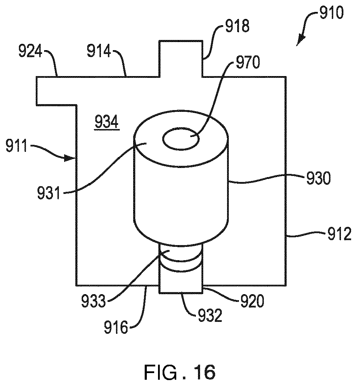

Referring now to FIG. 16, in another aspect of the disclosure, a single hybrid hydrophilic/hydrophobic filter material, or a dual layer filter material with one layer having hydrophobic characteristics and the other layer having hydrophilic characteristics is positioned in an upper end cap of a filter cartridge to provide a functional valve to permit the processing of liquids through a process filter and maintain a pressure gradient from an upstream side of a processing filter to a downstream side of the processing filter when a recovery function is performed after the main liquid processing function. Use of this "valve" eliminates the need for a recovery port, or similar feature. This filter may also be used as the recovery filter in the other embodiments disclosed herein, which in some applications may eliminate the need for a valve in the other embodiments.

For purposes of clarity and illustration, but not limitation, as used in the description of embodiments incorporating a hydrophilic/hydrophobic valve, the terms hydrophilic, hydrophobic, and liquid are used to describe the function and design of a filter assembly apparatus and method for liquid recovery. A liquid or process liquid is defined to be a process liquid that will spontaneously wet-out one type of filter material and not another. A hydrophilic filter material is defined as a filter material that will spontaneously wet-out in the process liquid. A hydrophobic filter material is defined as a filter material that will not spontaneously wet-out in the process liquid.

In certain applications, such as the filtration of alcohols or low-polarity liquids, a filter material with hydrophobic properties could be used in place of the hydrophilic filter material, since many of these liquids will spontaneously wet-out a hydrophobic filter material as is well known in the art. In such a case, use of a filter material with oleophobic, super-hydrophobic, or other surface properties may be required to be used in place of the hydrophobic filter material in order to prevent wetting of the filter material in this position by the process liquid. Accordingly, though hydrophilic and hydrophobic filtration materials and layers are described throughout the disclosure, the use of filter materials and layers with other surface properties (such as oleophobicity and super-hydrophobicity as disclosed above) to provide the desired selectivity whereas one filtration material spontaneously wets out in a liquid and one filtration material does not is within the contemplation and scope of the disclosure.

As shown in FIG. 16, a filter assembly shown designated generally as **910,** includes a housing or shell **911** dimensioned to enclose a filter cartridge **930.** An inlet **918,** outlet **920** and an upstream vent **924** extend from housing **911.** Inlet **918** extends from an upper inlet end **914** and may be aligned with the longitudinal axis of the enclosed filter cartridge **930** or may be oriented away from the longitudinal axis to accommodate any spatial requirements. Inlet **918** is in liquid communication with an upstream internal volume 934 of filter assembly **910,** as defined by shell **911** and an upstream designated surface of filter element **930.** Outlet **920** extends from a lower outlet end **916** of the filter assembly **910** and is in liquid communication with a core **932** of filter cartridge **930.** Upstream vent **924** extends laterally or radially from an upper end of filter housing **911** and may be oriented at different angles to accommodate spatial needs.

Each port may have an optional dedicated valve to open and close the ports. If present, valve **918v** is attached to inlet **918,** valve **920v** is attached to outlet **920** and valve **924v** is attached to upstream vent port **924.** Multiple combinations of passages and ports with or without valves are within the contemplation and scope of the disclosure. It should be understood that in assembly **910,** ends **914** and **916** can be integral to shell wall **912** or can be removable to permit extraction and replacement of the enclosed filter cartridge **930.** In the configuration shown, the two ends **914** and **916** are shown integral to shell wall **910** by way of illustration and not limitation, and the integral versus removable nature of ends **914** and **916** and filter cartridge **930** as well as the methods used to seal the assembly (including the seal of cartridge filter **930**) will depend upon the intended use and operating environment as well as the configuration of the filter element installed therein. Methods used to seal the assemblies of other embodiments disclosed herein may be used also to seal the components of filter assembly **910.**

To permit the recovery of liquid held up within filter assembly **910** without a dedicated recovery port, a valve filter **970** is used to perform a dual filter and valve function. Valve filter **970** may be a combination hydrophobic/hydrophilic filter material (including a filter material having either a sole hydrophilic or a sole hydrophobic property with a surface modified to have the opposite property), a hydrophobic/hydrophilic dual layer filter material and any combinations thereof. Valve filter **970** is secured in an upper end cap **931** of filter cartridge **930** and represents one way to eliminate the need for a recovery port such as those disclosed herein. A filtration material with only hydrophobic functionality may be used in the locations disclosed for valve filter **970** to permit contaminant-free recovery of liquid within the downstream portions of a filter assembly as well as downstream lines, etc. However, for embodiments that have the valve function disclosed in detail below that permits the additional recovery of upstream unfiltered fluid, use of filtration material with only hydrophobic functionality cannot be used as explained and disclosed in more detail below.

With respect to the use of a filter material at location **970** that has only a hydrophobic functionality, it should be understood that although such a filter material is suitable to perform the downstream recovery process, as disclosed in detail herein, for many of the aspects and embodiments of the liquid recovery assemblies, it will not function as a valve to maintain a pressure gradient from an upstream side **934** of processing filter **930** to a downstream side of the processing filter **930** when a recovery function is performed after the main liquid processing function. This gradient is required in order to force unfiltered liquids in upstream side **934** to the downstream side prior to initiating recovery of the filtered liquids in the downstream side of the assembly.

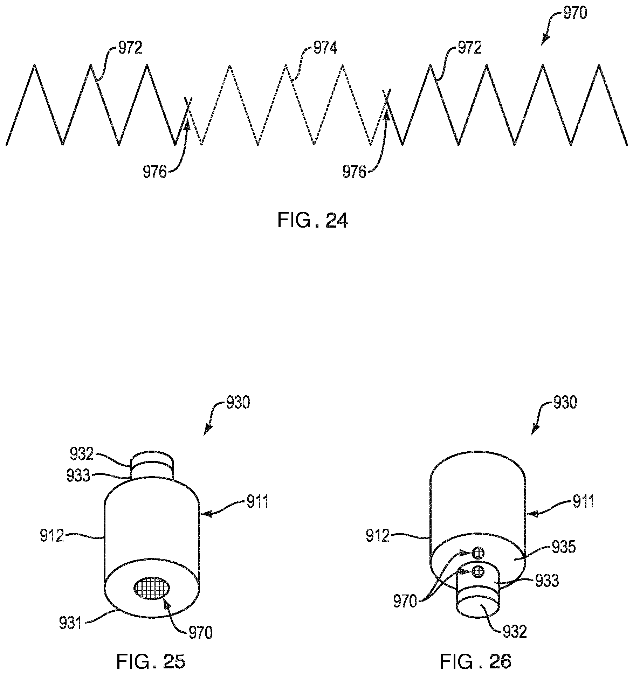

As shown in FIGS. 16, 25 and 26, filter material used at the location of valve filter **970**--whether a hydrophobic filtration material or one of the dual-function filtration material embodiments--may be positioned in a variety of different locations on filter cartridge **930** including end cap **931,** end cap **935** and/or an outlet port receiving segment **933** and perform the same functions described and disclosed herein with limited modification to the disclosed recovery methods. The embodiments disclosed in FIGS. 16, 25 and 26 may be used in combination with other features described within this disclosure to improve functionality and/or efficiency, e.g., dip tube **1668** shown in FIG. 23 in combination with the valve filter **970** location shown in FIG. 26). The hydrophilic layer or portion of valve filter **970** is positioned in direct contact with the downstream side of filter cartridge **930.** This permits the hydrophilic component to be wetted during the main liquid processing procedure, but will not permit bulk flow through valve filter **970,** as the liquid cannot pass through the hydrophobic component at pressures below the water intrusion pressure (or liquid intrusion pressure). It should be understood, that while use of the valve filter in this orientation provides advantages (such as reducing the likely hood of a liquid-lock on the hydrophobic filter material) it is possible and may even be advantageous to orient the valve filter in the reverse direction in some cases and that all orientations are within the contemplation and scope of the disclosure.

By including an appropriately selected hydrophobic filter material, layer, or surface modified hydrophobic layer, the filter material or layer prevents the bulk migration of liquids from the upstream side through filter cartridge end cap **931** and/or end cap **935** and/or an outlet port receiving segment **933** and concurrently maintains a porous and sterile (or otherwise contamination-preventing) barrier between the upstream and downstream sides of filter cartridge **930.** By including an appropriately selected hydrophilic filter material or layer that becomes wetted in use, the filter material or layer prevents the bulk migration of air or gas from the upstream side of cartridge **930** through the filter cartridge end cap **931** and/or end cap 935 and/or an outlet port receiving segment **933** at pressures below the bubble point of the selected filtration material or layer. During the unfiltered liquid recovery function, this enables the filter assembly to maintain a relatively low pressure on the downstream side of processing filter cartridge **930** and a relatively higher pressure on the upstream side of cartridge **930** to drive liquids held upstream of filter cartridge **930** into the downstream portion of filter assembly **910** through the processing filter material so long as the pressure differential between the upstream and downstream sides of cartridge **930** does not exceed the bubble point of the hydrophilic filter material or layer.

During the main liquid processing function, upstream vent valve **924v** is maintained in a closed position, but may be opened periodically or even continuously to evacuate gas or air from the upstream side of cartridge **930.** To ensure proper functioning, the hydrophobic component of filter valve **970** is selected to have a liquid intrusion pressure that exceeds the pressure in the upstream side of filter cartridge **930** during the main liquid processing procedure, for example to accommodate processing conditions from about 1 to about 2 psi up to about 20 to about 30 psi depending on the system constraints and filtration processing conditions. Intrusion pressure is selected by adjusting the pore size and/or surface properties (such as surface energy) of the hydrophobic filter material.

Filtration materials constructed with Polytetrafluoroethylene (PTFE), Polyvinylidene fluoride (PVDF), and Polyethylene with naturally occurring low surface energies as well as filtration materials (including those naturally or typically modified to become hydrophilic) that have been modified to achieve low surface energies are known to resist the flow of aqueous liquids (with sufficiently high surface tensions) and therefore will exhibit an intrusion pressure for such liquids. The value of the intrusion pressure is further dependent on the pore size of the filtration media. In the case of membranes constructed from PTFE, PVDF, and Polyethylene, water intrusion pressures exceeding 30 psi are typical for membranes of 0.2 µm pore size ratings and below.

Once the main processing function is performed to recover the resident filtered liquids (resident in filter core **932** and other downstream locations), and unfiltered liquids in the upstream internal volume **934,** pressurized gas is introduced via inlet **918,** or vent **924** via a peristaltic pump, compressed gas source, or like device. It should be understood that the valve associated with the port to which the pump or compressed gas is attached will be open while the other upstream port valve(s) will be closed so as to permit the creation of a pressure gradient from the upstream side of filter cartridge **930** to the downstream side. Since the hydrophobic component of valve filter **970** will freely permit the passage of gas, it is the hydrophilic portion or layer of valve filter **970** that will prevent gas from passing from the upstream side of filter cartridge **930** to the downstream side via valve filter **970** until the bubble point of the hydrophilic component of valve filter **970** is exceeded. Thus, a pore size for the hydrophilic component can be selected to achieve the desired bubble point as is well known in the art (or cracking pressure of the valve filter).

Filtration materials constructed with hydrophilized Polyethersulfone, Nylon, Cellulose acetate, Cellulose nitrate, hydrophilized Polyvinylidene Fluoride (PVDF), Polycarbonate, as well as others well known in the art with pore sizes greater than or equal to that of the processing filtration material pore size (dependent also on the material properties and morphology) will have bubble points in a range that lower the gas pressure required to bypass filter cartridge **930** by way of valve filter **970** in comparison to the gas pressure required to bypass the processing filtration material itself. The surface energy of the membrane is chosen such that it is spontaneously wetted by the processing liquid and will depend on the material chosen as well as the membrane manufacture or modification. Selecting a hydrophilic filtration material with the appropriate bubble point ensures a positive pressure gradient from the upstream to the downstream side to facilitate the forcing of unfiltered liquids in upstream internal volume **934** into the downstream side as filtered liquid.

To evacuate the filtered liquids remaining in core **932,** the gas pressure is increased to exceed the bubble point pressure of the hydrophilic component of valve filter **970.** This causes gas to flow through valve filter **970** to force filtered liquids in core **932** into outlet **920** and ultimately out of the filter assembly (clearing downstream lines, if present) with the added assistance of gravity should outlet **920** be oriented at a gravitationally lower end of the filter cartridge. It should be understood the orientation of the filter cartridge can be reversed with the inlet end positioned lower than the outlet end, or any rotation of the filter assembly between the two extreme positions to accommodate any spatial needs in assemblies to which the filter assembly is attached. In some orientations, it may be necessary or advantageous to implement additional features described within this disclosure to improve functionality and/or efficiency (e.g. the dip tube **1668** feature shown in FIG. 23 in combination with the valve filter **970** location shown in FIG. 26).

It should be further understood that the functions of the various ports can be reversed wherein outlet **920** is reassigned as an inlet port, inlet port **918** is reassigned as an outlet port, core **932** is reassigned as an upstream internal volume and upstream internal volume **934** is reassigned as the downstream side. The orientation of valve filter **970** must be reversed such that the hydrophilic filter material layer or side of valve filter **970** is positioned in direct contact with the downstream side of filter cartridge **930,** now volume **934.** This will permit the hydrophilic component to be wetted during the main liquid processing procedure, but will not permit bulk flow through valve filter **970** as the liquids cannot pass through the hydrophobic component. With this orientation, the valve filter **970** will still perform the intended function.

As previously stated, valve filter **970** may be constructed in a variety of configurations including a hydrophobic material with one side or layer modified to be hydrophilic, a hydrophilic material with one side or layer modified to be hydrophobic, or dual or multi-layer filter materials or filter materials with layers dedicated hydrophobic or hydrophilic. The configurations may also take on various alternatives such as a pleated configuration shown in FIG. 24, with a pleated hydrophobic or combination hydrophobic/hydrophilic filter material, hydrophobic/hydrophilic dual layer filter material, or hydrophobic/hydrophilic filter material portion **974** sandwiched between two hydrophilic portions **972** joined as seams **976.** Section **972** and **974** can be sealed by many methods well known in the art, including thermal sealing, ultrasonic thermal sealing, adhesive bonding, thermal melt sealing, solvent bonding and combinations thereof.

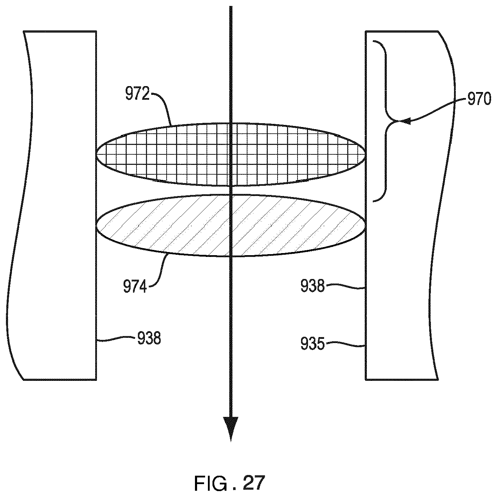

Referring now to FIG. 27, in another aspect of the disclosure, a multi-layer hydrophilic/hydrophobic filter subassembly is shown designated generally as **970.** In this multi-layer embodiment, subassembly **970** includes a hydrophobic layer **972** and a hydrophilic layer **974** arranged in a layer configuration wherein the plane occupied by the layers is substantially orthogonal to the direction of gas flow shown in FIG. 27 via the arrow in bold. It should be understood the orientation of subassembly **970** relative to the direction of gas/liquid flow can be modified to accommodate different applications and to address any spatial requirements. The channel defined as **938** is formed or provided according to the specific embodiment in which the valve filter is incorporated. As illustratively shown in FIG. 25, channel **938** is formed as a bore through end cap **931** that receives valve filter subassembly **970** and directs the flow through valve membrane **970** in the general direction depicted by the arrow in FIG. 27.

It should be understood that in some applications of the valve membrane, the layered arrangement shown in FIG. 27 can be reversed if , for example, the valve were to function as a liquid filter valve rather than a gas valve as may be required in some applications. To function as a liquid filter valve (which restricts the flow of liquid up until a cracking pressure defined now by the hydrophobic filter material's intrusion pressure), the valve could function independent of the orientation of the hydrophilic/hydrophobic filtration media arrangement so long as the hydrophilic filtration material were chosen to provide the desired filtration efficiency and the hydrophobic filtration material were chosen to provide the appropriate cracking pressure based on the liquid intrusion pressure for the liquid intruding into the pores of the hydrophobic filtration material.

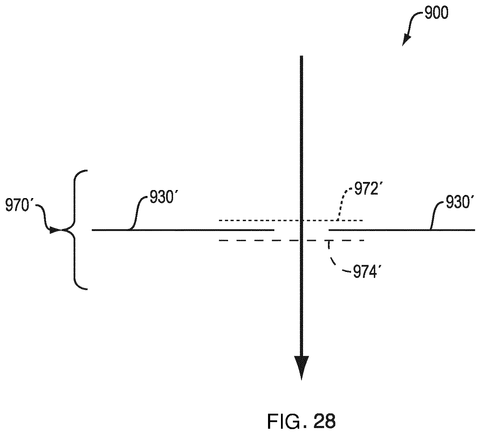

Referring now to FIG. 28, in a further aspect of the disclosure, a combined hydrophilic/hydrophobic valve and processing filter assembly shown designated generally as **900** includes a processing filter material **930'** having a gap, bore, slit, or other portal configuration that allows fluid to bypass the processing filter formed therein. A hydrophobic filter material **972'** is placed over one side of filter material **930'** and a hydrophilic filter material **974'** is placed over the other side of filter material **930'** to form a hydrophilic/hydrophobic valve within the processing filter material field. Filtration materials **972'** and **974'** are secured to processing filter **970'** via thermal or sonic bonding or by other methods for securing filtration materials as disclosed herein or by other methods for securing filtration materials as is known in the art. It should be known that although FIG. 28 depicts hydrophobic filter membrane **972'** placed over one side of filter material **930'** and hydrophilic filter membrane **974'** placed over the other side of filter material **930',** other configurations are possible in which both materials are bonded to one or the other side of filter material **930'.** In the configuration shown, the valve functions to permit the passage of gases once the bubble point of the wetted hydrophilic filtration material is exceeded.

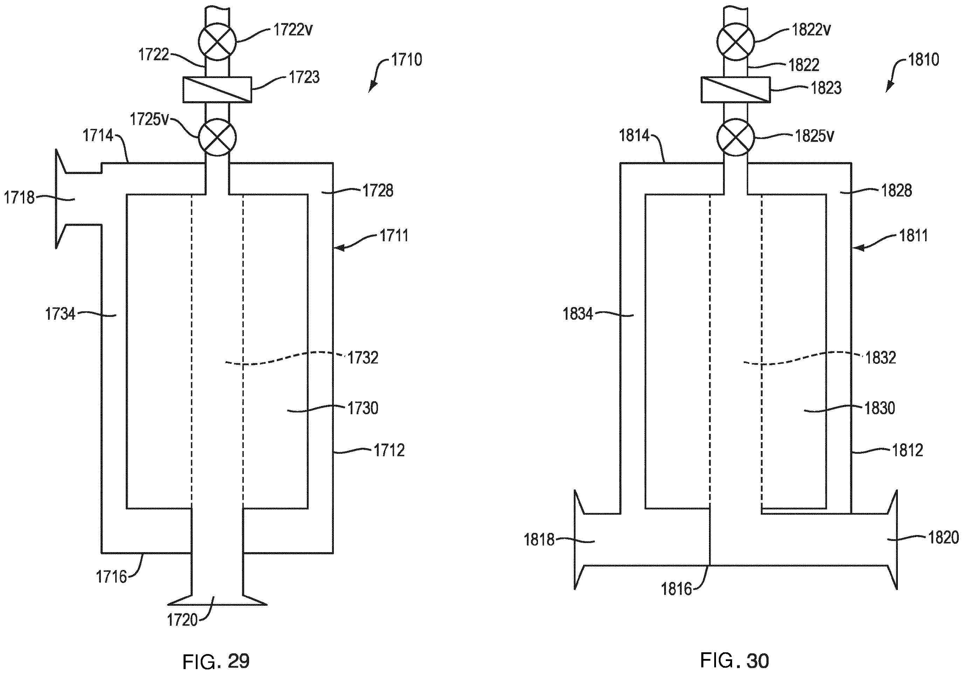

Referring now to FIG. 29, in another aspect of the disclosure, a liquid recovery filter assembly shown generally as **1710** includes many of the components and elements disclosed above for filter assembly **410,** i.e., a filter housing or shell designated generally as **1711** having a shell wall **1712** and mutually opposed first or upper and second or lower ends designated **1714** and **1716,** respectively, and defining an internal volume **1728.** As shown in this illustrative embodiment, a toroidal filter element **1730** is secured therein. An upstream designated surface of filter element **1730** and surrounding housing **1711** define an upstream volume **1734** therebetween. Filter element **1730** has a hollow core **1732.** Although not shown, an optional upstream vent port and an optional associated upstream vent port valve (such as that shown in FIG. 4) may be included and extend from upper end **1714.** Also not shown, but also optional is an upstream or inlet side drain port and an associated drain port valve (such as that shown in FIG. 4) that, if included, extends from lower end **1716.**

An upstream or inlet port **1718** of filter assembly **1710** extends radially in close proximity to, or from, upper end **1714.** A downstream or outlet port **1720** extends downwardly from lower end **1716** and substantially coaxially from filter housing **1711** although the coaxial orientation can be displaced to accommodate specific spatial needs. A recovery port **1722** extends from upper end **1714** and is in fluid communication with filter core **1732.**

A recovery filter **1723** is secured to port **1722** between the two ends of the port and is in fluid communication with a lumen formed by the port. Recovery filter **1723** should be selected from among the same construction material options and the same property/characteristic options disclosed for recovery filter **223.** A recovery port valve **1722v** is secured to port **1722** on a side of recovery filter **1723** distal from upper end **1714.** Valve **1722v** is maintained in a closed position during normal filtering operations and is opened to permit the introduction of pressurized air or gas to recover filtered liquids resident in the filter core (or to function as a vent). An optional recovery filter protection valve **1725v** may be secured to vent port **1722** between upper end **1714** and recovery filter **1723.** Valve **1725v** is maintained in a closed position during normal filtering operations to protect recovery filter **1723** from being wetted by the liquids flowing through filter assembly **1710.** Similar valves may be incorporated into the other embodiments disclosed herein in order to protect recovery filters from being wetted by the liquids flowing through the filter assemblies. Multiple combinations of passages and ports with or without valves are within the contemplation and scope of the disclosure.

In one illustrative embodiment, port **1722** may be constructed from tubing made from silicone, thermoplastic elastomer, or other elastomeric or polymeric materials or any other materials commonly used to form tubing, as is well known in the art. In this embodiment, the tubing may be connected to upper end **1714** and core **1732** via thermal welding, fitting connection (barb, threading, etc.), or by any other means known in the art. Valves **1722v** and **1725v** and recovery filter **1723** also may be attached to port **1732** by way of thermal welding, fitting connection (barb, threading, etc.), or by any other means known in the art. The valves can be configured in accordance with any of the constructions disclosed herein, or may be constructed in accordance with any other construction known in the art. It should be understood that the valves may be structured as pinch valves or clamps attached externally to the tubing as known in the art. Such pinch valves or clamps perform the intended function to compress the tubing such that flow is partially or completely restricted.

Regarding operation of filter assembly **1710,** the liquid flow paths through filter assembly **1710** during normal filtering operations and during the drainage or recovery of filtered liquids from filter assembly **1710** are essentially the same as those disclosed above for filter assembly **410.** Recovery port valve **1722v,** and to the extent incorporated into the filter assembly, any upstream vent port valve and any upstream drain port valve are closed during normal filtering operations. To the extent an upstream inlet valve and/or a downstream outlet valve are incorporated into the filter assembly to control flow into inlet **1718** and flow out of outlet **1720,** respectively, those optional valves are maintained in an open position to permit flow through the filter assembly **1710.**

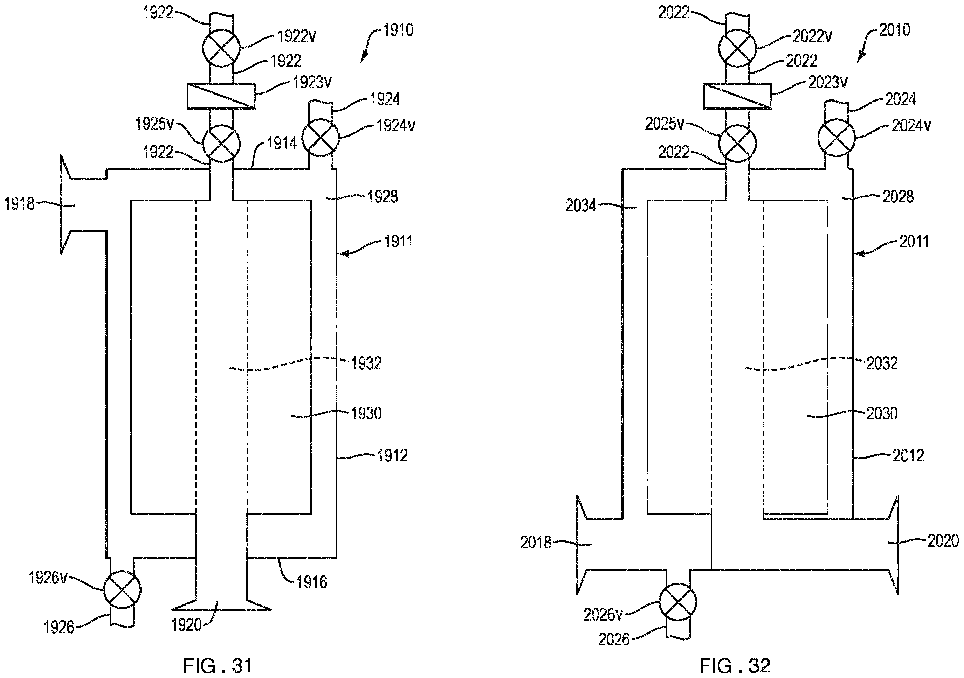

Referring now to FIGS. 29 and 31, liquid recovery filter assemblies shown generally as **1710** and **1910** include many of the same components and features; however, optional upstream vent port **1924** and associated optional valve **1924v** as well as optional upstream vent port **1926** and associated optional valve **1926v** shown in FIG. 31 for embodiment **1910** are not depicted in FIG. 29 for embodiment **1710.** As all accessory vent and drain ports are optional, the function of **1710** and **1910** are essentially the same, and the reference character designations for filter assembly **1710** correspond to, and may be transferred to, filter assembly **1910** by removing the second digit "7" of each reference character and replacing it with a "9".

During normal filtering and recovery operations, filter assemblies **1710** and **1910** are operated in the same manner as disclosed for filter assembly **410** and other similar assemblies. The positions of the valves present on filter assemblies **1710** and **1910** (open, closed, partially open) during normal filtering and recovery operations are identical to the corresponding valve positions of the corresponding valves of filter assembly **410** during normal filtering and recovery operations, e.g., upstream vent port valve **1724v** or **1924v,** if present, and upstream drain port valve **1726v** or **1926v,** if present, (corresponding to upstream vent port valve **424v** and upstream drain port valve **426v**) are commonly closed during the primary filtration function. As such, the disclosure regarding the operation of filter assembly **410** for normal (primary) filtering and recovery operations is incorporated here by reference.

The configuration of filter assemblies **1710** and **1910** may also perform the intended liquid filter and recovery functions when the liquid flow is reversed through the assembly. It should be understood that to operate filter assemblies **1710** and **1910** in the reverse flow direction, the filter assemblies may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed herein) is used.

In one possible reverse functional configuration, the assembly is reoriented such that outlet port **1720** or **1920,** reassigned as an inlet port, is located at the gravitational top or high position. Optional upstream drain port **1726** or **1926** and, if present, optional drain port valve **1726v** or **1926v,** are reassigned as a downstream recovery port and optional downstream recovery port valve, respectively, and will incorporate an inline recovery filter similar to, or the same as, recovery filter **1723** or **1923.** Recovery port **1722** or **1922** and, if present, optional recovery port valve **1726v** or **1926v** are reassigned as an upstream drain port and optional reassigned upstream drain port valve, respectively, and often maintained in a closed condition during the main filtering operation.

The use of a recovery filter **1723** or **1923** on port **1722** or **1922** is optional in this functional configuration and may need to be removed in certain cases, as disclosed above. When used in this manner, liquid introduced into port **1720** or **1920** (with valve **1720v** or **1920v** open, if present), flows into core **1732** or **1932** (or the lumen of the filter element if constructed from, for example, hollow fiber or tubular material), and radially outwardly through filter element **1730** or **1930** into internal volume **1734** or **1934** (now a downstream volume) and out of the filter assembly through port **1718** or **1918** as processed liquid. In this functional configuration, the remaining port(s) (port **1724** or **1924** in the embodiment shown in FIG. 31, but not in FIG. 29) is/are maintained in a closed condition (by, for example, closing valve **1724v** or **1924v** in the embodiment shown in FIG. 31, but not shown in FIG. 29), or could be eliminated from the embodiment, as use of these ports risk contamination of the downstream filtered liquid when not coupled with a recovery filter.

The procedure to remove the resident unfiltered and filtered
liquid within assembly **1710** or **1910** when operated in the reverse direction is the same as that disclosed for filter assembly **410** when operated in the reverse direction. Accordingly, the procedure disclosed for removing filtered and unfiltered liquid from filter assembly **410** when operated in a reverse direction is incorporated here by reference with respect to filter assembly **1710** or **1910.**

Referring now to FIG. 30, in another aspect of the disclosure, a liquid recovery filter assembly shown generally as **1810** includes many of the components and elements disclosed above for filter assembly **1710,** with the primary difference being the orientation of the inlet port and the outlet port. In filter assembly **1710,** the ports are arranged in a "T" configuration with inlet port **1818** occupying substantially the same plane as outlet port **1820,** similar to the embodiment **510** of FIG. 5. In this configuration, inlet port **1818** extends radially outwardly from a bottom end of filter assembly **1810** while outlet port **1820** extends radially outwardly from the bottom end in a direction substantially opposite the direction of inlet port **1818.** It should be understood that the relative orientation and direction of the two ports can be modified to extend radially from a variety of different orientations to accommodate any particular application or spatial requirement.

A filter housing or shell **1811** having a shell wall **1812** with mutually opposed first or upper and second or lower ends designated **1814** and **1816,** respectively, collectively define an internal volume **1828.** A toroidal filter element **1830** is secured therein. An upstream designated surface of filter element **1830** and surrounding housing **1811** define an upstream or inlet volume **1834** therebetween. Filter element **1830** has a hollow core **1832.** Although not shown, an upstream vent port and an optional associated upstream vent port valve (such as that shown in FIG. 5) may be included and extend from upper end **1814.** Also not shown, but also optional is an upstream drain port and an optional associated drain valve (such as that shown in FIG. 5) that, if included, extends from the lower or downstream end **1816.**

A recovery port **1822** extends from upper end **1814** and is in liquid communication with filter core **1832.** A recovery filter **1823** is secured to port **1822** between the two ends of the port and is in fluid communication with a lumen formed by the port. Recovery filter **1823** should be selected from among the same construction material options and the same property/characteristic options disclosed for recovery filter **223.** A recovery port valve **1822v** is secured to port **1822** on a side of recovery filter **1823** distal from upper end **1814.** Valve **1822v** is maintained in a closed position during normal filtering operations and is opened to permit the introduction of pressurized gas to recover filtered liquids resident in the filter core. An optional recovery filter protection valve **1825v** may be secured to recovery port **1822** between upper end **1814** and recovery filter **1823.** Valve **1825v** is maintained in a closed position during normal filtering operations to protect recovery filter **1823** from being wetted by the liquids flowing through filter assembly **1810.** Similar valves may be incorporated into the other embodiments disclosed herein in order to protect recovery filters from being wetted by the liquids flowing through the filter assemblies. Multiple combinations of passages and ports with or without valves are within the contemplation and scope of the disclosure.

The liquid flow paths through filter assembly **1810** during normal filtering operations and during the drainage or recovery of filtered liquids in filter assembly **1810** are essentially the same as those disclosed above for filter assembly **510.** Recovery port valve **1822v,** and to the extent incorporated into the filter assembly, any upstream vent port valve and any upstream drain port valve are closed during normal filtering operations. To the extent an inlet valve and/or an outlet valve are incorporated into the filter assembly to control flow into inlet **1818** and flow out of outlet **1820,** respectively, those optional valves are maintained in an open position to permit flow through filter assembly **1810.**

Referring now to FIGS. 30 and 32, liquid recovery filter assemblies shown generally as **1810** and **2010** include many of the same components and features, however, optional upstream vent port **1824** and associated optional valve **1824v** as well as optional upstream vent port **1826** and associated optional valve **1826v** shown in FIG. 30 for embodiment **1810** are not depicted in FIG. 32 for embodiment **1810.** As all accessory vent and drain ports are optional, the function of **1810** and **2010** are essentially the same, and the reference character designations for filter assembly **1810** correspond to, and may be transferred to, filter assembly **2010** by removing the first and second digits "18" of each reference character and replacing them with a "20".

During normal filtering and recovery operations, filter assemblies **1810** and **2010** is operated in the same manner as disclosed for filter assembly **510.** The positions of the valves present on filter assembly **1810** and **2010** (open, closed, partially open) during normal filtering and recovery operations are identical to the corresponding valve positions of the corresponding valves of filter assembly **510** during normal filtering and recovery operations, e.g., upstream vent port valve **1824v** and **2024v,** and upstream drain port valve **1826v** and **2026v** (corresponding to upstream vent port valve **524v** and upstream drain port valve **526v**) are commonly closed during the primary filtration function. As such, the disclosure regarding the operation of filter assembly **510** for normal (primary) filtering and recovery operations is incorporated here by reference.

The configuration of filter assembly **1810** and **2010** may also perform the intended liquid filter and recovery functions when the liquid flow is reversed through the assembly. It should be understood that to operate filter assembly **1810** and **2010** in the reverse flow direction, the filter assembly may have to be spatially reoriented gravitationally to have reassigned ports positioned in locations to optimize performance with respect to their reassigned functions. For example, a port reassigned as an outlet port should be oriented gravitationally in a low or down position relative to the body of the filter assembly. This requirement may be eliminated in some embodiments if a dip tube (disclosed hereinbelow) is used.

In one possible reverse functional configuration, again, similar to that disclosed for **510,** the assembly may be maintained in the orientation shown schematically in FIGS. 30 and 32, such that outlet port **1820** or **2020,** reassigned as an inlet port, remains located at the gravitational bottom or low position. It should be noted that reorientation is not necessary for this functional configuration compared to the orientation shown as the reassigned outlet port is located at the gravitational bottom or low position in the orientation shown schematically in FIGS. 30 and 32. Upstream vent port **1824** or **2024** is reassigned as a downstream recovery port and will incorporate an inline recovery filter and optional associated recovery filter valves and recovery filter protection valves similar to, or the same as, recovery filter **1823** or **2023** and optional associated valves. Recovery port **1822** or **2022** is reassigned as an upstream vent port and often maintained in a closed condition during the main filtering operation.

The use of a recovery filter **1823** or **2023** on port **1822** or **2022** is optional in this functional configuration. When used in this manner, liquid introduced into port **1820** or **2020** (with valve **1820v** or **2020v** open, if present), flows into core **1832** or **2032** (or the lumen of the filter element if constructed from, for example, hollow fiber or tubular material), and radially outwardly through filter element **1830** or **2030** into internal volume **1834** or **2034** (now a downstream volume) and out of the filter assembly through port **1818** or **2018** as processed liquid. In this functional configuration, the remaining port(s), if present, (port **1826** or **2026** in the embodiment shown in FIG. 32 but not shown in FIG. 30) is/are maintained in a closed condition (by, for example, closing valve **1826v** or **2026v** in the embodiment shown in FIG. 32 but not shown in FIG. 30) or could be eliminated from the embodiment, as use of these ports risk contamination of the downstream filtered liquid when not coupled with a recovery filter. Once the intended volume of liquid is filtered through assembly **1810** or **2010,** valve **1820v** or **2020v** may be closed to cease flow.

The procedure to remove the resident unfiltered and filtered
liquid within assembly **1810** or **2010** when operated in the reverse direction is the same as that disclosed for filter assembly **510** when operated in the reverse direction. Accordingly, the procedure disclosed for removing filtered and unfiltered liquid from filter assembly **510** when operated in a reverse direction is incorporated here by reference with respect to filter assemblies **1810** or **2010.**

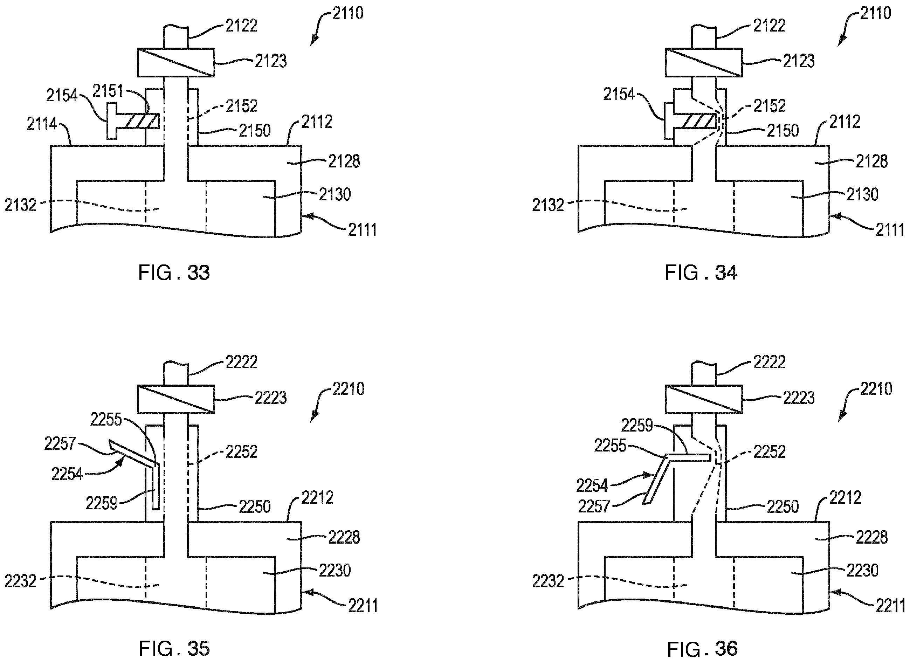

Referring now to FIGS. 33 and 34, in another aspect of the disclosure, a recovery filter protection valve assembly is incorporated into a liquid recovery filter assembly designated generally as **2110.** The recovery filter protection valve assembly shown on assembly **2110** is meant to be illustrative and not limiting with respect to recovery filter protection valve assemblies suitable for use in the disclosed filter assemblies. Filter assembly **2110** includes many of the same features as prior disclosed embodiments including a housing or shell **2111** having a shell wall **2112** with an upper end **2114** and a lower end (not shown) that in combination define an internal volume **2128.** A filter element **2130** having a downstream core **2132,** or other type of filter element, as disclosed herein, is secured in internal volume **2128** with any of the methods for securing filter elements disclosed herein. Filter assembly **2110** may include any or all of the upstream and/or downstream ports and optional associated valves disclosed with respect to other filter assembly embodiments disclosed herein.

Filter assembly **2110** also includes a recovery port **2122** that incorporates an in-line recovery filter protection valve body **2150** between recovery filter **2123** and core or downstream volume **2132.** A collapsible recovery filter protection valve tube **2152** is contained within valve body **2150** and defines the flow path through valve body **2150.** A recovery filter **2123** is secured in-line with port **2122** and is in fluid communication with filter core **2132** via port **2122** and tube **2152.** Recovery filter **2123** should be selected from among the same construction material options and the same property/characteristic options disclosed for recovery filter **223.**

Valve body **2150** extends upwardly from upper end **2114** and may terminate at any point between volume **2132** and recovery filter **2123.** Valve body **2150** defines a chamber to attach to port **2122** and to provide a surface to assist compression of tube **2152.** A bore **2151** is formed in a sidewall of body **2150** to receive a tube compression bolt or pin **2154.** Bolt **2154** may include threading with corresponding mated threading formed on the surface of bore **2151.** It should be understood that the method used to advance and retract bolt **2154** may be accomplished by other methods such as bolt treading and a retainer clip secured inside body **2150** with a bore dimensioned to engage the threading of bolt **2154.** Tube **2152** is compressed by torqueing bolt **2154** onto a sidewall of tube **2152** so as to compress the sleeve against the inner wall of body **2150** as shown in FIG. 34. To reopen the tube lumen, bolt **2154** is backed off tube **2152** as shown in FIG. 33. An optional rigid, or otherwise protective material, not shown, may be included between bolt **2154** and tube **2152** to protect tube **2152** from damage and wear caused by contact or interaction with bolt **2154.** The cylindrical edge of the terminus of bolt **2154** may be radiused to prevent the edge from tearing into tube **2152** when compressed against the tube.

A first or lower end of recovery port **2122** extends from upper end **2114** and is in fluid communication with core **2132** of filter element **2130.** Filter element **2130** is secured in housing **2111** by any of the means disclosed herein including mated surfaces with O-rings, thermal or sonic welding, adhesive and the like. The same methods to join the components together may be used if a filter cartridge is secured in shell housing **2111.** A second or upper end of the recovery port **2122** extends above or beyond a top surface of body **2150.** Recovery filter **2123** is secured within a top end of recovery port **2122** and is in fluid communication with a lumen of recovery port **2122.** It should be understood that valve body **2150** may be dimensioned to house recovery filter **2123** within its borders and may be used to eliminate the need for a capsule to enclose recovery filter **2123.** It also should be understood that alternative valve designs or features used to prevent liquid or other fluid contact with recovery filter **2123,** including clamps or valves that do not require a valve body, are within the contemplation and scope of the disclosure.

Tube **2152** may be secured to port **2122** by dimensioning an internal cross-sectional diameter of tube **2152** to be greater than the outer cross-sectional diameter of port **2122.** Tube **2152** is then slipped onto the outer wall of port **2122** and secured by the elasticity of the material used to construct tube **2152** that constricts onto tube **2122.** Barbs, adhesives, thermal and/or sonic bonding, other methods disclosed herein as well as any method known in the art for connecting fluid pathways may also be used. It should be understood that the dimensional orientation of the parts may be reversed whereby the outside cross-sectional diameter of tube **2152** is smaller than the inner cross-sectional diameter of port **2122.** In this configuration, tube **2152** is inserted into port **2122** and secured with adhesive, thermal and/or sonic bonding, crimping and the like as well as any method disclosed herein or known in the art for connecting tubular fluid pathways. The means to join the two tubular elements may include another tube (not shown) that functions as an internal or external coupling sleeve, or as an additional component inserted into or around an outer surface of port **2122** and tube **2152.**

The materials used to make tube **2152** may be chosen to be the same materials of construction used for the shell, end caps, ports of the filters disclosed herein and may include, but are not limited to, polypropylene, polyethylene, nylon, polyester, fluoropolymers, metals and metallic alloys, polymers, thermoplastic elastomers, etc. It is important to select materials that will not react to, or interact with, the materials intended to be introduced into the filter assembly.

Referring now to FIGS. 35 and 36, in yet another aspect of the disclosure, a liquid recovery filter assembly shown designated generally as **2210** includes essentially the same corresponding features of filter assembly **2110** except bolt **2154** is not present in this embodiment. To open and close tube **2252,** a lever control **2254** is used.

A recovery filter protection valve body **2250** is dimensioned to receive lever control **2254.** Lever control **2254** is secured to body **2250** via an axle (not shown) about which control **2254** can rotate from a closed position (tube compression position shown in FIG. 36) to an open position (tube open position shown in FIG. 35). Stops may be incorporated into body **2250** to limit the range of motion of lever control **2254.** A slot is formed in body **2250** to receive the axle and optional bearing used to secure lever control **2254** and to permit free rotation about the axle. A tube impinging segment **2259** is positioned inside body **2250.** A lever operating segment **2257** extends from the axle outside body **2250.** In an open position, tube impinging segment **2259** is either disengaged from tube **2252** or in registration against it, but not compressing the tube to an extent that would restrict flow through the lumen within tube **2252.** In a closed position, impinging segment **2259** is registered against tube **2252** and compressing it against an inner wall of post **2250** to close the lumen and prevent fluid and/or gas flow through the sleeve. An optional rigid, or otherwise protective material, not shown, may be included between impinging segment **2259** and tube **2252** to protect tube **2252** from damage and wear caused by contact with and impingement by **2259.** Any surface of impinging segment **2259** that contacts tube **2252** may be radiused to prevent tearing of the tube.

The orientation of impinging segment **2259** is determined by the operation and orientation of operating segment **2257.** In an open position, operating segment is in an "up" position as shown in FIG. 35. In a closed position, operating segment **2257** is in a "down" position shown in FIG. 36. It should be understood that the orientation of lever **2254** can be reversed on the axle whereby the operating segment is in a "down" position in the open position and in an "up" position in the closed position. Lever **2254** can be manually or automatically operating with a step motor and the like.

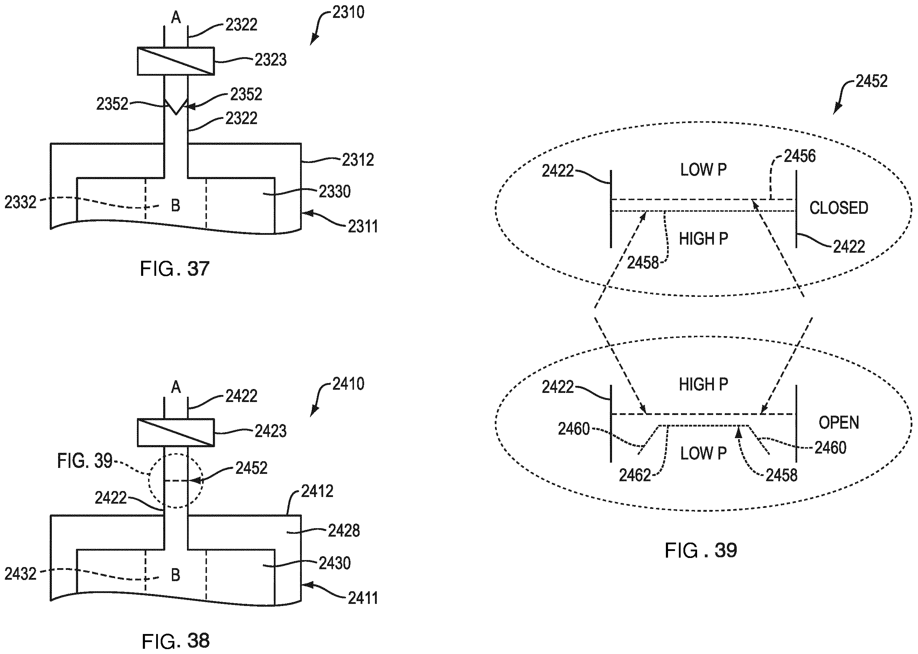

Referring now to FIG. 37, in a further aspect of the disclosure, a liquid recovery filter assembly shown designated generally as **2310** includes essentially the same corresponding features as most of the embodiments disclosed herein with the addition of a check valve **2352** secured in a downstream recovery port **2322** between a recovery filter **2323** (similar to, or the same as, recovery filter **223**) and a filter core or downstream volume **2332** rather than a conventional valve or the collapsible valves of filter assembly embodiments **2110** and **2210.** The check valve provides a means for limiting liquid and/or gas flow to one direction, into the core. This enables the filtered liquid to be recovered by introducing a gas through recovery port **2322** into recovery filter **2323** and into core **2332.** Check valve **2352** prevents fluids from flowing into filter **2323.**

The materials used to construct valve **2352** include natural and synthetic rubbers, elastomers, plastics, and other materials disclosed herein as well as other materials known in the art to construct one-way valves. As with other features of the disclosed embodiments, material selection should take into account the liquids and gases that will contact the valve.

Referring now to FIGS. 38 and 39, in a still further aspect of the disclosure, a liquid recovery filter assembly shown designated generally as **2410** includes a check valve **2452** to prevent flow between a filter element core **2432** and a recovery filter **2423** (similar to, or the same as, recovery filter **223**). Check valve **2452** includes an upper (closest to recovery filter **2423**) porous or otherwise non-contiguous layer **2456** secured in and fully integral with recovery port **2422** such that all fluid passing from filter **2423** to core **2432** must pass through the pores or openings in layer **2456.** A lower non-porous or otherwise flow-restrictive layer **2458** is secured to upper layer **2456** at one or more points such that it is held in position, but may be bent or angled away from layer **2458** if force is applied. In FIG. 39, it is shown that a center section of layer **2458** is secured to upper layer **2456,** while an outer annular (or other shape) segment **2460** of lower layer **2458** is free to rotate or bend away from upper layer **2456,** and is dimensioned to contact the inner wall of recovery port **2322** when flattened against upper layer **2456** so as to create a seal when in a closed position.

Operation of valve **2452** is determined by pressure gradient. During regular filtering operations with the processing filter, a pressure gradient is created with a higher pressure below the valve and a lower pressure above the valve as shown in FIG. 39. This pressure gradient causes segment **2460** to remain in a closed position and prevent liquids in the downstream side of the processing filter from gaining access to recovery filter **2423.**

Following the primary filtering operation, to recover filtered liquids remaining in the downstream side, pressurized gas is introduced into recovery port **2422** and flows through check valve **2452.** The addition of the pressurized gas reverses the pressure gradient to now have the higher pressure on the upper side of valve **2452.** This causes segment **2460** to rotate or bend downwardly so as to permit the gas to pass beyond valve **2452** and into downstream volume or core **2432.** Any sudden reversal of the pressure gradient will cause the segment **2460** to rotate or bend back up into a closed position and protect recovery filter **2423** from the liquids in the filter assembly.

Upper layer **2456** may be constructed from the same materials of construction used for the shell, end caps and ports of the filter assemblies disclosed herein and may include, but are not limited to, polypropylene, polyethylene, nylon, polyester, fluoropolymers, metals and metallic alloys, etc. Further, upper layer **2456** may be constructed as a recovery filter using the same materials and considerations disclosed for recovery filter **223.** If layer **2456** is constructed as a recovery filter with properties capable of ensuring the purity of fluids passing through layer **2456** are appropriate for contact with the filtered liquid, recovery filter **2423** can be eliminated from recovery port **2422.** Additional supportive layers or materials may be necessary to provide structural as well as fluid integrity to layer **2423,** if constructed as a recovery filter. Lower layer **2458** may be constructed from natural and synthetic rubbers, elastomers, plastics, and other materials disclosed herein as well as other materials known in the art to construct one-way valves. As with other embodiments, material selection should take into account the liquids and gases the materials will contact.

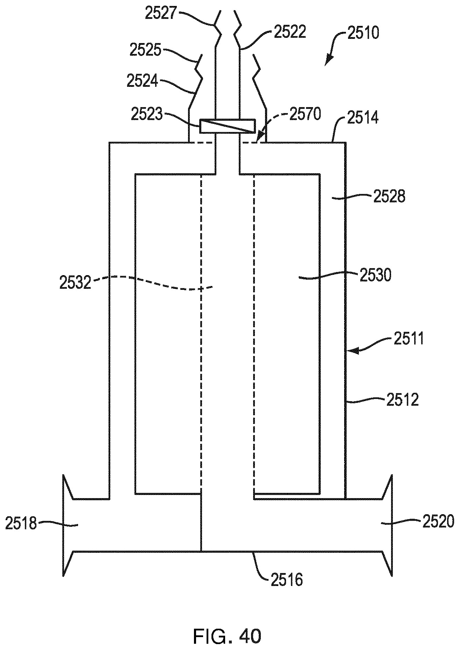

Referring now to FIG. 40, in yet another aspect of the disclosure, a liquid recovery filter assembly shown designated generally as **2510** includes an upstream vent port **2524** coaxially arranged with a downstream recovery port **2522.** This embodiment provides an additional means to reduce the overall size of the filter assembly when external spatial requirements require a more compact filter assembly design.

Filter assembly **2510** includes most of the features of the other filter assembly embodiments disclosed herein including a housing or shell **2511,** shell wall **2512,** internal volume **2528,** upper housing end **2514,** lower housing end **2516,** filter element **2530** secured in the housing, filter core **2532,** inlet port **2518,** outlet port **2520** and recovery filter **2523** (similar to, or the same as, recovery filter **223**), secured in line and in fluid communication with the lumen of downstream recovery port **2522.** It should be understood that although this embodiment is shown in the "T" configuration (inlet and outlet ports orientation), the coaxial upstream and downstream vent and recovery ports can be incorporated into any of the other filter assembly configurations disclosed herein.

As shown, filter assembly **2510** includes upstream vent port **2524** that extends from upper end **2514** and is dimensioned to enclose recovery filter **2523** and downstream recovery port **2522.** A distal end of port **2524** includes a barb **2525** to receive a hose/tube or other further assembly. Quick connects, sterile clamps and the like may also be secured to upstream vent port **2524.** In this configuration, vent port **2524** may be used to integrity test the filter assembly.

Downstream recovery port **2522** is connected to and/or in fluid communication with filter core **2532.** The method to connect port **2522** to core **2532** is the same as disclosed for other filter assembly embodiments disclosed herein. Port **2522** has a cross-sectional diameter smaller than the cross-sectional diameter of upstream vent port **2524** and is arranged in a substantially coaxial arrangement with a shared longitudinal axis. It should be understood that downstream recovery port **2522** may be offset so as to have an independent axis and remain contained within upstream vent port **2524.** An optional stabilizing ring **2570** may be secured to, or in close proximity to, upper end **2514** and to downstream recovery port **2522** to stabilize the port in the filter assembly. Ring **2570** is formed with slots or perforations to permit liquids and/or gases to pass between an upstream volume of the filter assembly and upstream vent port **2524.**

Recovery filter **2523** is secured to downstream recovery port **2522** within the inner wall of upstream vent port **2524.** An annular gap exists between the perimeter of filter **2523** and the inner wall of port **2524** to permit fluid and/or gas flow in the port. Alternatively, the capsule for recovery filter **2523** may be secured to the inner wall of upstream vent port **2524** at one or more points to add structural support. Gaps between the contact/connection points provide the pathways for fluid/gas flow through upstream vent port **2524.** A distal end of downstream recovery port 2522 includes a downstream vent barb **2527** to receive a hose/tube or other further assembly. Quick connects, sterile clamps and the like may also be secured to downstream recovery port **2522.**

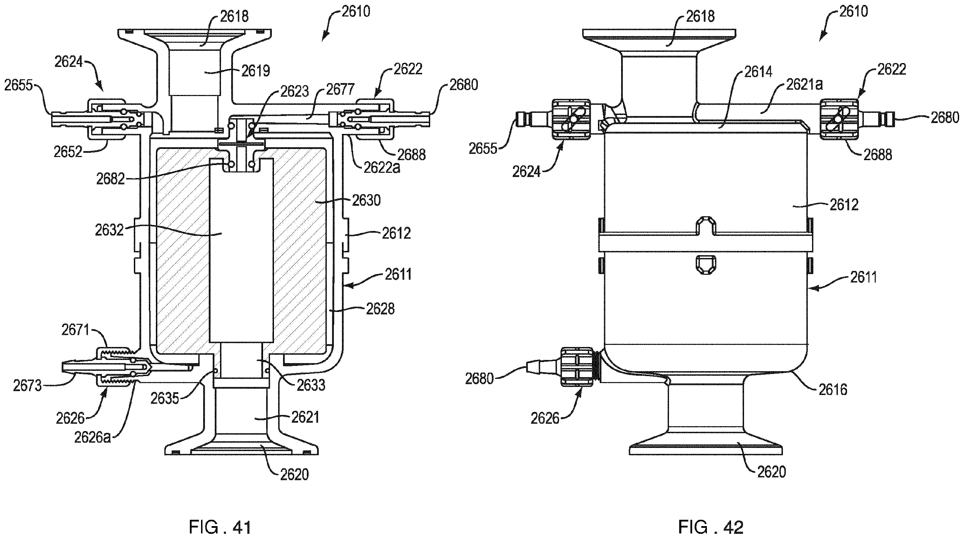

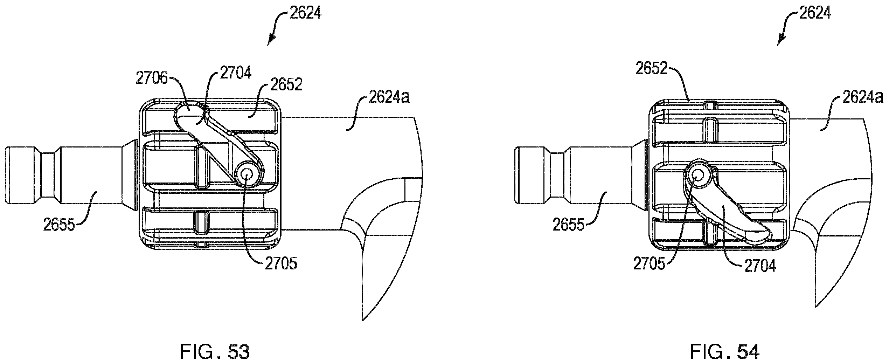

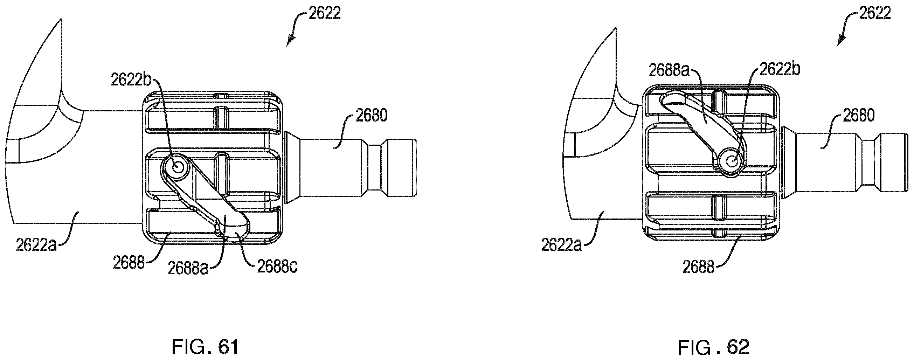

Referring now to FIGS. 41, 42, 46-49, 53-56 and 59-65 in yet another aspect of the disclosure, a liquid recovery filter assembly shown designated generally as **2610** includes a recovery filter subassembly secured within the assembly's housing or shell so as to provide a more compact filter assembly and to provide additional structural protection for the recovery filter. Filter assembly **2610** includes many of the same features as the other filter assembly embodiments disclosed herein. A housing or shell **2611** having a shell wall **2612** with an upper end or upper end cap **2614** and a lower end or lower end cap **2616** that, in combination, define an internal volume **2628.** As shown in FIGS. 41 and 42, shell **2611** is a two-piece design with the shell ends being integral to one half, or one section of shell wall **2612,** the two sections of which are secured together via thermal bonding, or other method to form the shell wall. It should be understood that shell **2611** may also be formed with a single piece shell wall with one integral end and one end cap, or with two end caps. A filter element **2630** having a downstream core **2632** is secured in internal volume **2628.** An inlet port **2618** is in fluid communication with an inlet channel **2619** and with an upstream portion **2634** of internal volume **2628** (defined by the inner surfaces of shell wall **2612,** upper end **2614,** outlet end or end 2616 and an outer upstream designated surface of filter element **2630**)**.** An outlet port **2620** is in fluid communication with filter core **2632.**

In the embodiment shown, filter assembly **2610** has an upstream vent port subassembly **2624,** an upstream drain port subassembly **2626** and a downstream liquid recovery port subassembly **2622** that also functions as a downstream vent port. Each port includes an optional bleed valve with each valve having a valve stem, valve adjustment cap and O-ring(s) to create sliding seals as disclosed in more detail below.

Filter element **2630** may be in a cartridge form wherein a filter cage designated generally as **2631** is superposed about the filter media and defines an upstream boundary of the filter media portion of the filter element. Cage **2631** is formed from non-porous materials such as those disclosed herein as being suitable for formation of the various filter assembly housing embodiments. Cage **2631** is formed with bores, channels and/or a lattice-like structure to permit liquids and gases to pass from upstream volume **2634** into the enclosed filter material. An upper cage end cap **2637** is secured to, or integral with, filter cage **2631** and is formed from a non-porous material like cage **2631** with or without bores and/or channels, or a lattice-like structure to permit liquid transmission from the upstream side to the filter material inside the cage. A lower cage end cap **2637a** is secured to, or integral with, filter cage **2631** and is formed also from a non-porous material like cage **2631** with or without bores and/or channels, or a lattice-like structure to permit liquid transmission from the upstream side to the filter material inside the cage. The filter cage and filter cage end caps collectively define a filter cartridge chamber within which is secured filter material. The enclosed filter material may be thermally bonded to one or both end caps, or alternatively, may be potted at one or both ends with an adhesive to form a smooth continuous surface for one or both end caps.

Filter element **2630** has additional features to secure the cartridge to housing **2611.** Specifically, a lower hollow post **2633** extends downwardly from a main body of filter element **2630.** An inner wall of post **2633** defines a post lumen in liquid communication with filter core **2632** and outlet channel **2621.** Lower end or end cap **2616** has a filter cartridge lower receiving sleeve **2635** with an inner diameter dimensioned to receive lower post **2633.** A lower O-ring annular channel **2639** is formed on the outer surface of post **2633** and/or an inner surface of sleeve **2635** to receive a lower O-ring **2641** to form a substantially liquid-tight, friction-type and/or compressive-type seal between the sleeve and the post. The channel defined by sleeve **2635** is in fluid communication with core **2632** and outlet port **2620.** It should be understood that the post and sleeve combination as disclosed for this embodiment can be formed also in an opposite configuration with the hollow post formed on the lower end, or end cap and the sleeve formed on filter element **2630.** It should also be understood that other methods disclosed herein as well as other methods known in the art (e.g., a luer lock design) can be used to connect upper and/or lower ends of element **2630** to shell or housing **2611** and remain within the scope of the disclosure.

With respect to alternative methods to secure filter cartridge **2630,** lower post **2633** may be permanently secured to lower end **2616,** or to an inner wall of outlet port 2620 as shown and disclosed in more detail herein. The means used to permanently secure post **2633** to the sleeve of lower end **2616** (or the opposite sleeve and post alternative disclosed above) include thermal or sonic bonding, adhesive as well as combinations of the different bonding methods. The use of a permanent method of bonding the cartridge to the housing eliminates the need for an O-ring seal and any modifications necessary to incorporate an O-ring seal.

An upper filter element sleeve or bore **2643** is formed on a top end of filter element **2630** and is dimensioned to receive a segment of a recovery filter subassembly designated generally as **2623,** disclosed in detail below. Alternatively, the upper portion of filter element **2630** can be configured as a hollow upper post (not shown) such as lower post **2633** to receive recovery filter subassembly **2623.** It should also be understood that other methods disclosed herein as well as other methods known in the art can be used to connect the upper and/or the lower ends of element **2630** to shell **2611** and remain within the scope of the disclosure. By way of illustration, the methods used to permanently secure lower post **2633** to the lower end cap or outlet port may also be used with respect to sleeve **2643** or the alternative upper post configuration. An O-ring seal may also be used as disclosed in more detail herein.

Recovery filter subassembly shown designated generally as **2623** is dimensioned to fit within housing **2611.** Subassembly **2623** has a recovery filter housing, capsule or shell **2670** having portions defining a recovery filter chamber **2672** dimensioned to receive and support a recovery filter **2674** (at least functionally similar to, or the same as, recovery filter **223**). Housing **2670** has further portions defining a fluid channel **2676** in fluid communication with processing filter core **2632** and with a lumen or channel of a recovery port **2622a.** Subassembly **2623** has a hollow core receiving lower post **2678a** extending downwardly from housing **2670** and proximal to filter cartridge **2630.** Post **2678a** is dimensioned to fit within sleeve **2643** and has an annular channel **2680a** formed in an outer surface dimensioned to receive an O-ring **2682** to create a substantially liquid-tight, friction-type seal between the sleeve and the post. O-ring **2682** is seated in channel **2680** and has an outer surface that registers against an inner wall of sleeve **2633** to create the seal.

It should be understood that channel **2680a** may also be formed on the inner wall of sleeve **2643** to receive the O-ring and have an inner surface of the O-ring register against a substantially smooth outer surface of lower post **2678a.** Moreover, more than one O-ring and/or O-ring/channel combination may be used to secure each post and sleeve combination as shown in FIG. 22. It should be further understood that other means known in the art to attach recovery filter subassembly **2623** to filter element **2630** may be used and remain with the scope of the disclosure.

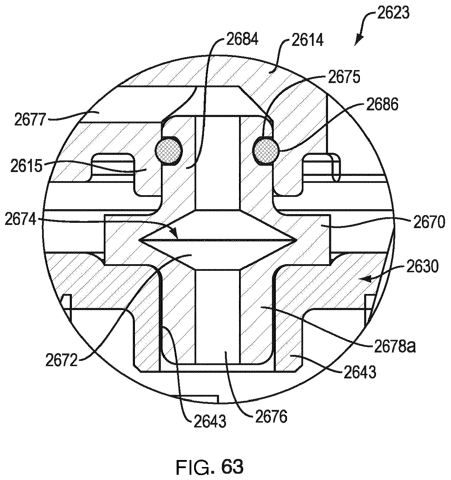

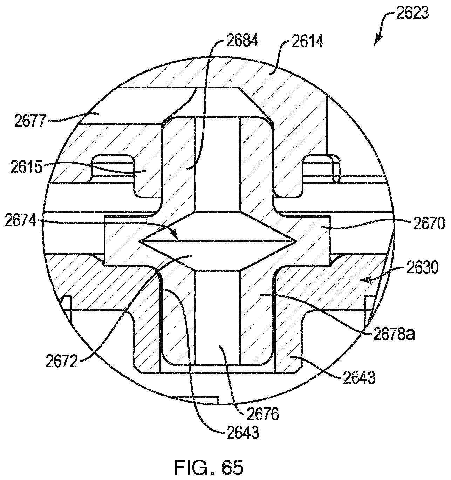

With respect to other methods to secure filter subassembly **2623** to filter element **2630,** as shown in FIGS. 63 and 65, post **2678a** may be permanently sealed to sleeve **2643.** The means used to permanently secure post **2678a** to sleeve **2643** (or the opposite sleeve and post alternative disclosed above) include thermal or sonic bonding, adhesive as well as combinations of the different bonding methods. The use of a permanent method of bonding filter cartridge **2630** to recovery filter assembly **2623** eliminates the need for an O-ring seal and any modifications necessary to incorporate an O-ring seal such as channel **2680a.**

Subassembly **2623** further has a hollow upper post **2684** that extends upwardly from housing **2670** and distal from filter core **2632** to provide a structural means to secure subassembly **2623** to filter assembly upper end or upper end cap **2614.** Upper post **2684** has portions defining an annular upper O-ring channel **2675** formed on an outer wall and dimensioned to receive an O-ring **2686** secured therein. Upper end cap **2614** has portions defining a sleeve **2615** dimensioned to receive upper post **2684** and O-ring **2686.** O-ring **2686** registers against an inner wall of sleeve **2615** so as to create a substantially liquid-tight, friction-type and/or compressive-type seal between subassembly **2623** and upper end **2614.** It should be understood that upper O-ring channel **2675** can be formed instead on the inner wall of sleeve **2615** to receive the O-ring, an inner surface of which will register against an outer wall of upper post **2684** to create the seal. Other means disclosed herein or known in the art may also be used to secure subassembly **2623** to upper end **2614** and remain within the scope of the disclosure.

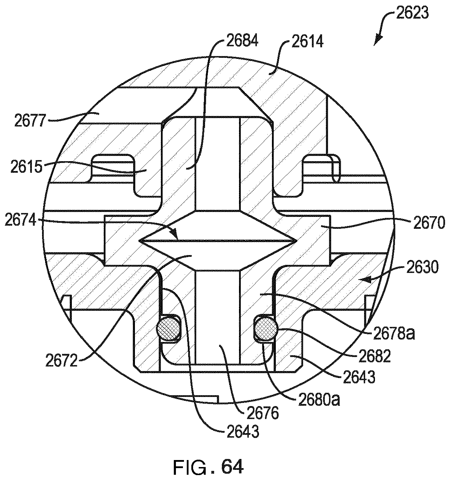

With respect to other methods to secure filter subassembly **2623** to upper end **2614,** as shown in FIGS. 64 and 65, post **2684** may be permanently sealed to sleeve **2615.** The means used to permanently secure post **2684** to sleeve **2615** (or the opposite sleeve and post alternative disclosed above) include thermal or sonic bonding, adhesive as well as combinations of the different bonding methods. The use of a permanent method of bonding filter assembly upper end cap **2615** to recovery filter assembly **2623** eliminates the need for an O-ring seal and any modifications necessary to incorporate an O-ring seal such as channel **2675.**

To maintain a fluid path from core **2630** to the lumen or channel of recovery port **2622a,** the depth of upper end or upper end cap sleeve **2615** is dimensioned to be greater than the length of upper post **2684** so as to create a gap that connects the fluid path from the lumen of recovery port **2622a** to channel **2677.** In this configuration, an upper surface of the main body of recovery filter subassembly **2623** registers against an annular shoulder defined by a lower edge of upper sleeve **2615.** In an alternative embodiment, the depth of sleeve **2615** can be dimensioned to be the same as the length of upper post **2684** so that a top end of the post registers against a bottom of sleeve **2615.** In this configuration, a radial channel (not shown) is formed on a top end of upper post **2684** to connect the lumen of recovery port **2622a** to channel **2677** and any channels disclosed herein as being therebetween.

The combination of upper end or end cap **2614,** recovery filter subassembly **2623** and the upper portion of filter element **2630** provide the means to anchor the top end of filter element **2639** to housing **2611.** It should be understood for embodiments that present the recovery filter in-line with the recover port, outside the filter assembly housing, that the same sleeve/post configuration used to secure the recovery filter subassembly inside the housing can also be used to secure the upper end of the filter element directly to the housing without the use of O-rings. FIGS. 63-65 show illustrative examples of one post (FIGS. 63 and 64), or both (FIG. 65) posts of recovery filter assembly **2623** permanently fixed, i.e., without an O-ring seal. Other construction alternatives to secure the filter element to the filter housing are disclosed hereinbelow.

The internalization of recovery filter subassembly **2623** does not require any special consideration with respect to function and use. The procedures disclosed herein with respect to the primary liquid processing function and the filtered liquid recovery function for filter assembly **210** apply equally to filter assembly **2610.** The disclosure of those procedures is therefore incorporated here by reference with respect to filter assembly **2610.**

Upper end/upper end cap **2614** has additional portions defining a radially extending recovery port connector **2621a** that defines recovery channel **2677** in fluid communication with fluid channel **2676** and with a lumen or channel of recovery port **2622a.** An exterior surface of recovery port **2622a** is formed with a pin **2622b** to receive, control and limit the movement range of an adjustable recovery port cap **2688** as disclosed in more detail below. An internal surface of recovery port **2622a** is formed with two differently dimensioned channels with a first outer channel **2678** having a cross-sectional diameter greater than the cross-sectional diameter of an inner recovery port channel **2679.** The junction of the two channels may take the form of a defined annular shoulder or an annular sloped surface that joins the two differently dimensioned channels.

A recovery port valve stem **2680** dimensioned to fit within channels **2678** and **2679** is substantially cylindrical in shape and has portions that define a recovery port valve stem channel **2681** open at a distal end and closed at a proximal end relative to recovery port **2622.** A radially disposed, recovery port valve stem bore **2682** is formed toward the proximal end so as to intersect valve stem channel **2681** and provide liquid communication between channel **2681** and recovery channel lumen **2677via** recovery port channels **2678** and **2679.**

An outer surface of valve stem **2680** is formed with two segments having different diameters, the junction of which form an annular shoulder or barb-like ring. A recovery valve stem proximal segment **2683** that defines at least a part of the proximal end terminus for channel **2681** has a cross-sectional diameter dimensioned to fit within the inner recovery port channel **2679.** A recovery valve stem distal segment **2684** has a cross-sectional diameter dimensioned to fit within outer recovery port channel **2678.** The transition between the two valve stem surfaces may form a defined annular shoulder, or may be an annular sloped surface from a substantially smooth transition between the two differently sized valve stem surfaces. A distal tip of valve stem **2680** may be formed with a barbed feature or other end modification to receive tubes, connectors, quick connects and the like.

Proximal segment **2683** has a recovery valve stem first annular channel **2685** formed thereon and dimensioned to receive a first recovery valve O-ring **2686.** Distal segment **2684** has a recovery valve stem second annular channel **2687a** formed thereon and dimensioned to receive a second recovery valve O-ring **2687.** An outer surface of first valve O-ring **2686** registers against the inner wall of inner recovery port channel **2679** to form a substantially liquid-tight seal. An outer surface of second valve O-Ring **2687** registers against an inner wall of outer recovery port channel **2678** to form a substantially liquid-tight seal. It should be understood that the seals formed by these O-rings are meant to be sliding seals in that the valve stem can freely move within recovery port **2622** along a longitudinal axis of the recovery port. Valve stem **2680** motion is restricted by an adjustable recovery port valve cap **2688** disclosed in detail below.

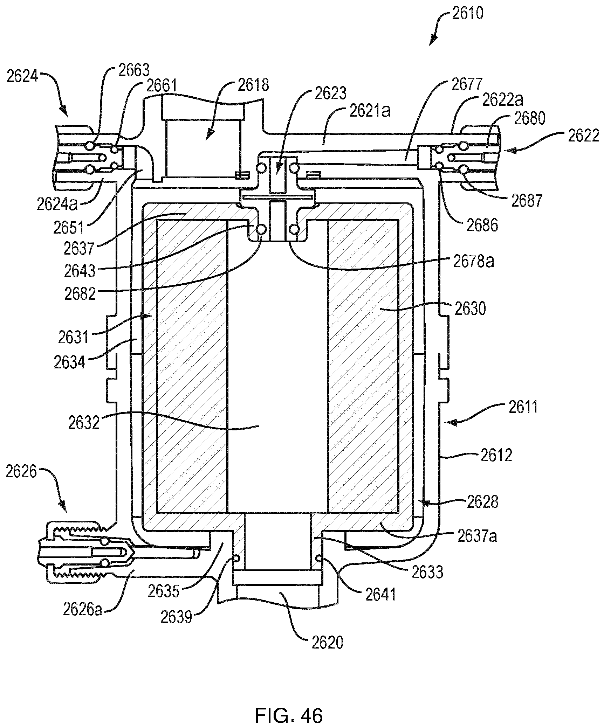

In a closed position, first valve O-Ring **2686** registers against the wall of recovery port channel **2679** to form a liquid-tight seal and prevent fluid and/or gas from entering or exiting the recovery port. In an open position, first valve O-ring **2688** is positioned away from recovery port channel **2679** (in a distal direction) so as to create a fluid path from channel **2677** (shown in FIG. 46), to inner recovery port channel **2679** to the larger outer recovery port channel **2678** in through radial recovery port valve stem bore **2682** then into valve stem channel **2681** and out (or into) the filter assembly depending upon the direction of flow. Radial bore **2682** is positioned on the valve stem at a point or location between the two O-rings so that when the valve stem is moved into any position within its range of travel, liquids cannot escape between the interface of recovery port **2622a** and valve stem **2680.**

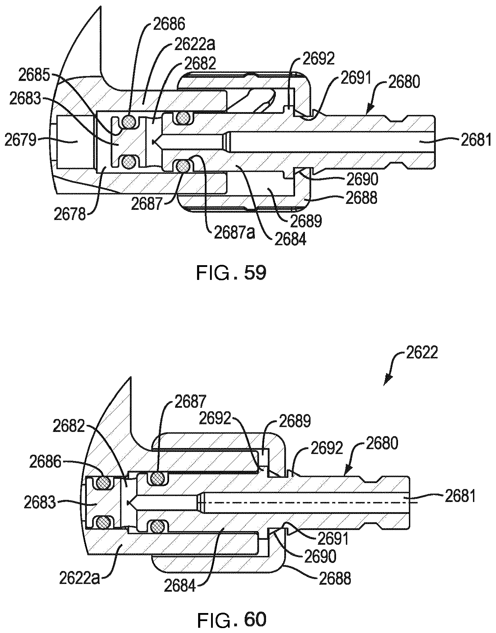

As shown in FIGS. 59-62, adjustable recovery port valve cap **2688** has an inner wall that defines a valve cap channel **2689.** The wall is formed with a helically oriented slot **2688a** dimensioned to receive pin **2688b** that projects into the slot from external surface of recovery port **2622a.** The slot may be formed with an enlarged distal end **2688c** to provide a releasable locking edge that pin **2688b** registers against when the port is in a closed condition. This helps prevent unwanted opening of the valve without the deliberate use of force to open the valve. The length of axial travel of valve stem **2680** within recovery port **2622a** is determined by the length of slot **2688a** with the ends of the slot functioning as stops that limit the length of axial travel. Opening and closing the valve is performed by rotating cap **2688** about an external surface of recovery port **2622a** in either a clockwise, or counterclockwise direction.

The cross-sectional diameter of channel **2689** is dimensioned to permit cap **2688** to fit on, and rotate freely about, the external surface of recovery port **2622a.** A distal end defines an annular radially inwardly projecting ridge or lip **2690** with a cross-sectional diameter smaller than the cross-sectional diameter of valve cap channel **2689.** An annular cap-receiving channel **2691** is formed on valve stem **2680** to receive ridge **2690.** Alternatively, the channel may be formed by two substantially parallel recovery valve stem annular rings or walls **2692** formed on the outer surface of the valve stem and spaced to receive ridge **2690.** Regardless whether the channel is formed below the outer surface of the valve stem or thereon, the cross-sectional diameter of cap-receiving channel **2691** is smaller than the cross-sectional diameter of ridge **2690** and the cross-sectional diameter of walls **2692** (or the cross-sectional diameter of the valve stem if the channel is formed below the outer surface of the valve stem) are greater than the cross-sectional diameter of ridge **2690.**

This configuration traps the relative location of ridge **2690** and thus cap 2688 on valve stem **2680** so that rotation in either direction (clockwise, counterclockwise) of cap **2688** and its movement along the external surface of recovery port **2622a** via the slot and pin configuration causes a corresponding axial movement of the valve stem to retreat from, or advance into, recovery port **2622a** to open and close the valve, respectively. As should be understood in the art, angular orientation of the slot on the cap can be altered to cause valve closure by turning the cap in either direction. In one orientation, rotation of the cap clockwise will close the valve. In a second orientation, rotation of the cap in a counterclockwise direction will close the valve. Ridge **2690** freely rotates about valve stem **2680** and delivers axial force to the valve stem by registering against at least the leading channel wall in the direction the cap is moved along recovery port **2622a.** This configuration permits manual or automated control of the bleed valve.

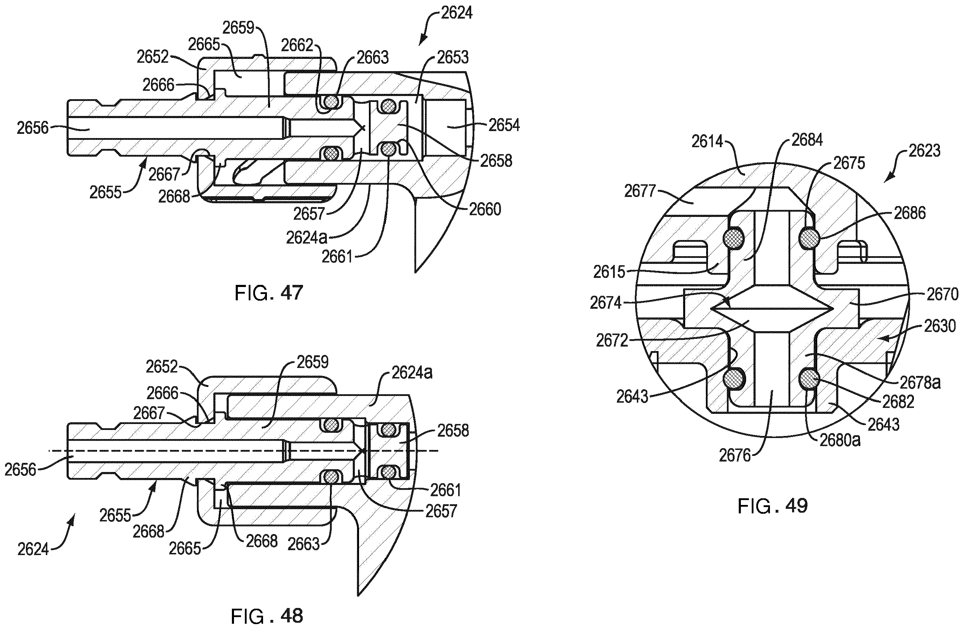

Referring again to FIGS. 41, 42, 46 and now also to FIGS. 47, 48, 53 and 54, upper end/upper end cap **2614** has further additional portions that define an axially extending upstream vent channel **2651** that defines a lumen in fluid communication with upstream volume **2634** and with a lumen of an upstream vent port **2624a.** An exterior surface of upstream vent port **2624a** is formed with a pin **2705** to receive, control and limit the movement range of an adjustable upstream vent cap **2652** as disclosed in more detail below. An internal surface of upstream vent port **2624a** is formed with two differently dimensioned channels with a first outer vent channel **2653** having a cross-sectional diameter greater than the cross-sectional diameter of a second inner vent channel **2654.** The junction of the two channels may take the form of a defined annular shoulder or an annular sloped surface that joins the two differently dimensioned channels.

An upstream vent port valve stem **2655** dimensioned to fit within vent channels **2653** and **2654** is substantially cylindrical in shape and has portions that define a vent port valve stem channel **2656** open at a distal end and closed at a proximal end relative to vent port **2624a.** A radially disposed, vent port valve stem bore **2657** is formed toward the proximal end so as to intersect valve stem channel **2656** and provide liquid communication between channel **2656** and a lumen of vent port channel **2651** (shown in FIG. 46).

An outer surface of valve stem **2655** is formed with two segments having different diameters, the junction of which forms an annular shoulder or barb-like ring. A vent valve stem proximal segment **2658** that defines at least a part of the proximal end terminus for channel **2656** has a cross-sectional diameter dimensioned to fit within inner vent port channel **2654.** A vent valve stem distal segment **2659** has a cross-sectional diameter dimensioned to fit within outer vent port channel **2653.** The transition between the two valve stem surfaces may form a defined annular shoulder, or may be an annular sloped surface to from a substantially smooth transition between the two differently sized valve stem surfaces. A distal tip of vent valve stem **2655** may be formed with a barbed feature or other end modification to receive tubes, connectors, quick connects and the like.

Vent valve stem proximal segment **2658** has a vent valve stem first annular channel **2660** formed thereon and dimensioned to receive a first vent valve O-ring **2661.** Vent valve stem distal segment **2659** has a vent valve stem second annular channel **2662** formed thereon and dimensioned to receive a second vent valve O-ring **2663.** An outer surface of first valve O-ring **2661** registers against the inner wall of inner vent port channel **2654** to form a substantially liquid-tight seal. An outer surface of second valve O-Ring **2663** registers against an inner wall of outer vent port channel **2653** to form a substantially liquid-tight seal. It should be understood that the seals formed by these O-rings are meant to be sliding seals in that the valve stem can freely move within vent port **2624a** along a longitudinal axis of the vent port. Vent valve stem **2655** motion within the vent port is restricted by adjustable vent port valve cap **2652** disclosed in detail below.

In a closed condition as shown in FIG. 47, first valve O-ring **2661** registers against the wall of inner vent port channel **2654** to form a liquid-tight seal and prevent fluid and/or gas from entering or exiting the vent port. In an open condition, first valve O-ring **2661** is away from vent port channel **2654** (in a distal direction) so as to create a fluid path from vent channel **2651** to inner vent port channel **2654** to the larger outer vent port channel **2653** in through radial vent port valve stem bore **2657** then into valve channel **2656** and out (or into) the filter assembly depending upon the direction of flow. It should be noted that radial bore **2657** is positioned between the two O-rings so that in any valve stem position, liquids cannot escape between the interface of vent port **2624a** and vent port valve stem **2655.**

Adjustable upstream vent port valve cap **2652** has an inner wall that defines a valve cap channel **2665.** The wall is formed with a helically oriented slot **2704** dimensioned to receive pin **2705** that projects into the slot from the external surface of vent port **2624a.** The slot may be formed with an enlarged distal end **2706** to provide a releasable locking edge that pin **2705** registers against when the port is in a closed condition. This helps prevent unwanted opening of the valve without the deliberate use of force to open the valve. The length of axial travel of valve stem **2673** within vent port **2624a** is determined by the length of slot **2704** with the ends of the slot functioning as stops that limit the length of axial travel. Opening and closing the valve is performed by rotating cap **2652** about the external surface of vent port **2624a** in either a clockwise, or counterclockwise direction.

The cross-sectional diameter of channel **2665** is dimensioned to permit cap **2652** to fit on, and rotate freely about, the external surface of vent port **2624a.** A distal end defines an annular radially inwardly projecting ridge or lip **2666** with a cross-sectional diameter smaller than the cross-sectional diameter of valve cap channel **2665.** An annular cap-receiving channel **2667** is formed on valve stem **2655** to receive ridge **2666.** Alternatively, the channel may be formed by two substantially parallel annular vent valve stem rings or walls **2668** formed on the outer surface of the valve stem and spaced to receive ridge **2666.** Regardless whether the channel is formed below the outer surface of the valve stem or thereon, the cross-sectional diameter of cap-receiving channel **2667** is smaller than the cross-sectional diameter of ridge **2666** and the cross-sectional diameter of walls **2668** (or the cross-sectional diameter of the valve stem if the channel is formed below the outer surface of the valve stem) are greater than the cross-sectional diameter of ridge **2666.**

This configuration traps the relative location of ridge **2666** and thus cap 2652 on valve stem **2655** so that rotation in either direction (clockwise, counterclockwise) of cap **2652** and its movement along the external surface of vent port **2624a** via the slot and pin configuration causes a corresponding axial movement of the valve stem to retreat from, or advance into, vent port **2624a** to open and close the valve, respectively. Ridge **2666** freely rotates about valve stem **2655** and delivers axial force to the valve stem by registering against at least the leading channel wall in the direction the cap is moved along the external surface of vent port **2624a.** This configuration permits manual or automated control of the vent port bleed valve.

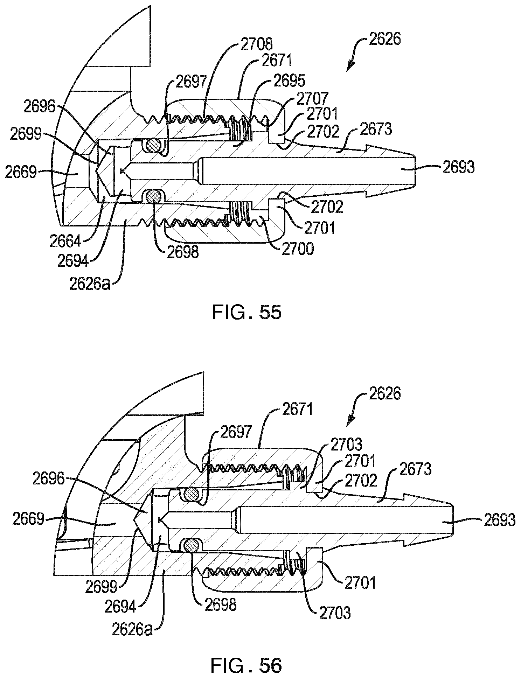

Referring again to FIGS. 41, 42, 46 and now also to FIGS. 55 and 56, lower end/lower end cap **2616** has portions that define a radially extending upstream drain channel **2669** that defines a lumen in fluid communication with upstream volume **2634** and with a lumen or channel **2664** of upstream drain port **2626a.** Channel **2664** may have a slight conical shape or tapered shape in cross-section with the larger end of the taper extending toward the distal end of the drain port as shown in FIGS. 55 and 56. This configuration permits increased fluid flow through the port with increased opening of the port. An exterior surface of upstream drain port **2626a** is formed with threading **2708** to receive an adjustable upstream drain cap **2671** as disclosed in more detail below. The cross-sectional diameter of the drain port channel **2664** is greater than the cross-sectional diameter of drain channel **2669.**

An upstream drain port valve stem **2673** dimensioned to fit within drain port channel **2664** is substantially cylindrical in shape and has portions that define a drain port valve stem channel **2693** open at a distal end and closed at a proximal end relative to drain port **2626a.** A radially disposed, drain port valve stem bore **2694** is formed toward a proximal end of channel **2693** so as to intersect channel **2693** and provide fluid communication between channel **2693** and drain channel **2669** via drain port channel **2664.** An outer surface of valve stem **2673** is formed with two segments having different diameters, the junction of which creates an annular shoulder or barb-like ring. A drain valve stem proximal segment **2695** has a cross-sectional diameter dimensioned to be smaller than the cross-sectional diameter of drain port channel **2664** so as to form an annular gap between the surfaces. A drain valve stem distal segment **2696** that defines at least a part of the proximal end terminus for channel **2693** has a cross-sectional diameter dimensioned to fit more snugly within the drain port channel (at the smallest diameter of the taper), so as to form a smaller annular gap relative to the gap formed by proximal segment **2695** and channel **2664.** The transition between the two valve stem surfaces may form a defined annular shoulder, or may be an annular sloped surface to from a substantially smooth transition between the two differently sized valve stem surfaces.

A proximal tip **2699** of drain port valve stem **2673** is conical in shape and functions like a needle valve. Movement of valve stem **2673** toward channel **2669** causes an extreme proximal end of conical tip **2699** to enter into channel **2669** until the conical surface registers against the annular leading edge of the channel (that functions as a valve seat) so as to occlude the channel lumen and prevent any egress or ingress of liquids and/or gases out of, or into, the filter assembly. An opposite distal tip of drain port valve stem **2673** may be formed with a barbed feature or other end modification to receive tubes, connectors, quick connects and the like.

Drain valve stem distal segment **2696** has a drain valve stem annular channel **2697** formed thereon and dimensioned to receive a drain valve O-ring **2698.** An outer surface of drain valve O-ring **2698** registers against the lumen wall of the drain port channel to form a substantially liquid-tight seal. It should be understood that the seal formed by this O-ring is meant to be a sliding seal in that the valve stem can freely move within drain port **2626a** along a longitudinal axis of the drain port without compromising the seal function of the O-ring. Drain valve stem **2673** motion within the port is restricted by adjustable drain port valve cap **2671** disclosed in detail below.

As stated, in a closed condition as shown in FIG. 56, conical tip **2699** registers against the annular leading edge of drain channel **2669** to form a liquid-tight seal and prevent fluid and/or gas from entering or exiting the drain port. In an open condition as shown in FIG. 55, conical tip **2699** is away from drain channel leading edge (in a distal direction) so as to create a fluid path from drain channel **2669** to drain port channel **2664** through radial drain port valve stem bore **2694** then into drain valve stem channel **2693** and out (or into) the filter assembly depending upon the direction of flow. It should be noted that radial bore **2694** is positioned proximal to the filter assembly relative to O-ring **2698** so that in any position, liquids cannot escape from the filter assembly between the interface of drain port **2624a** and drain port valve stem **2673.**

Adjustable upstream drain port valve cap **2671** has an inner wall that defines a drain valve cap channel **2700.** The inner wall is formed with threading **2707** to mate with threading **2708** of drain port **2626a.** The cross-sectional diameter of channel **2700** is dimensioned to permit cap **2671** to fit on, and rotate freely about, drain port **2626a.** A distal end defines an annular radially inwardly projecting ridge or lip **2701** with a cross-sectional diameter smaller than the cross-sectional diameter of valve cap channel **2700.** An annular cap-receiving channel **2702** is formed on valve stem **2673** to receive ridge **2701.** Alternatively, the channel may be formed by two substantially parallel annular drain valve stem rings or walls **2703** formed on the outer surface of the valve stem and spaced to receive ridge **2701.** Regardless whether the channel is formed below the outer surface of the valve stem or thereon, the cross-sectional diameter of cap-receiving channel **2702** is smaller than the cross-sectional diameter of ridge **2701** and the cross-sectional diameter of walls **2703** (or the cross-sectional diameter of the valve stem if the channel is formed below the outer surface of the valve stem) are greater than the cross-sectional diameter of ridge **2701.**

This configuration traps the relative location of ridge **2701** and thus cap **2671** on valve stem **2673** so that rotation in either direction (clockwise, counterclockwise) of cap **2671** and its movement along drain port **2626a** via the mated threading causes a corresponding movement of the valve stem to retreat from, or advance into, drain port **2626a** to open and close the valve, respectively. Ridge **2701** freely rotates about valve stem **2673** and delivers axial force to the valve stem by registering against at least the leading channel wall in the direction the cap is moved along drain port **2626a.** This configuration permits manual or automated control of the vent port bleed valve.

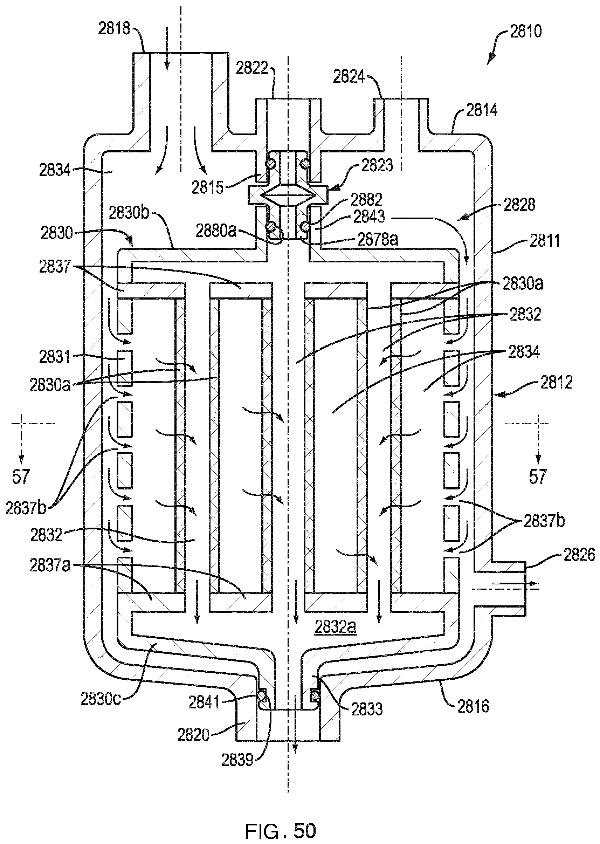

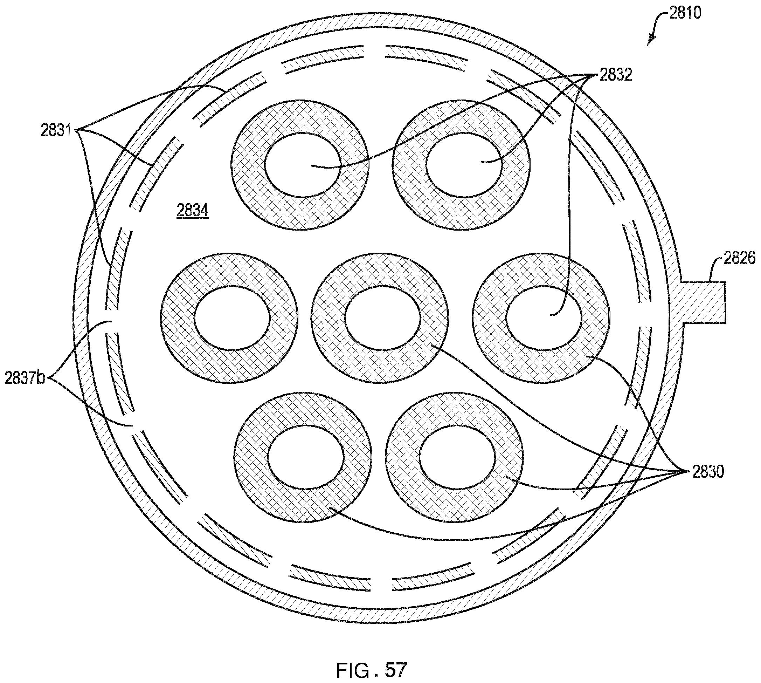

Alternative constructions to secure the filter element to the filter assembly housing are shown in FIGS. 50-52, 57 and 58. As shown in FIGS. 50 and 57, a liquid recovery filter assembly shown designated generally as **2810** includes features corresponding to most of the features shown and disclosed for the other previously disclosed embodiments.

Filter assembly **2810** includes a housing or shell **2811** constructed from a shell wall **2812,** upper end/end cap **2814,** lower end/end cap **2816,** the combination of which define an internal volume designated generally as **2828.** The filter assembly has ports corresponding to the ports of the other disclosed filter assembly embodiments: an inlet port **2818,** an outlet port **2820,** a recovery port **2822,** a vent port **2824,** an upstream drain port **2826,** and encloses a corresponding filter element designated generally as **2830** constructed in this embodiment as a filter cartridge that encloses a plurality of hollow fibers **2830a.** An upstream volume **2834** is defined by filter housing **2811** and the collective upstream designated surfaces of hollow fibers **2830a.** Hollow fibers **2830a** each define a downstream core **2832.** Cores **2832** are in fluid communication with a downstream collection space **2832a** defined by a filter element lower end cap **2830c** and a hollow fiber lower end cap **2837a** disclosed in more detail below. Space **2832a** is in fluid communication with outlet port **2820.**

More specifically, filter cartridge **2830** includes a cage wall **2831** with openings **2837b,** a cartridge upper end cap designated generally as **2830b** and lower end cap **2830c.** The end caps may be formed from the same material used for the cage wall (as well as for the filter assembly housing). A hollow fiber upper end cap **2837** and a hollow fiber lower end cap **2837a** may be formed as potting layers constructed from a urethane or epoxy adhesive or like material with a series of openings to permit fluid communication with the downstream cores of the individual hollow fibers. Alternatively, a hollow fiber upper end cap **2837** and a hollow fiber lower end cap **2837a** may also be formed from thermal plastic materials by thermally melting and potting the materials to the hollow fibers. This method is particularly advantageous for hollow fiber materials that are notably hard to adhere with adhesives, e.g., PTFE, PFA/MFA, PVDF and HDPE as disclosed in more detail herein.

Filter cartridge **2831** is secured to housing designated generally as **2811** via features formed on the upper and lower cartridge ends/end caps. An upper cartridge sleeve **2843** extends upwardly from upper cartridge end cap **2830b** and is dimensioned to receive a lower post **2878a** of a recovery filter assembly **2823** similar to the post/sleeve combination shown in FIG. 49. An annular (or other shape) recovery filter lower post channel **2880a** is formed on lower post **2878a.** A cartridge upper end O-ring **2882** is positioned between the sleeve and post and is secured in lower post channel **2880a** in similar fashion to the sleeve and post configuration disclosed for recovery filter assembly **2623** shown in FIGS.46 and 49. The upper end of recovery filter assembly **2823** is secured to upper end/end cap **2814** in the same manner and with the same options as disclosed for recovery filter assembly **2623** shown in FIGS. 46 and 49.

A lower cartridge post **2833** is dimensioned to fit within outlet port **2820** and defines a lumen in fluid communication with outlet port **2820** and downstream collection space **2832a.** An annular O-ring channel **2839** is formed in the outer wall of post **2833** to receive and secure a cartridge lower end O-ring **2841** used to seal the registered surfaces. Alternatively, lower cartridge post **2833** may be secured to outlet port **2820** via thermal or sonic bonding, adhesives, combinations of the bonding methods and the like. These alternative bonding methods eliminate the need for O-ring **2841** and any features specific to any embodiment using an O-ring to create a seal between the lower cartridge post and the outlet port.

The components of filter assembly **2810** are constructed from the same materials disclosed for the other disclosed embodiments. Filter assembly **2810** is operated in the same manner as disclosed for filter assembly **210** as well as the other disclosed embodiments. The operation procedures disclosed for filter assembly **210** are incorporated here with respect to filter assembly **2810.** By way of illustration, and not by way of limitation, the hollow fiber material may be constructed from materials selected from the group consisting of Polyethersulfone (PES), Polysulfone (PS), Nylon 6, Nylon 66, regenerated cellulose, mixed esters of cellulose, Polycarbonate, Polyester, Polyacrylonitrile (PAN), Polyimide, Polyamide, and mixtures thereof. The hollow fiber material may also be constructed from materials selected from the group consisting of virgin or surface modified expanded Polytetrafluoro-ethylene (Teflon^{®} PTFE) with or without lamination, phase inversion formed Polyvinylidene fluoride (PVDF), Perfluoroalkoxy (PFA) and its derivatives, Ethylene-clorotrifluoroethylene copolymer (ECTFE), Polypropylene (PP), high density Polyethylene (HDPE), ultra high molecular weight Polyethylene (UHMWPE or UPE) and mixtures thereof. Inorganic materials that may be used include ceramics including alumina, zirconia and sintered stainless steel. The inner and outer diameters of the hollow fibers can vary widely as is well known and available in the art, depending upon the specific filtration applications, and can range from about 100 microns to millimeters. It should be understood that other filter materials disclosed herein and/or well known in the art may be substituted for the hollow fiber filter material and remain within the scope of the disclosure.

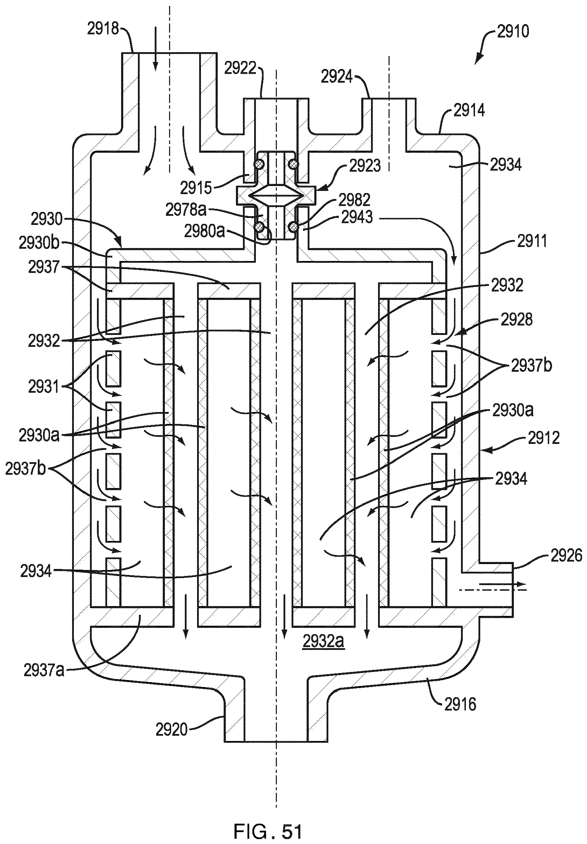

Referring now to FIG. 51, in another aspect of the disclosure, another alternative configuration to secure a filter element in the form of a filter cartridge in a filter housing is shown. A liquid recovery filter assembly shown designated generally as **2910** includes features corresponding to most of the features shown and disclosed for the other previously disclosed embodiments.

The features of filter assembly **2910** that correspond to the features of the other disclosed embodiments include a housing or shell designated generally as **2911** constructed from a shell wall **2912,** an upper end/end cap **2914,** a lower end/end cap **2916,** the combination of which define an internal volume designated generally as **2928.** The filter assembly has ports corresponding to the ports of the other disclosed embodiments: an inlet port **2918,** an outlet port **2920,** a recovery port **2922,** a vent port **2924,** an upstream drain port **2926,** and encloses a corresponding filter element designated generally as **2930** constructed in this embodiment as a filter cartridge that encloses a plurality of hollow fibers **2930a.** An upstream volume **2934** is defined by filter housing **2911** and the collective upstream designated surfaces of hollow fibers **2930a.** Hollow fibers **2930a** each define a downstream core **2932.** Cores **2932** are in fluid communication with a downstream collection space **2932a** defined by a filter element lower end cap **2937a** and lower end/end cap **2916.** Space **2932a** is in fluid communication with outlet port **2920.**

More specifically, filter cartridge **2930** includes a cage wall **2931** with openings **2937b,** a cartridge upper end/end cap **2930b** and lower end/end cap **2937a.** The end caps may be formed from the same material used for the cage wall (as well as for the filter assembly housing). A hollow fiber upper end cap **2937** and lower end cap **2937a** may be formed as potting layers constructed from a urethane adhesive or like material with a series of openings to permit fluid communication with the downstream cores of the individual hollow fibers.

Filter cartridge **2931** is secured to housing **2911** via features formed on the upper and the lower cartridge ends/end caps. The upper end of filter cartridge **2931** is secured to a recovery filter assembly **2923** with the same construction and in the same manner as disclosed for filter cartridge **2831.** The disclosure with respect to the attachment of the upper end of filter cartridge **2831** and any disclosed alternatives is incorporated here with respect to attachment of the upper end of filter cartridge **2931.** The components of filter assembly **2910** that correspond to the components of filter assembly **2810** are identified by substituting a **"9"** for the second digit **"8"** with respect to the reference characters used to call out the components of filter assembly **2810.**

The lower end of filter cartridge **2930** is secured to housing **2911** by thermally bonding a lower end/end cap **2937a** to shell wall **2912.** The end caps may also be bonded to the shell wall via sonic welding, adhesive and the like. The end caps may be formed from the same materials used for the cage wall (as well as for the filter assembly housing). Alternatively, a hollow fiber upper end cap **2937** and lower end cap **2937a** may be formed as potting layers constructed from a urethane adhesive or like material with a series of openings to permit fluid communication with the downstream cores of the individual hollow fibers.

The components of filter assembly **2910** are constructed from the same materials disclosed for the other disclosed embodiments. Filter assembly **2910** is operated in the same manner as disclosed for filter assembly **210** as well as the other disclosed embodiments. The operation procedures disclosed for filter assembly **210** are incorporated here with respect to filter assembly **2910.**

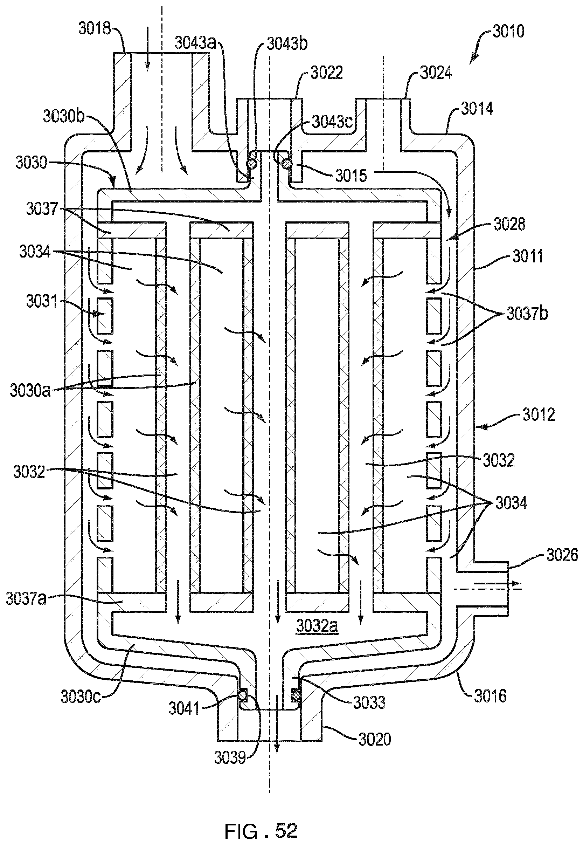

Referring now to FIG. 52, in another aspect of the disclosure, a further alternative configuration to secure a filter element in the form of a filter cartridge in a filter housing is shown. A liquid recovery filter assembly shown designated generally as **3010** includes features corresponding to most of the features shown and disclosed for the other previously disclosed embodiments with the noted exception of the absence of a recovery filter. It should be understood a recovery filter will be attached to whichever port is designated as a recovery port so as to perform the intended liquid recovery function of the disclosure.

The filter assembly features corresponding to the features of the other disclosed embodiments includes a housing or shell designated generally as **3011** constructed from a shell wall **3012,** an upper end/end cap **3014,** a lower end/end cap **3016,** the combination of which define an internal volume designated generally as **3028.** The filter assembly has ports corresponding to the ports of the other disclosed embodiments: an inlet port **3018,** an outlet port **3020,** a recovery port **3022,** a vent port **3024,** an upstream drain port **3026,** and encloses a corresponding filter element **3030** in the form of a filter cartridge constructed with a plurality of hollow fibers or tubular membranes **3030a.** Filter assembly **3010** differs from filter assemblies **2810** and **2910** with respect to the means used to secure the filter element in the housing.

Filter cartridge **3030** includes a cage wall **3031** with openings **3037b,** a cartridge upper end/ end cap **3030b** and a cartridge lower end/ end cap **3030c.** An upstream volume **3034** is defined by filter housing 3011 and the collective upstream designated surfaces of hollow fibers **3030a.** Hollow fibers **3030a** each define a downstream core **3032.** Cores **3032** are in fluid communication with a downstream collection space **3032a** defined by filter element lower end cap **3030c** and a hollow fiber lower end cap **3037a** disclosed in more detail below. Space **3032a** is in fluid communication with outlet port **3020.**

The cage and end caps may be formed from the same materials disclosed for the components of the other disclosed filter assembly embodiments. The hollow fibers (described in detail with respect to filter assembly **2810**) may have additional end caps to secure the hollow fibers in cartridge **3030.** A hollow fiber upper end cap **3037** and a hollow fiber lower end cap **3037a** may be formed as potting layers constructed from a urethane adhesive or like material with a series of openings to permit fluid communication with the downstream cores of the individual hollow fibers.

Filter cartridge **3031** is secured to housing **3011** via features formed on the upper and lower cartridge ends/end caps. To secure the upper end of the cartridge, a cartridge upper post **3043a** extends upwardly from cartridge upper end cap **3030b** and is dimensioned to fit within a housing upper end/end cap sleeve **3015.** A cartridge upper end O-ring **3043b** positioned therebetween is secured in an annular (or other shape) upper post channel **3043c** formed in the outer wall of post **3043a** in similar fashion to the sleeve and post configuration disclosed for recovery filter **2623** shown in FIG.46. Like the embodiment shown in FIG. 46, the post and sleeve configuration can be reversed with the sleeve formed on the cartridge and the post extending downwardly from the housing upper end/end cap.

To secure the lower end of the cartridge, a cartridge lower post **3033** extends downwardly from cartridge lower end cap **3030c** and is dimensioned to fit within outlet port **3020.** Post **3033** defines a lumen in fluid communication with port **3020** and downstream collection space **3032a.** An annular (or other shape) O-ring channel **3039** is formed in the outer wall of post **3033** to receive and secure a cartridge lower end O-ring **3041** used to seal the registered surfaces.

The components of filter assembly **3010** are constructed from the same materials disclosed for the other disclosed embodiments. Filter assembly **3010** is operated in the same manner as disclosed for filter assembly **210** as well as the other disclosed embodiments. The operation procedures disclosed for filter assembly **210** are incorporated here with respect to filter assembly **3010.**

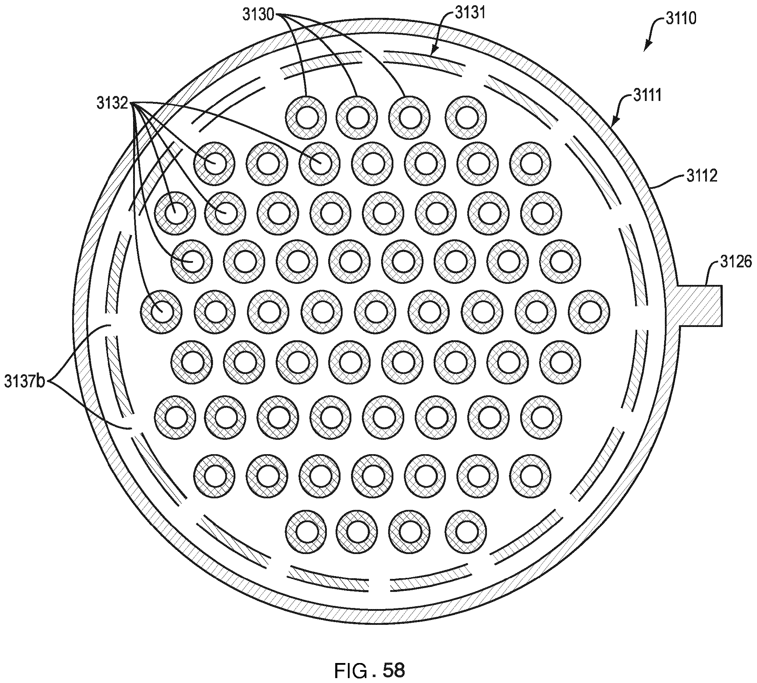

Referring now to FIG. 58, another embodiment of filter assembly **2810** is shown. A filter assembly shown designated generally as **3110** has the same features disclosed for filter assembly **2810.** The components of filter assembly **3110** that correspond to the components of filter assembly **2810** are identified by substituting a **"30"** for the first and second digits **"28"** with respect to the reference characters used to call out the components of filter assembly **2810.** Filter assembly **3110** differs from filter assembly **2810** in the distribution and density of hollow fibers secured in the filter cartridges. Filter assembly **3110** has a greater density of hollow fibers than filter assembly **2810.**

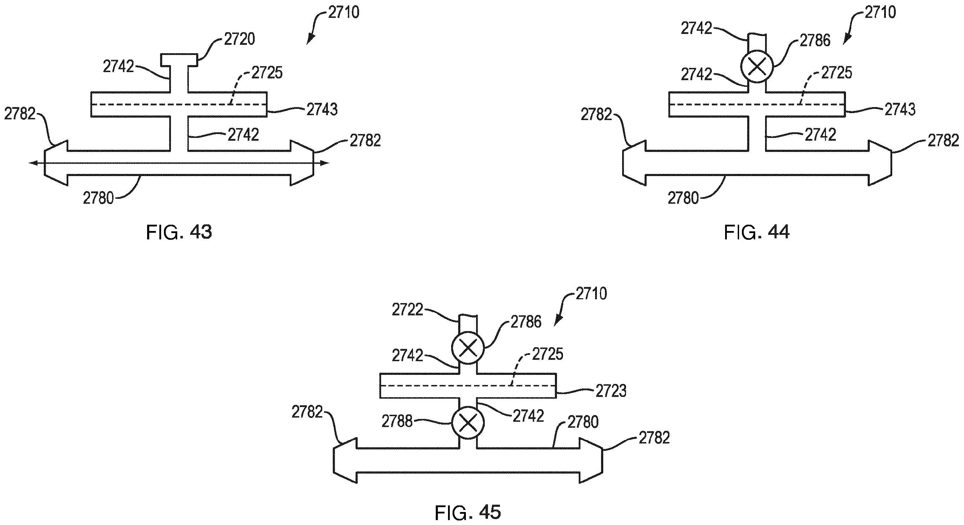

Referring now to FIGS. 43-45, in a further aspect of the disclosure, line clearing filter assemblies are shown designated generally as **2710** and include features to permit the recovery of filtered liquids in lines downstream of a filter assembly as well as liquids in other lines or processing equipment where it is necessary to prevent the contamination of the liquids contained therein. This can be used alone, or in combination with the recovery filter for the filter assembly to which the downstream line(s) is/are attached.

A recovery port **2742** is connected to, and extends from, process fluid pathway **2780.** Recovery filter **2743** is secured in-line with recovery port **2742** and houses recovery filter material **2725.** In the following description of the embodiments shown designated generally as **2710,** the term "downstream" is used to refer to locations, components, fluids, etc. located on the same side of recovery filter material **2725** as process fluid pathway **2780** and the term "upstream" is used to refer to locations, components, fluids, etc. located on the opposite side of recovery filter material **2725** and process fluid pathway **2780.**

Recovery filter **2743** and recovery filter material **2725** are designed and situated such that all fluid passing between the upstream and downstream side must pass through the recovery filter material **2725.** Recovery filter material **2725** is chosen to have the appropriate properties as disclosed previously for recovery filter **223.** Process line adaptors **2782** allow connection of the line clearing filter **2710** to tubing, processing equipment, filters, filter assemblies, or other assemblies and components commonly used to transfer and perform unit operations on fluids. The embodiments shown in FIGS. 43 through 45 all show barbed adapters **2782** for connecting to tubing; however, other adapter types such as threaded connections, sanitary fittings, quick connects, luer fittings, as well as any other method for attaching filters disclosed herein as well as any other method for attaching filters as is known in the art may be used. [0402] The process line adaptors are chosen to allow each end of the line clearing filter to connect to the desired components as disclosed previously, and therefore, each adaptor does not have to be of the same type. Further, embodiments with more than two adapters are possible and are within the consideration and scope of this disclosure. Process fluid pathway **2780** is in liquid communication with process line adaptors **2782** and in fluid communication with recovery port **2742,** such that the flow of fluids from one process line adaptor **2782** to a second process line adaptor as well as flow from any process line adaptor to the downstream portion of recovery port **2742** is unobstructed. Further, flow of fluids from process line adaptor **2782** to the upstream portion of recovery port **2742** is only possible for fluids that are capable of passage through recovery filter material **2725.** Recovery port adapter **2720** allows for connection to recovery port **2742** in a similar manor to process line adaptor **2782** and may be a barbed fitting, threaded connection, sanitary fitting, quick connect, luer fitting, as well as any other method for attaching filters disclosed herein as well as any other method for attaching filters as is known in the art may be used.

Optional upstream valves **2786** as shown in FIGS. 44 and 45 are used to control the flow into or out of the recovery port **2742** and can be of any suitable type (e.g., needle, ball, etc.) disclosed herein or any suitable type known in the art. Optional valve **2788** as shown in FIG. 45 can be used to control the flow into or out of the recovery port **2742** and has the additional capability of protecting recovery filter **2723** from exposure to fluids contained in process fluid pathway **2780** or limiting exposure.

When installed onto tubing, processing equipment, filters, filter assemblies, or other assemblies and components, the line clearing filter assembly can be used to clear lines of liquids resident in these components by the application of pressurized gas at the upstream side of recovery port **2742.** With optional valves **2786** and **2788** opened, if present, gas travels into the process fluid pathway **2780,** and clears liquid in its path. The direction of the gas flow, once within the process fluid pathway **2780,** can be controlled by way of valves, or can be allowed to flow freely dependent on the application.

When used downstream of a filter assembly, particularly those without the liquid recovery features disclosed herein, the flow will primarily be in the direction away from the filter assembly, clearing lines and components further downstream, as gas cannot flow through the filter's processing membrane. However, when appropriately positioned, the line clearing filter may be used to introduce gas into the outlet or downstream port of the filter assembly, displacing resident liquid therein, thus providing a means of recovering the potentially valuable liquid.

The use of optional valve **2788** is particularly beneficial where processing fluid contained within process fluid pathway **2780** can (due to high pressures or due to the surface tension and surface energies of the processing fluid and the recovery filter material respectively) wet-out the recovery filter material **2725.** Allowing the recovery filter material **2725** to wet-out can block the flow of gases through the filter material **2725** thus reducing or impeding its ability to clear lines.

Accordingly, the various embodiments of the disclosed liquid recovery filter apparatus provide an effective means to recover costly liquids used in filtering operations particularly in the pharmaceutical as well as in other industries. It should be understood that the various axial and radial configurations of the various inlet and outlet passages or ports illustratively depicted in the drawings and disclosed herein are merely exemplary, and that various other arrangements of these ports or passages are within the contemplation and scope of the disclosure that provide a means for the drainage or removal of liquid from the filter housing or shell wall, and particularly for the drainage or removal of filtered liquid from the core of the filter.

The present disclosure is not limited to the embodiments disclosed herein, but encompasses any and all embodiments and equivalents thereof within the scope of the present invention. Embodiments may be in accordance with any one or more of the embodiments as listed below.

Embodiment 1. A liquid recovery filter assembly comprising:
a filter housing having an upper end, a lower end opposite the upper end, and an outer wall extending between the upper end and the lower end, the housing defining an internal volume;
a filter element disposed within the filter shell, the filter element having an upstream designated side and a downstream designated side, wherein an upstream volume is defined by the filter housing and the upstream designated surface of the filter element;
an inlet port extending from the filter housing, the inlet port communicating fluidly with the upstream volume;
an outlet port extending from the filter housing, wherein the outlet port is in fluid communication with the downstream designated side of the filter element;
a recovery port extending from the filter housing, wherein the recovery port is in fluid communication with the downstream side of the filter element;
a recovery filter assembly secured inside the filter housing wherein the recovery filter assembly defines a recovery filter assembly channel in fluid communication with the downstream side of the filter element and the recovery port, and wherein the recovery filter assembly is positioned between the filter element and the recovery port.

Embodiment 2. The liquid recovery filter assembly of claim 1 wherein the recovery filter assembly comprises a recovery filter housing that defines a recovery filter chamber, a recovery filter secured in the filter chamber, and portions defining a recovery filter assembly channel in fluid communication with the filter chamber, recovery filter, recovery port and the downstream side of the filter element.

Embodiment 3. The liquid recovery filter assembly of claim 2 wherein the filter assembly further comprises a hollow lower recovery filter assembly post extending downwardly from the recovery filter housing in fluid communication with the recovery filter assembly channel and the filter element downstream side, wherein the filter element comprises a filter cartridge having a cartridge wall, an upper cartridge end cap and a lower cartridge end cap both secured to the cartridge wall, wherein the combination of the cartridge wall and end caps define a cartridge chamber within which filter material is secured; wherein the upper cartridge end cap defines an upper cartridge sleeve extending upwardly from the end cap and dimensioned to receive the lower recovery filter assembly post secured in the sleeve.

Embodiment 4. The liquid recovery filter assembly of claim 3 wherein the lower recovery filter assembly post further comprises at least one lower O-ring channel formed on its exterior surface, and wherein the filter assembly further comprises at least one lower recovery filter assembly O-ring secured in the at least one lower O-ring channel, and wherein the at least one lower O-ring registers against an inner wall of the upper cartridge sleeve to create a substantially liquid-tight and gas-tight seal.

Embodiment 5. The liquid recovery filter assembly of claim 3 wherein the recovery filter assembly further comprises a hollow upper recovery filter assembly post extending upwardly from the recovery filter housing in fluid communication with the recovery filter assembly chamber and the recovery port and wherein the filter housing upper end defines an upper end sleeve dimensioned to receive the upper recovery filter end post secured in the upper end sleeve.

Embodiment 6. The liquid recovery filter assembly of claim 5 wherein the upper recovery filter assembly post further comprises at least one upper O-ring channel formed on its exterior surface, and wherein the filter assembly further comprises at least one upper recovery filter assembly O-ring secured in the upper O-ring channel, and wherein the at least one upper O-ring registers against an inner wall of the upper end sleeve to create a substantially liquid-tight and gas-tight seal.

Embodiment 7. The liquid recovery filter assembly of claim 3 wherein the lower cartridge end cap defines a hollow lower cartridge post extending downwardly from the lower end cap in fluid communication with the downstream side of the filter element and the outlet port, and wherein the filter housing lower end defines a lower end sleeve extending upwardly from the lower end and dimensioned to receive the lower cartridge post secured in the lower end sleeve.

Embodiment 8. The liquid recovery filter assembly of claim 7 wherein the lower cartridge post further comprises at least one lower cartridge post O-ring channel formed on its exterior surface, and wherein the filter assembly further comprises at least one lower cartridge post O-ring secured in the at least one lower cartridge post O-ring channel, and wherein the at least one lower cartridge post O-ring registers against an inner wall of the lower end sleeve to create a substantially liquid-tight and gas-tight seal.

Embodiment 9. The liquid recovery filter assembly of claim 3 wherein the lower cartridge end cap defines a hollow lower cartridge post extending downwardly from the lower end cap in fluid communication with the downstream side of the filter element and the outlet port, and wherein the lower cartridge post is secured within the outlet port.

Embodiment 10. The liquid recovery filter assembly of claim 9 wherein the lower cartridge post further comprises at least one lower cartridge post O-ring channel formed on its exterior surface, and wherein the filter assembly further comprises at least one lower cartridge post O-ring secured in the at least one lower cartridge post O-ring channel, and wherein the at least one lower cartridge post O-ring registers against an inner wall of the outlet port to create a substantially liquid-tight and gas-tight seal.

Embodiment 11. The liquid recovery filter assembly of claim 1 wherein the recovery port further comprises an adjustable recovery port bleed valve secured to the port, wherein the bleed valve comprises a recovery port bleed valve stem secured in the recovery port and a recovery port bleed valve cap secured to the recovery bleed valve stem and the recovery port.

Embodiment 12. The liquid recovery filter assembly of claim 11 wherein the recovery bleed valve stem defines a recovery bleed valve stem channel open at a distal end relative to the recovery port and closed axially at a proximal end relative to the recovery port, wherein the bleed valve further comprises a recovery valve stem radial bore formed in the valve stem in fluid communication with the valve stem channel and the recovery port.

Embodiment 13. The liquid recovery filter assembly of claim 12 wherein the recovery port defines a recovery port inner channel and a recovery port outer channel in fluid communication with the inner channel, wherein the inner channel has a cross-sectional diameter less than the cross-sectional diameter of the outer channel, wherein the junction of the two channels forms a shoulder or tapered surface, wherein the recovery bleed valve stem further comprises a first recovery valve stem O-ring channel formed between the radial bore and the valve stem proximal end, wherein the filter assembly further comprises a first recovery valve stem O-ring secured in the first recovery valve stem O-ring channel and dimensioned to register against the junction of the recovery port inner and outer channels when the recovery bleed valve is in a closed position.

Embodiment 14. The liquid recovery filter assembly of claim 13 wherein the recovery port valve stem further comprises a second recovery valve stem O-ring channel formed between the distal end of the valve stem and the radial bore, wherein the filter assembly further comprises a second recovery valve stem O-ring secured in the second recovery valve stem O-ring channel and dimensioned to register against the wall of the recovery port outer channel.

Embodiment 15. The liquid recovery filter assembly of claim 14 wherein the recovery port further comprises a pin extending radially outwardly from the recovery port, and wherein the recovery bleed valve cap defines a helical slot dimensioned to receive the pin, wherein ends of the slot define the range of travel of the recovery port valve stem.

Embodiment 16. The liquid recovery filter assembly of claim 15 wherein the recovery bleed valve cap further comprises a recovery cap annular radially inwardly projecting ridge at a distal end relative to the recovery port, and wherein the recovery port valve stem defines a recovery cap receiving channel on its exterior surface within which the ridge is positioned, wherein the cross-sectional diameter of an opening defined by the ridge is greater than the cross-sectional diameter of the recovery cap receiving channel and less than the cross-sectional diameter of the recovery port valve stem to permit the free rotation of the ridge within the channel.

Embodiment 17. The liquid recovery filter assembly of claim 1 further comprising an upstream vent port extending from the filter housing, wherein the upstream vent port is in fluid communication with the upstream volume.

Embodiment 18. The liquid recovery filter assembly of claim 17 wherein the recovery port further comprises an adjustable vent port bleed valve secured to the port, wherein the bleed valve comprises a vent port bleed valve stem secured in the vent port and a vent port bleed valve cap secured to the vent port bleed valve stem and the vent port.

Embodiment 19. The liquid recovery filter assembly of claim 18 wherein the vent port bleed valve stem defines a vent port bleed valve stem channel open at a distal end relative to the vent port and closed axially at a proximal end relative to the vent port, wherein the bleed valve further comprises a vent valve stem radial bore formed in the valve stem in fluid communication with the valve stem channel and the vent port.

Embodiment 20. The liquid recovery filter assembly of claim 19 wherein the vent port defines a vent port inner channel and a vent port outer channel in fluid communication with the inner channel, wherein the inner channel has a cross-sectional diameter less than the cross-sectional diameter of the outer channel, wherein the junction of the two channels forms a shoulder or tapered surface, wherein the vent bleed valve stem further comprises a first vent valve stem O-ring channel formed between the radial bore and the valve stem proximal end, wherein the filter assembly further comprises a first vent valve stem O-ring secured in the first vent valve stem O-ring channel and dimensioned to register against the junction of the vent port inner and outer channels when the vent bleed valve is in a closed position.

Embodiment 21. The liquid recovery filter assembly of claim 20 wherein the vent port valve stem further comprises a second vent valve stem O-ring channel formed between the distal end of the valve stem and the radial bore, wherein the filter assembly further comprises a second vent valve stem O-ring secured in the second vent valve stem O-ring channel and dimensioned to register against the wall of the vent port outer channel.

Embodiment 22. The liquid recovery filter assembly of claim 21 wherein the vent port further comprises a pin extending radially outwardly from the vent port, and wherein the vent bleed valve cap defines a helical slot dimensioned to receive the pin, wherein ends of the slot define the range of travel of the vent port valve stem.

Embodiment 23. The liquid recovery filter assembly of claim 22 wherein the vent bleed valve cap further comprises a vent cap annular radially inwardly projecting ridge at a distal end relative to the vent port, and wherein the vent port valve stem defines a vent cap receiving channel on its exterior surface within which the ridge is positioned, wherein the cross-sectional diameter of an opening defined by the ridge is greater than the cross-sectional diameter of the vent cap receiving channel and less than the cross-sectional diameter of the vent port valve stem to permit the free rotation of the ridge within the channel.

Embodiment 24. The liquid recovery filter assembly of claim 1 further comprising a drain port extending from the filter housing, wherein threading is formed, or disposed on an outer wall of the drain port and wherein the drain port is in fluid communication with the upstream volume.

Embodiment 25. The liquid recovery filter assembly of claim 24 wherein the drain port comprises a drain port bleed valve, wherein the drain port bleed valve comprises a drain port bleed valve stem secured in the drain port and a drain port bleed valve cap secured to an outer wall of the drain port and to the drain port valve stem.

Embodiment 26. The liquid recovery filter assembly of claim 25 wherein the drain port bleed valve stem defines a drain port bleed valve stem channel open at a distal end relative to the recovery port and closed axially at a proximal end relative to the drain port, wherein the proximal end has a conical shape and wherein the bleed valve further comprises a drain port valve stem radial bore formed in the valve stem in fluid communication with the valve stem channel and the drain port.

Embodiment 27. The liquid recovery filter assembly of claim 26 wherein the drain port defines a drain port inner channel and a drain port outer channel in fluid communication with the inner channel, wherein the inner channel has a cross-sectional diameter less than the cross-sectional diameter of the outer channel, wherein the junction of the two channels forms a shoulder or tapered surface valve seat, wherein the proximal end of the drain port valve stem registers against the valve seat when the drain port bleed valve is in a closed position.

Embodiment 28. The liquid recovery filter assembly of claim 27 wherein the drain port outer channel is tapered in cross-section wherein the taper increases in cross-sectional diameter toward the distal end of the drain port.

Embodiment 29. The liquid recovery filter assembly of claim 27 wherein the drain port valve stem further comprises a drain port valve stem O-ring channel formed between the distal end of the valve stem and the radial bore, wherein the filter assembly further comprises a drain port valve stem O-ring secured in the drain port valve stem O-ring channel and dimensioned to register against the wall of the drain port outer channel.

Embodiment 30. The liquid recovery filter assembly of claim 28 wherein the drain port valve cap defines a drain valve cap channel dimensioned to fit about an outer wall of the drain port, wherein an inner wall of the drain valve cap is formed with threading to engage with the corresponding threading on the outer wall of the drain port.

Embodiment 31. The liquid recovery filter assembly of claim 29 wherein the drain port valve cap further comprises an annular radially inwardly projecting drain valve cap ridge at a distal end relative to the drain port, and wherein the drain port valve stem defines a drain port cap receiving channel on its exterior surface within which the ridge is positioned, wherein the cross-sectional diameter of an opening defined by the ridge is greater than the cross-sectional diameter of the drain port cap receiving channel and less than the cross-sectional diameter of the drain port valve stem to permit the free rotation of the ridge within the channel.

Embodiment 32. A liquid recovery filter assembly comprising:
a filter assembly housing having a shell wall with an upper end cap and a lower end cap, wherein the upper end cap and the lower end cap are secured to the shell wall,
and wherein the combination of the shell wall and the end caps define an internal volume;
at least one processing filter defining a filter core secured in the housing and occupying a portion of the internal volume, wherein the filter core is in fluid communication with the recovery filter and the recovery port, and wherein an upstream volume is defined by the filter assembly housing and an upstream designated surface of the processing filter;
an aspiration tube secured to, or formed with the filter housing, wherein the aspiration tube extends at least partially into the at least one processing filter core at one end and extends out of the filter housing at a second end;
a recovery filter secured in-line with the aspiration tube;
an inlet port extending from the housing in fluid communication with the upstream volume; and,
an outlet port extending from the housing in fluid communication with the processing filter core.

Embodiment 33. The liquid recovery filter assembly of claim 32 further comprising an upstream vent port extending from the filter housing, wherein the vent port is in fluid communication with the upstream volume.

Embodiment 34. The liquid recovery filter assembly of claim 33 further comprising an upstream vent port valve secured in-line with the vent port.

Embodiment 35. The liquid recovery filter assembly of claim 34 further comprising an aspiration tube valve secured in-line with the aspiration tube on a side of the recovery filter distal from the filter assembly housing.

Embodiment 36. The liquid recovery filter assembly of claim 32 wherein the assembly comprises a plurality of processing filters secured in the housing, wherein each processing filter defines a filter core, and wherein the assembly further comprises a plurality of aspiration tubes, wherein each processing filter of the plurality of processing filters has a dedicated aspiration tube extending at least partially into the core of each processing filter at one end and extending outwardly from the filter housing at a second end.

Embodiment 37. The liquid recovery filter assembly of claim 36 further comprising a plurality of recovery filters each secured in-line with one aspiration tube, whereby each aspiration tube has a single recovery filter attached thereto.

Embodiment 38. The liquid recovery filter of claim 37 wherein each aspiration tube has a dedicated aspiration tube valve secured thereto on a side of the attached recovery filter distal from the filter assembly housing.

Embodiment 39. The liquid recovery filter assembly of claim 36, wherein the plurality of aspiration tubes are joined at distal ends with an aspiration tube manifold, wherein the aspiration tubes are in fluid communication with the manifold.

Embodiment 40. The liquid recovery filter assembly of claim 39 further comprising a plurality of recovery filters, wherein each recovery filter is secured in-line with one aspiration tube, wherein each aspiration tube has a single recovery filter secured thereto.

Embodiment 41. The liquid recovery filter assembly of claim 39 further comprising a manifold extension tube in fluid communication with the manifold and the plurality of aspiration tubes and further comprising at least one recovery filter secured to the manifold extension.

Embodiment 42. The liquid recovery filter assembly of claim 41 further comprising a manifold extension tube valve secured to the extension tube on a side of the recovery filter distal from the filter assembly housing.

Embodiment 43. A liquid recovery filter assembly comprising:
a filter assembly housing having a shell wall with an upper end cap and a lower end cap, wherein the upper end cap and the lower end cap are secured to the shell wall,
and wherein the combination of the shell wall and the end caps define an internal volume;
a recovery port extending from the filter assembly housing;
a recovery filter secured in-line with the recovery port;
a plurality of filter elements each defining a filter core secured in the housing and each occupying a portion of the internal volume, wherein the filter cores are in fluid communication with the recovery filter and the recovery port, and wherein an upstream volume is defined by the filter assembly housing and collectively upstream designated surfaces of the processing filters;
an inlet port extending from the housing in fluid communication with the upstream volume; and,
an outlet port extending from the housing in fluid communication with the filter element cores.

Embodiment 44. The liquid recovery filter assembly of claim 43 wherein the plurality of filter elements are filter cartridges, each having an upper mounting post extending upwardly from the cartridge and a lower mounting post extending downwardly from the cartridge.

Embodiment 45. The liquid recovery filter assembly of claim 44 further comprising an outlet manifold secured in the filter assembly housing, wherein the outlet manifold is in fluid communication with the plurality of processing filter cores and with the outlet port.

Embodiment 46. The liquid recovery filter assembly of claim 45 wherein the outlet manifold further comprises a plurality of lower cartridge receiving walls, wherein each receiving wall is dimensioned to receive the filter cartridge lower post of one of the plurality of filter cartridges secured to the receiving wall.

Embodiment 47. The liquid recovery filter assembly of claim 46 further comprising at least one lower O-ring secured between each of the combinations of filter cartridge lower posts and lower cartridge receiving walls.

Embodiment 48. The liquid recovery filter assembly of claim 47 further comprising a vent manifold secured in the filter assembly housing, wherein the vent manifold is in fluid communication with the plurality of filter cartridge cores and with the recovery port.

Embodiment 49. The liquid recovery filter assembly of claim 48 wherein the vent manifold further comprises a plurality of upper cartridge receiving walls, wherein each upper receiving walls is dimensioned to receive the filter cartridge upper post of one of the plurality of filter cartridges secured to the upper receiving wall.

Embodiment 50. The liquid recovery filter assembly of claim 49 further comprising at least one upper O-ring secured between each of the combinations of filter cartridge upper posts and upper cartridge receiving walls.

Embodiment 51. The liquid recovery filter assembly of claim 50 further comprising valves secured to the inlet and outlet ports.

Embodiment 52. The liquid recovery filter assembly of claim 51 further comprising a drain port extending from the filter housing, wherein the drain port is in fluid communication with the upstream volume.

Embodiment 53. The liquid recovery filter assembly of claim 52 further comprising clamps to secure the upper end cap and the lower end cap to the shell wall.

Embodiment 54. The liquid recovery filter assembly of claim 53 wherein the plurality of filter cartridges each comprise a cage wall, an upper cartridge end cap secured to the cage wall and a lower cartridge end cap secured to the cage wall that in combination define a cartridge chamber, and filter material secured in the filter cartridge chamber, wherein the filter material is selected from the group consisting of filter membranes, filter media, hollow fibers, tubular membranes and combinations thereof.

## Claims

1. A liquid recovery filter assembly (1010, 1110, 1210, 1310, 1410, 1510) comprising:
a filter assembly housing (1011) having a shell wall (1012) with an upper end cap (1014) and a lower end cap (1016), wherein the upper end cap and the lower end cap are secured to the shell wall, and wherein the combination of the shell wall and the end caps define an internal volume;
at least one processing filter (1030) defining a filter core (1032) secured in the housing and occupying a portion of the internal volume, wherein an upstream volume is defined by the filter assembly housing and an upstream designated surface of the at least one processing filter and wherein the filter core defines a downstream side of the at least one processing filter;
an inlet port (1018) extending from the housing in fluid communication with the upstream volume (1034);
an outlet port (1020) extending from the housing in fluid communication with the filter core (1032);
**characterized by**,
an aspiration tube (1060) secured to, or formed with, the filter housing, wherein the aspiration tube extends at least partially into the filter core (1032) at one end and extends out of the filter housing at a second end, wherein the aspiration tube has at least one opening positioned within the filter core to permit fluid communication between the aspiration tube and the filter core so as to permit the introduction of a sterile gas from the aspiration tube into the downstream side of the at least one processing filter to purge and recover filtered fluids retained in the downstream side of the at least one processing filter after a filtration procedure; and
a recovery filter (1023) secured in-line with the aspiration tube (1060), wherein the recovery filter is in fluid communication with the filter core (1032).

2. The liquid recovery filter assembly (1010, 1110, 1210, 1310, 1410, 1510) of claim 1 further comprising recovery port valve (1022v, 1122v, 1222v, 1322v, 1464v, 1564v) secured in-line with the aspiration tube (1060) on a side of the recovery filter (1023) distal from the filter assembly housing.

3. The liquid recovery filter assembly (1110, 1310, 1410, 1510) of claim 1 wherein the assembly comprises a plurality of processing filters (1130, 1330, 1430, 1530) secured in the housing, wherein each processing filter defines a filter core (1132, 1332, 1432 1532), and wherein the assembly further comprises a plurality of aspiration tubes (1160, 1360, 1460, 1560), wherein each processing filter of the plurality of processing filters has a dedicated aspiration tube extending at least partially into the core of each processing filter at one end and extending outwardly from the filter housing at a second end.

4. The liquid recovery filter assembly (1110, 1310, 1510) of claim 3 further comprising a plurality of recovery filters (1123, 1323, 1523) each secured in-line with one aspiration tube (1160, 1360, 1560), whereby each aspiration tube has a single recovery filter attached thereto.

5. The liquid recovery filter assembly (1110, 1310) of claim 4 wherein each aspiration tube (1160, 1360) has a dedicated recovery port valve (1122v, 1322v) secured thereto on a side of the attached recovery filter distal from the filter assembly housing.

6. The liquid recovery filter assembly (1410, 1510) of claim 3 wherein the plurality of aspiration tubes (1460, 1560) are joined at distal ends with an aspiration tube manifold (1462, 1562), wherein the aspiration tubes are in fluid communication with the manifold.

7. The liquid recovery filter assembly (1510) of claim 6 further comprising a plurality of recovery filters (1523), wherein each recovery filter is secured in-line with one aspiration tube (1560), wherein each aspiration tube has a single recovery filter secured thereto.

8. The liquid recovery filter assembly (1410, 1510) of claim 6 further comprising a manifold extension tube (1464, 1564) in fluid communication with the manifold (1462, 1562) and the plurality of aspiration tubes (1460, 1560) and further comprising at least one recovery filter (1564) secured to the manifold extension or each of a plurality of recovery filters (1464) secured to one of the plurality of aspiration tubes (1460).

9. The liquid recovery filter assembly (1410, 1510) of claim 8 further comprising a manifold extension tube valve (1464v, 1564v) secured to the manifold extension tube on a side of the recovery filter distal from the filter assembly housing.

10. The liquid recovery filter assembly (1010, 1110, 1210, 1310) of claim 1 further comprising a recovery port (1022, 1122, 1222, 1322) secured in-line with the recovery filter and the aspiration tube (1060, 1160, 1260, 1360), separate from the outlet port (1020,1120,1220, 1320), wherein the recovery port is in fluid communication with the recovery filter, the aspiration tube and the filter core.

11. The liquid recovery filter assembly (1010) of claim 1 wherein the aspiration tube (1060) extends into a lower end of the filter core (1032).

12. The liquid recovery filter assembly (1210, 1310, 1410, 1510) of claim 1 wherein the aspiration tube (1260, 1360, 1460, 1560) extends upwardly toward, and in close proximity to, a top end of the filter core (1232, 1332, 1432, 1532).

13. The liquid recovery filter assembly (1110) of claim 3 wherein each of the plurality of aspiration tubes (1160) extends into a lower end of the filter core (1132) to which it is dedicated.

14. The liquid recovery filter assembly (1110) of claim 13 wherein each of the plurality of aspiration tubes has a dedicated recovery filter (1123) secured thereto, wherein each of the plurality of aspiration tubes is in fluid communication with the dedicated recovery filter.

15. The liquid recovery filter assembly (1010, 1110, 1210, 1310, 1410, 1510) of claim 3 further comprising an upstream vent port (1024, 1124, 1224, 1324, 1424, 1524) extending from the filter housing, wherein the vent port is in fluid communication with the upstream volume (1034, 1134, 1234, 1334, 1434, 1534).

16. A method of purging process liquids from a recovery filter assembly comprising the steps of:
providing a filter housing or shell having a shell wall with an upper end cap and a lower end cap, wherein the upper end cap and the lower end cap are secured to the shell wall, and wherein the combination of the shell wall and the end caps define an internal volume;
providing at least one process filter secured in the shell and occupying a portion of the internal volume, wherein the at least one process filter defines a filter core, and wherein the shell and an upstream designated surface of the process filter defines an upstream volume;
providing an inlet port extending from the housing in fluid communication with the upstream volume;
providing an outlet port extending from the housing in fluid communication with the filter core;
providing a recovery port extending from the housing, wherein the recovery port is in fluid communication with the filter core;
providing a recovery filter in-line with the recovery port, wherein the recovery filter is in fluid communication with the filter core;
**characterized by**,
infusing a gas into the recovery port and through the recovery filter into the filter core; and
purging processed fluids retained in the filter core after a fluid processing filter in fluid communication with the recovery filer and the recovery port.

17. The method of claim 16 comprising the further step of providing the at least one processing filter with a defined bubble point.

18. The method of claim 17 comprising the further step of infusing the gas into the recovery port at a pressure that does not exceed the bubble point of the at least one processing filter.

19. The method of claim 17 wherein the at least one processing filter comprises a membrane valve having a hydrophobic layer positioned upstream of a hydrophilic layer.

20. The method of claim 16 wherein the at least one processing filter comprises a membrane valve comprising:
a processing filter having a portal defined by a gap, bore, slit, or other portal configuration;
a hydrophobic filter material positioned over one side of the processing filter; and,
a hydrophilic filter material positioned over a second side of the processing filter, wherein the hydrophobic filter material and the hydrophilic filter material are bonded or secured to the processing filter.

21. The method of claim 16 wherein the at least one processing filter comprises a pleated membrane valve filter comprising:
a pleat pack having hydrophilic portions with at least one hydrophobic portion positioned between the hydrophilic portions and joined together with seams, wherein the material used to construct the valve filter is selected from the group consisting of hydrophobic filter material, hydrophilic filter material, a combination hydrophobic/hydrophilic filter material, a hydrophobic filter material with a modified surface to have a hydrophilic property, a hydrophilic filter material with a modified surface to have a hydrophobic property and combinations thereof.

22. The method of claim 16 wherein the outlet port is disposed through the lower end of the filter shell and the recovery port is disposed through the upper end of the filter shell.

23. The method of claim 16 wherein the outlet port is disposed through the upper end of the filter shell and the recovery port is disposed through the upper end of the filter shell.

24. The method of claim 16 wherein the inlet port is disposed axially through the upper end of the filter shell and the outlet port is disposed through the lower end of the filter shell and extends coaxially with the at least one process filter.

25. The method of claim 16 wherein the inlet port is disposed radially through the upper end of the filter shell and the outlet port is disposed radially through the lower end of the filter shell.

26. The method of claim 16 wherein the inlet port is disposed radially through the upper end of the filter shell and the outlet port is disposed radially through the upper end of the filter shell opposite the inlet port.

27. The method of claim 16 wherein the inlet port is disposed radially through the lower end of the filter shell and the outlet port is disposed radially through the upper end of the filter shell, wherein the outlet port is positioned generally diametrically opposite the inlet port.

28. The method of claim 16 wherein the outlet port is disposed through the upper end of the filter shell.

29. The method of claim 16 comprising the further step of providing an upstream vent port in fluid communication with the upstream volume.

30. The method of claim 29 comprising the further step of providing a second gas filter inline with the upstream vent port.

31. A liquid recovery filter assembly (2110, 2210) comprising:
a shell (2111) having a shell wall, and upper end (2114) and a lower end, wherein the shell wall, upper end and lower end define an internal volume (2128);
a filter element (2130) secured in the shell, wherein the filter element defines a filter core (2132), and wherein an upstream designated surface of the filter element and the shell wall define an upstream volume;
a recovery port (2122) extending from the upper end, wherein the recovery port is in fluid communication with the filter core;
**characterized by**,
a recovery filter (2123) secured in-line with the recovery port;
a recovery filter protection valve body (2150) extending upwardly from the shell upper end, positioned about a portion of the recovery port between the shell upper end and the recovery filter, wherein the valve body defines a valve body chamber, and wherein the valve body defines a bore (2151) or a slot;
a collapsible recovery filter protection valve tube (2152) secured in the valve body, wherein the valve tube defines the flow path through the valve body between the filter core and the recovery port; and,
a valve tube compression element (2154, 2254)) selected from the group consisting of a bolt and a level control, wherein the bolt is dimensioned to slide through, or be torqued into and out of the bore, and wherein the rotatable lever control is secured to the valve body via an axle, wherein the lever control pivots about the axle to compress or to release compression on the valve tube.

32. A liquid recovery filter assembly (2510) comprising:
a shell (2511) having a shell wall (2512), and upper end (2514) and a lower end (2516), wherein the shell wall, upper end and lower end define an internal volume (2528);
a filter element (2530) secured in the shell, wherein the filter element defines a filter core (2532), and wherein an upstream designated surface of the filter element and the shell wall define an upstream volume;
an inlet port (2518) extending from the shell, wherein the inlet port is in fluid communication with the upstream volume;
an outlet port (2520) extending from the shell, wherein the outlet port is in fluid communication with the filter core;
a recovery port (2522) extending from the shell upper end, wherein the outlet port is in fluid communication with the filter core;
**characterized by**,
a recovery filter (2523) secured in-line with the recovery port; and
an upstream vent port (2524) extending from the shell upper end coaxially with the recovery port, wherein the upstream vent port is positioned about the recovery port to partially enclose the recovery port.

33. A line-clearing assembly (2710) comprising:
a process fluid pathway (2780) defined by a tube or a pipe, wherein the process fluid pathway is connectable to a liquid recovery filter assembly;
a recovery port (2742) connected to the process fluid pathway, wherein the recovery port is in fluid communication with the process fluid pathway;
**characterized by**,
a recovery filter (2743) secured in-line with the recovery port, wherein the recovery filter is in fluid communication with the recovery port and the process fluid pathway.

34. A port bleed valve subassembly (2622, 2624) comprising:
a port (2622a, 2624a) defining an outer port channel or outer vent channel (2678, 2653) and an inner port channel or an inner vent channel (2654), wherein the outer and inner port or vent channels are in fluid communication;
a port valve stem (2680, 2655) dimensioned to fit within the recovery port channels (2678 and 2679) or the vent channels (2653 and 2654), wherein vent port valve stem (2680) or vent port valve stem (2655) defines a recovery port valve stem channel (2681) or a vent port valve stem channel (2656) and a radially disposed, recovery port valve stem bore (2682) or a vent port valve stem bore (2657) that intersects recovery port valve stem channel (2681) or valve stem channel (2656) and provides fluid communication between recovery port valve stem channel (2681) and recovery port channels (2678 and 2679) or valve stem channel (2656) and vent port channel (2651); and,
an adjustable recovery port valve cap (2688) or port valve cap (2652) having an inner wall that defines a valve cap channel (2689, 2665), wherein the inner wall is formed with a helically oriented slot (2688a, 2704) dimensioned to receive a pin (2688b, 2705) secured to, and projecting from, recovery port (2622a) or vent port (2624a), wherein rotation of recovery port valve cap (2688) or port valve cap (2652) about recovery port (2622a) or vent port (2624a) causes pin (2688b, 2705) to move along the slot (2688a, 2704) to move port valve stem (2680) or vent port valve stem (2655) into, and out of, recovery port (2622a) or vent port (2624a).

35. A membrane valve (970) for a filter capsule or filter cartridge comprising a hydrophobic layer (972) positioned upstream of a hydrophilic layer (974).

36. A membrane valve (970') for a filter capsule or a filter cartridge comprising:
a processing filter (930') having a portal defined by a gap, bore, slit, or other portal configuration;
**characterized by**,
a hydrophobic filter material (972') positioned over one side of processing filter (930'); and,
a hydrophilic filter material 974' positioned over a second side of processing filter (930'), wherein the hydrophobic filter material and the hydrophilic filter material are bonded or secured to the processing filter (930').

37. A pleated membrane valve filter (970) comprising a pleat pack having hydrophilic portions (972) with at least one hydrophobic portion (972) positioned between the hydrophilic portions and joined together with seams (976), wherein the material used to construct the valve filter is selected from the group consisting of hydrophobic filter material, hydrophilic filter material, a combination hydrophobic/hydrophilic filter material, a hydrophobic filter material with a modified surface to have a hydrophilic property, a hydrophilic filter material with a modified surface to have a hydrophobic property and combinations thereof.

38. A filter cartridge (930) comprising:
a pleated filter (912) secured in a cartridge housing (911);
an upper end cap (931) secured to an end of cartridge housing (911);
a lower end cap (935) secured to a second end of cartridge housing (911);
an outlet (933) extending from lower end cap (935);
**characterized by**,
a filter valve (970) secured in one or more of upper end cap (931), lower end cap (935), and/or outlet port (933), wherein filter valve (970) is formed from a material selected from the group consisting of hydrophobic filter material, hydrophilic filter material, a combination hydrophobic/hydrophilic filter material, a hydrophobic filter material with a modified surface to have a hydrophilic property, a hydrophilic filter material with a modified surface to have a hydrophobic property and combinations thereof, and wherein the valve filter configuration is selected from the group consisting of hydrophobic/hydrophilic dual-layer filter materials, multi-layer filter materials with layers dedicated hydrophobic or hydrophilic, pleated configurations with a pleated hydrophobic or combination hydrophobic/hydrophilic filter material, hydrophobic/hydrophilic filter material portions sandwiched between two hydrophilic portions joined with seams and combinations thereof.
